(19) Europäisches Patentamt
European Patent Office
Office européen des brevets

(11) **EP 4 271 083 A1**

(12) **EUROPEAN PATENT APPLICATION**
published in accordance with Art. 153(4) EPC

(43) Date of publication:
**01.11.2023 Bulletin 2023/44**

(21) Application number: **21918646.7**

(22) Date of filing: **15.01.2021**

(51) International Patent Classification (IPC):
**H04W 72/04** (2023.01)

(52) Cooperative Patent Classification (CPC):
**H04W 72/04**

(86) International application number:
**PCT/CN2021/072327**

(87) International publication number:
**WO 2022/151442 (21.07.2022 Gazette 2022/29)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Huawei Technologies Co., Ltd.
Shenzhen, Guangdong 518129 (CN)**

(72) Inventors:
• **HUANG, Haining
Shenzhen, Guangdong 518129 (CN)**
• **LI, Chao
Shenzhen, Guangdong 518129 (CN)**
• **ZHANG, Tianhong
Shenzhen, Guangdong 518129 (CN)**

(74) Representative: **Gill Jennings & Every LLP
The Broadgate Tower
20 Primrose Street
London EC2A 2ES (GB)**

(54) **RESOURCE CONFLICT PROCESSING METHOD AND APPARATUS**

(57) Embodiments of this application disclose a resource conflict processing method and an apparatus. The method includes: determining that a first resource of at least one piece of to-be-sent first information and a second resource of at least one piece of to-be-received second information overlap in time domain; and sending the first information on the first resource or receiving the second information on the second resource according to a first rule, where the first rule includes one of the following: determining, based on priorities of HARQs, whether to send the first information on the first resource or receive the second information on the second resource; or determining, based on priorities of HARQs and priorities of resource conflict indication information, whether to send the first information on the first resource or receive the second information on the second resource. According to the method, when to-be-sent resource conflict indication information and/or HARQ conflict/conflicts with to-be-received resource conflict indication information and/or HARQ due to a half-duplex problem, stable and reliable data transmission can be ensured while avoiding a conflict between information sending and receiving.

Determine that a first resource of at least one piece of to-be-sent first information and a second resource of at least one piece of to-be-received second information overlap in time domain ~ S901

Send the first information on the first resource or receive the second information on the second resource according to a first rule ~ S902

FIG. 9

EP 4 271 083 A1

**Description**

**TECHNICAL FIELD**

This application relates to the communication field, and in particular, to a resource conflict processing method and an apparatus.

**BACKGROUND**

In a mode 2 (mode 2) of sidelink (sidelink, SL) communication, a base station configures a resource pool, and user equipment (user equipment, UE) performs resource sensing and resource selection. In addition, LTEs that perform sidelink communication may work cooperatively. A specific coordination process is as follows: UE A serving as an auxiliary terminal first determines a resource set, and the UE A includes the resource set in auxiliary information and sends the auxiliary information to UE B serving as a sending terminal. When selecting a transmission resource, the UE B considers the resource set, and the UE B may perform, on the resource set, sidelink communication with UE C serving as a receiving terminal. The UE A may be the UE C, or may not be the UE C. In the foregoing coordination process, the UE A needs to bear a partial function of performing resource sensing for the UE B.

Due to introduction of the auxiliary information, limited by sending and receiving capabilities of the terminal, problems such as a receiving and receiving conflict, a sending and receiving conflict, and a sending and sending conflict of the terminal may occur, affecting sidelink data transmission performance of the terminal.

**SUMMARY**

Embodiments of this application provide a resource conflict processing method and an apparatus, to resolve a problem that a receiving and/or sending conflict of resource conflict indication information of a terminal affects sidelink data transmission performance of the terminal.

To achieve the foregoing objective, the following technical solutions are used in embodiments of this application.

According to a first aspect of embodiments of this application, a resource conflict processing method is provided. The method may include: determining that a first resource of at least one piece of to-be-sent first information and a second resource of at least one piece of to-be-received second information overlap in time domain; and sending the first information on the first resource or receiving the second information on the second resource according to a first rule, where the first information includes resource conflict indication information and a hybrid automatic repeat request (HARQ), and the second information includes resource conflict indication information and/or a HARQ; or the first information includes resource conflict indication information or a HARQ, and the second information includes resource conflict indication information and a HARQ; and the first rule includes one of the following: determining, based on priorities of the HARQs, whether to send the first information on the first resource or receive the second information on the second resource; or determining, based on priorities of the HARQs and priorities of the resource conflict indication information, whether to send the first information on the first resource or receive the second information on the second resource.

According to the method in the first aspect, when the to-be-sent resource conflict indication information and/or HARQ conflicts with the to-be-received resource conflict indication information and/or HARQ due to a half-duplex problem, whether to receive the information or send the information can be determined based on the priorities of the resource conflict indication information and the HARQs, so that stable and reliable data transmission is ensured, and whether to receive the information or send the information is determined based on the priorities of the HARQs. Therefore, it is ensured that reliability brought by the HARQ is improved.

In a possible design, if a priority value of a highest-priority HARQ in the HARQs is greater than or equal to a first priority threshold, and a priority value of highest-priority resource conflict indication information in the resource conflict indication information is less than or equal to a second priority threshold, the first rule is: determining, based on the priorities of the HARQs and the priorities of the resource conflict indication information, whether to send the first information on the first resource or receive the second information on the second resource; or if the priority value of the highest-priority HARQ in the HARQs is less than or equal to the first priority threshold, and/or the priority value of the highest-priority resource conflict indication information in the resource conflict indication information is greater than or equal to the second priority threshold, the first rule is: determining, based on the priorities of the HARQs, whether to send the first information on the first resource or receive the second information on the second resource.

According to this possible design, the priority value of the HARQ and the priority value of the resource conflict indication information are respectively compared with the corresponding priority thresholds, to determine whether importance of the HARQ is equivalent to importance of the resource conflict indication information. If the importance of the resource conflict indication information is equivalent to the importance of the HARQ, whether to send the first information or receive the second information may be determined based on both the priorities of the HARQs and the priorities of the resource conflict indication information. In this way, ignoring of sending and receiving of the resource conflict indication information associated with important data can be avoided, and sending and receiving of a high-priority HARQ can be ensured.

In another possible design, if a priority value of highest-priority resource conflict indication information in the resource conflict indication information is less than or equal to a priority threshold, the first rule is: determining, based on the priorities of the HARQs and the priorities of the resource conflict indication information, whether to send the first information on the first resource or receive the second information on the second resource; or if the priority value of the highest-priority resource conflict indication information in the resource conflict indication information is greater than or equal to the priority threshold, the first rule is: determining, based on the priorities of the HARQs, whether to send the first information on the first resource or receive the second information on the second resource.

According to this possible design, the priority value of the resource conflict indication information is compared with the corresponding priority threshold, to determine whether importance of the HARQ is equivalent to importance of the resource conflict indication information. If the importance of the HARQ is equivalent to the importance of the resource conflict indication information, whether to send the first information or receive the second information may be determined based on both the priorities of the HARQs and the priorities of the resource conflict indication information. In this way, ignoring of sending and receiving of the resource conflict indication information associated with important data can be avoided, and sending and receiving of a high-priority HARQ can be ensured.

In another possible design, the determining, based on priorities of the HARQs, whether to send the first information on the first resource or receive the second information on the second resource includes: if the highest-priority HARQ in the HARQs is a to-be-sent HARQ, sending the first information on the first resource; or if the highest-priority HARQ in the HARQs is a to-be-received HARQ, receiving the second information on the second resource.

According to this possible design, introduce of the HARQ improves data transmission reliability, and is a basic method for ensuring data transmission reliability. On such a basis, the resource conflict indication information can further improve the data transmission reliability. Generally, the HARQ is more important than the resource conflict indication information to ensure transmission reliability of data associated with the HARQ. Otherwise, because the resource conflict indication information is received or sent, the HARQ cannot be received or sent, and the data transmission reliability corresponding to the HARQ is reduced. Therefore, the determining, based on priorities of the HARQs, whether to send the first information or receive the second information can preferentially ensure sending or receiving of the HARQ. In this way, a decrease in a gain brought by the HARQ due to introduction of the resource conflict indication information is avoided.

In another possible design, the determining, based on priorities of the HARQs, whether to send the first information on the first resource or receive the second information on the second resource includes: if the highest-priority HARQ in the HARQs is a to-be-sent HARQ, preferentially sending the HARQ in the first information on the first resource; or if the highest-priority HARQ in the HARQs is a to-be-received HARQ, preferentially receiving the HARQ in the second information on the second resource.

According to this possible design, introduce of the HARQ improves data transmission reliability, and is a basic method for ensuring data transmission reliability. On such a basis, the resource conflict indication information can further improve the data transmission reliability. Generally, the HARQ is more important than the resource conflict indication information to ensure transmission reliability of data associated with the HARQ. Otherwise, because the resource conflict indication information is received or sent, the HARQ cannot be received or sent, and the data transmission reliability corresponding to the HARQ is reduced. Therefore, preferentially sending or receiving the HARQ can achieve a better gain effect on data transmission stability. In addition, a decrease in a gain brought by the HARQ due to introduction of the resource conflict indication information can be avoided.

In another possible design, the determining, based on priorities of the HARQs and priorities of the resource conflict indication information, whether to send the first information on the first resource or receive the second information on the second resource includes: if highest-priority information in the HARQs and the resource conflict indication information is to-be-sent information, sending the first information on the first resource; or if highest-priority information in the HARQs and the resource conflict indication information is to-be-received information, receiving the second information on the second resource.

According to this possible design, when importance of the HARQ is equivalent of importance of the resource conflict indication information, whether to send the first information or receive the second information is determined based on the priorities of the HARQs and the priorities of the resource conflict indication information. Receiving or sending of the highest-priority information can be preferentially considered, to ensure reliability of stable transmission of most important data.

In another possible design, the determining, based on priorities of the HARQs and priorities of the resource conflict indication information, whether to send the first information on the first resource or receive the second information on the second resource includes: if highest-priority information in the HARQs and the resource conflict indication information is to-be-sent information, preferentially sending high-priority information in the first information on the first resource;

or if highest-priority information in the HARQs and the resource conflict indication information is to-be-received information, preferentially receiving high-priority information in the second information on the second resource.

According to this possible design, receiving or sending of the highest-priority information can be preferentially considered, to ensure reliability of stable transmission of most important data.

In another possible design, the first information sent on the first resource includes the HARQ and the resource conflict indication information, and a quantity of pieces of resource conflict indication information sent on the first resource is less than or equal to an upper limit of a quantity of pieces of sent resource conflict indication information; or the first information sent on the first resource includes the HARQ and the resource conflict indication information, and a total quantity of pieces of resource conflict indication information and HARQs that are sent on the first resource is less than or equal to an upper limit of a total quantity of pieces of resource conflict indication information and HARQs that are sent.

In another possible design, the second information received on the second resource includes the HARQ and the resource conflict indication information, and a quantity of pieces of resource conflict indication information received on the second resource is less than or equal to an upper limit of a quantity of pieces of received resource conflict indication information; or the second information received on the second resource includes the HARQ and the resource conflict indication information, and a total quantity of pieces of resource conflict indication information and HARQs that are received on the second resource is less than or equal to an upper limit of a total quantity of pieces of resource conflict indication information and HARQs that are received.

In another possible design, the priority of the resource conflict indication information corresponds to a priority included in sidelink control information (SCI) associated with the resource conflict indication information. For example, a priority value of the resource conflict indication information is equal to a priority value indicated by the SCI associated with the resource conflict indication information; or is equal to a priority value indicated by the SCI plus a compensation value. In this way, importance of the resource conflict indication information is associated with the SCI, to be specific, is associated with importance of a resource indicated by the resource conflict indication information. The priority value indicated by the SCI indicates importance of data scheduled by using the SCI, and the resource indicated by the RCI may be used for transmitting data at the priority. Therefore, the importance of the RCI may correspond to the priority value indicated by the SCI corresponding to the resource indicated by the RCI.

In another possible design, a larger quantity of data retransmission times corresponding to a resource indicated by the resource conflict indication information or a larger quantity of resources indicated by the resource conflict indication information indicates a higher priority of the resource conflict indication information.

In another possible design, the resource conflict indication information includes first resource conflict indication information and second resource conflict indication information, and a priority of the first resource conflict indication information is higher than a priority of the second resource conflict indication information, where the first resource conflict indication information indicates a persistent resource conflict, and the second resource conflict indication information indicates a non-persistent resource conflict; the first resource conflict indication information indicates a periodic resource conflict, and the second resource conflict indication information indicates an aperiodic resource conflict; or the first resource conflict indication information indicates a resource conflict of a reserved resource, and the second resource conflict indication information indicates a resource conflict of a used resource.

According to a second aspect, a communication apparatus is provided. The communication apparatus may be a terminal; or a chip or a system-on-a-chip in a terminal. The communication apparatus may implement a function in the first aspect or the possible designs of the first aspect. The function may be implemented by hardware, or may be implemented by hardware executing corresponding software. The hardware or the software includes one or more modules corresponding to the function. For example, the communication apparatus may include a processing module and a transceiver module.

The processing module may be configured to determine that a first resource of at least one piece of to-be-sent first information and a second resource of at least one piece of to-be-received second information overlap in time domain. The transceiver module may be configured to send the first information on the first resource or receive the second information on the second resource according to a first rule, where the first information includes resource conflict indication information and a hybrid automatic repeat request (HARQ), and the second information includes resource conflict indication information and/or a HARQ; or the first information includes resource conflict indication information or a HARQ, and the second information includes resource conflict indication information and a HARQ; and the first rule includes one of the following: determining, based on priorities of the HARQs, whether to send the first information on the first resource or receive the second information on the second resource; or determining, based on priorities of the HARQs and priorities of the resource conflict indication information, whether to send the first information on the first resource or receive the second information on the second resource.

In a possible design, if a priority value of a highest-priority HARQ in the HARQs is greater than or equal to a first priority threshold, and a priority value of highest-priority resource conflict indication information in the resource conflict indication information is less than or equal to a second priority threshold, the first rule is: determining, based on the priorities of the HARQs and the priorities of the resource conflict indication information, whether to send the first information on the first resource or receive the second information on the second resource; or if the priority value of the highest-priority HARQ in the HARQs is less than or equal to the first priority threshold, and/or the priority value of the highest-priority resource conflict indication information in the resource conflict indication information is greater than or equal to the second priority threshold, the first rule is: determining, based on the priorities of the HARQs, whether to send the first information on the first resource or receive the second information on the second resource.

In another possible design, if a priority value of highest-priority resource conflict indication information in the resource conflict indication information is less than or equal to a priority threshold, the first rule is: determining, based on the priorities of the HARQs and the priorities of the resource conflict indication information, whether to send the first information on the first resource or receive the second information on the second resource; or if the priority value of the highest-priority resource conflict indication information in the resource conflict indication information is greater than or equal to the priority threshold, the first rule is: determining, based on the priorities of the HARQs, whether to send the first information on the first resource or receive the second information on the second resource.

In another possible design, the transceiver module is specifically configured to: if the highest-priority HARQ in the HARQs is a to-be-sent HARQ, send the first information on the first resource; or if the highest-priority HARQ in the HARQs is a to-be-received HARQ, receive the second information on the second resource.

In another possible design, the transceiver module is specifically configured to: if the highest-priority HARQ in the HARQs is a to-be-sent HARQ, preferentially send the HARQ in the first information on the first resource; or if the highest-priority HARQ in the HARQs is a to-be-received HARQ, preferentially receive the HARQ in the second information on the second resource.

In another possible design, the transceiver module is specifically configured to: if highest-priority information in the HARQs and the resource conflict indication information is to-be-sent information, send the first information on the first resource; or if highest-priority information in the HARQs and the resource conflict indication information is to-be-received information, receive the second information on the second resource.

In another possible design, the transceiver module is specifically configured to: if highest-priority information in the HARQs and the resource conflict indication information is to-be-sent information, preferentially send high-priority information in the first information on the first resource; or if highest-priority information in the HARQs and the resource conflict indication information is to-be-received information, preferentially receive high-priority information in the second information on the second resource.

In another possible design, the first information sent on the first resource includes the HARQ and the resource conflict indication information, and a quantity of pieces of resource conflict indication information sent on the first resource is less than or equal to an upper limit of a quantity of pieces of sent resource conflict indication information; or the first information sent on the first resource includes the HARQ and the resource conflict indication information, and a total quantity of pieces of resource conflict indication information and HARQs that are sent on the first resource is less than or equal to an upper limit of a total quantity of pieces of resource conflict indication information and HARQs that are sent.

In another possible design, the second information received on the second resource includes the HARQ and the resource conflict indication information, and a quantity of pieces of resource conflict indication information received on the second resource is less than or equal to an upper limit of a quantity of pieces of received resource conflict indication information; or the second information received on the second resource includes the HARQ and the resource conflict indication information, and a total quantity of pieces of resource conflict indication information and HARQs that are received on the second resource is less than or equal to an upper limit of a total quantity of pieces of resource conflict indication information and HARQs that are received.

In another possible design, the priority of the resource conflict indication information corresponds to a priority included in sidelink control information (SCI) associated with the resource conflict indication information.

In another possible design, a larger quantity of data retransmission times corresponding to a resource indicated by the resource conflict indication information or a larger quantity of resources indicated by the resource conflict indication information indicates a higher priority of the resource conflict indication information.

In another possible design, the resource conflict indication information includes first resource conflict indication information and second resource conflict indication information, and a priority of the first resource conflict indication information is higher than a priority of the second resource conflict indication information, where the first resource conflict indication information indicates a persistent resource conflict, and the second resource conflict indication information indicates a non-persistent resource conflict; the first resource conflict indication information indicates a periodic resource conflict, and the second resource conflict indication information indicates an aperiodic resource conflict; or the first resource conflict indication information indicates a resource conflict of a reserved resource, and the second resource conflict indication information indicates a resource conflict of a used resource.

According to a third aspect, a communication apparatus is provided. The communication apparatus includes a processor and a memory. The memory is configured to store computer-executable instructions. When the communication apparatus runs, the processor executes the computer-executable instructions stored in the memory, so that the communication apparatus performs the method in any one of the first aspect or the possible designs of the first aspect.

According to a fourth aspect, a computer-readable storage medium is provided. The computer-readable storage medium stores instructions. When the instructions are run on a computer, the computer is enabled to perform the method in any one of the first aspect or the possible designs of the first aspect.

According to a fifth aspect, a computer program product including instructions is provided. When the computer program product runs on a computer, the computer is enabled to perform the method in any one of the first aspect or the possible designs of the first aspect.

According to a sixth aspect, a communication apparatus is provided. The communication apparatus may be a chip system. The chip system may include a processor and a transceiver, to support the communication apparatus in implementing a function in any one of the first aspect or the possible designs of the first aspect. In a possible design, the chip system further includes a memory. The memory is configured to store program instructions and data that are necessary for the communication apparatus. The chip system may include a chip; or may include a chip and another discrete component.

For technical effects achieved in any one of the design manners of the second aspect to the sixth aspect, refer to the technical effects achieved in any one of the first aspect or the possible designs of the first aspect. Details are not described again.

According to a seventh aspect, another resource conflict processing method is provided. The method may include: determining that a first resource of at least one piece of to-be-sent resource conflict indication information and a second resource of at least one piece of to-be-received resource conflict indication information overlap in time domain; and sending the resource conflict indication information on the first resource or receiving the resource conflict indication information on the second resource according to a first rule, where the first rule includes one of the following: determining, based on priorities of the resource conflict indication information, whether to send the resource conflict indication information on the first resource or receive the resource conflict indication information on the second resource; sending the resource conflict indication information on the first resource; determining, based on configuration information, whether to send the resource conflict indication information on the first resource or receive the resource conflict indication information on the second resource, where the configuration information indicates that when the first resource and the second resource overlap in time domain, the resource conflict indication information is sent on the first resource or received on the second resource; and determining, based on a quantity of data retransmission times corresponding to a resource indicated by the to-be-received resource conflict indication information, whether to send the resource conflict indication information on the first resource or receive the resource conflict indication information on the second resource.

According to the method in the seventh aspect, when sending of the to-be-sent resource conflict indication information conflicts with receiving of the to-be-received resource conflict indication information due to a half-duplex problem, whether to receive the resource conflict indication information or send the resource conflict indication information can be determined based on the priorities of the resource conflict indication information, to ensure stable and reliable data transmission.

In a possible design, the determining, based on priorities of the resource conflict indication information, whether to send the resource conflict indication information on the first resource or receive the resource conflict indication information on the second resource includes: if highest-priority resource conflict indication information in the resource conflict indication information is to-be-sent resource conflict indication information, sending the resource conflict indication information on the first resource; or if highest-priority resource conflict indication information in the resource conflict indication information is to-be-received resource conflict indication information, receiving the resource conflict indication information on the second resource.

According to this possible design, whether to send the resource conflict indication information or receive the resource conflict indication information is determined based on the priorities of the resource conflict indication information. Receiving or sending of the highest-priority resource conflict indication information can be preferentially considered, to ensure reliability of stable transmission of most important data.

In another possible design, the determining, based on a quantity of data retransmission times corresponding to a resource indicated by the to-be-received resource conflict indication information, whether to send the resource conflict indication information on the first resource or receive the resource conflict indication information on the second resource includes: if the quantity of data retransmission times corresponding to the resource indicated by the to-be-received resource conflict indication information is greater than or equal to a first threshold, receiving the resource conflict indication information on the second resource; or if the quantity of data retransmission times corresponding to the resource indicated by the to-be-received resource conflict indication information is less than or equal to a first threshold, sending the resource conflict indication information on the first resource.

According to this possible design, a larger quantity of data retransmission times corresponding to the resource indicated by the resource conflict indication information indicates that the plurality of times of data transmission of a terminal fail, and there is a high probability that the terminal does not discover a potential resource conflict due to a limitation of the terminal. Therefore, the terminal needs to determine, by receiving the corresponding resource conflict indication information, whether the large quantity of data retransmission times is caused by a resource conflict. In this case, if sending and receiving of the resource conflict indication information conflict, the terminal needs to preferentially receive the resource conflict indication information, to improve data transmission reliability of the terminal.

In another possible design, the sending the resource conflict indication information on the first resource or receiving the resource conflict indication information on the second resource includes: preferentially sending, on the first resource, high-priority resource conflict indication information in the to-be-sent resource conflict indication information; or preferentially receiving, on the second resource, high-priority resource conflict indication information in the to-be-received resource conflict indication information.

According to this possible design, receiving or sending of highest-priority resource conflict indication information can be preferentially considered, to ensure reliability of stable transmission of most important data. In other words, when sending of the to-be-sent resource conflict indication information conflicts with receiving of the to-be-received resource conflict indication information due to a half-duplex problem, transmission reliability of high-priority data is preferentially ensured.

In another possible design, a quantity of pieces of resource conflict indication information sent on the first resource is less than or equal to an upper limit of a quantity of pieces of sent resource conflict indication information.

According to this possible design, the upper limit of the quantity of pieces of sent resource conflict indication information is a sending capability of the terminal. The terminal capability facilitates implementation of the terminal, and simplifies implementation complexity of the terminal.

In another possible design, a quantity of pieces of resource conflict indication information received on the second resource is less than or equal to an upper limit of a quantity of pieces of received resource conflict indication information.

According to this possible design, the upper limit of the quantity of pieces of received resource conflict indication information is a receiving capability of the terminal. The terminal capability facilitates implementation of the terminal, and simplifies implementation complexity of the terminal.

In another possible design, the priority of the resource conflict indication information corresponds to a priority included in sidelink control information (SCI) corresponding to a resource indicated by the resource conflict indication information. For example, a priority value of the resource conflict indication information is equal to a priority value indicated by the SCI associated with the resource conflict indication information; or is equal to a priority value indicated by the SCI plus a compensation value. In this way, importance of the resource conflict indication information is associated with the SCI, to be specific, is associated with importance of the resource indicated by the resource conflict indication information. The priority value indicated by the SCI indicates importance of data scheduled by using the SCI, and the resource indicated by the RCI may be used for transmitting data at the priority. Therefore, the importance of the RCI may correspond to the priority value indicated by the SCI corresponding to the resource indicated by the RCI.

In another possible design, a larger quantity of data retransmission times corresponding to a resource indicated by the resource conflict indication information or a larger quantity of resources indicated by the resource conflict indication information indicates a higher priority of the resource conflict indication information.

In another possible design, the resource conflict indication information includes first resource conflict indication information and second resource conflict indication information, and a priority of the first resource conflict indication information is higher than a priority of the second resource conflict indication information, where the first resource conflict indication information indicates a persistent resource conflict, and the second resource conflict indication information indicates a non-persistent resource conflict; the first resource conflict indication information indicates a periodic resource conflict, and the second resource conflict indication information indicates an aperiodic resource conflict; or the first resource conflict indication information indicates a resource conflict of a reserved resource, and the second resource conflict indication information indicates a resource conflict of a used resource.

According to an eighth aspect, a communication apparatus is provided. The communication apparatus may be a terminal; or a chip or a system-on-a-chip in a terminal. The communication apparatus may implement a function in the seventh aspect or the possible designs of the seventh aspect. The function may be implemented by hardware, or may be implemented by hardware executing corresponding software. The hardware or the software includes one or more modules corresponding to the function. For example, the communication apparatus may include a processing module and a transceiver module.

The processing module may be configured to determine that a first resource of at least one piece of to-be-sent resource conflict indication information and a second resource of at least one piece of to-be-received resource conflict indication information overlap in time domain. The transceiver module may be configured to send the resource conflict indication information on the first resource or receive the resource conflict indication information on the second resource according to a first rule, where the first rule includes one of the following: determining, based on priorities of the resource conflict indication information, whether to send the resource conflict indication information on the first resource or receive the resource conflict indication information on the second resource; sending the resource conflict indication information on the first resource; determining, based on configuration information, whether to send the resource conflict indication information on the first resource or receive the resource conflict indication information on the second resource, where the configuration information indicates that when the first resource and the second resource overlap in time domain, the resource conflict indication information is sent on the first resource or received on the resource; and determining, based on a quantity of data retransmission times corresponding to a resource indicated by the to-be-received resource conflict indication information, whether to send the resource conflict indication information on the first resource or receive the resource conflict indication information on the second resource.

In a possible design, the transceiver module is specifically configured to: if highest-priority resource conflict indication information in the resource conflict indication information is to-be-sent resource conflict indication information, send the resource conflict indication information on the first resource; or if highest-priority resource conflict indication information in the resource conflict indication information is to-be-received resource conflict indication information, receive the resource conflict indication information on the second resource.

In another possible design, the transceiver module is specifically configured to: if the quantity of data retransmission times corresponding to the resource indicated by the to-be-received resource conflict indication information is greater than or equal to a first threshold, receive the resource conflict indication information on the second resource; or if the quantity of data retransmission times corresponding to the resource indicated by the to-be-received resource conflict indication information is less than or equal to a first threshold, send the resource conflict indication information on the first resource.

In another possible design, the transceiver module is specifically configured to: preferentially send, on the first resource, high-priority resource conflict indication information in the to-be-sent resource conflict indication information; or preferentially receive, on the second resource, high-priority resource conflict indication information in the to-be-received resource conflict indication information.

In another possible design, a quantity of pieces of resource conflict indication information sent on the first resource is less than or equal to an upper limit of a quantity of pieces of sent resource conflict indication information.

In another possible design, a quantity of pieces of resource conflict indication information received on the second resource is less than or equal to an upper limit of a quantity of pieces of received resource conflict indication information.

In another possible design, the priority of the resource conflict indication information corresponds to a priority included in sidelink control information (SCI) corresponding to a resource indicated by the resource conflict indication information.

In another possible design, a larger quantity of data retransmission times corresponding to a resource indicated by the resource conflict indication information or a larger quantity of resources indicated by the resource conflict indication information indicates a higher priority of the resource conflict indication information.

In another possible design, the resource conflict indication information includes first resource conflict indication information and second resource conflict indication information, and a priority of the first resource conflict indication information is higher than a priority of the second resource conflict indication information, where the first resource conflict indication information indicates a persistent resource conflict, and the second resource conflict indication information indicates a non-persistent resource conflict; the first resource conflict indication information indicates a periodic resource conflict, and the second resource conflict indication information indicates an aperiodic resource conflict; or the first resource conflict indication information indicates a resource conflict of a reserved resource, and the second resource conflict indication information indicates a resource conflict of a used resource.

According to a ninth aspect, a communication apparatus is provided. The communication apparatus includes a processor and a memory. The memory is configured to store computer-executable instructions. When the communication apparatus runs, the processor executes the computer-executable instructions stored in the memory, so that the communication apparatus performs the method in any one of the seventh aspect or the possible designs of the seventh aspect.

According to a tenth aspect, a computer-readable storage medium is provided. The computer-readable storage medium stores instructions. When the instructions are run on a computer, the computer is enabled to perform the method in any one of the seventh aspect or the possible designs of the seventh aspect.

According to an eleventh aspect, a computer program product including instructions is provided. When the computer program product runs on a computer, the computer is enabled to perform the method in any one of the seventh aspect or the possible designs of the seventh aspect.

According to a twelfth aspect, a communication apparatus is provided. The communication apparatus may be a chip system. The chip system may include a processor and a transceiver, to support the communication apparatus in implementing a function in any one of the seventh aspect or the possible designs of the seventh aspect. In a possible design, the chip system further includes a memory. The memory is configured to store program instructions and data that are necessary for the communication apparatus. The chip system may include a chip; or may include a chip and another discrete component.

For technical effects achieved in any one of the design manners of the eighth aspect to the twelfth aspect, refer to the technical effects achieved in any one of the seventh aspect or the possible designs of the seventh aspect. Details are not described again.

According to a thirteenth aspect, still another resource conflict processing method is provided. The method may include: determining that a first resource of at least one piece of to-be-sent or to-be-received resource conflict indication information and a second resource of at least one piece of to-be-sent uplink information overlap in time domain; and sending or receiving the resource conflict indication information on the first resource or sending the uplink information on the second resource according to a first rule, where the first rule includes: determining, based on a priority of the resource conflict indication information, whether to send or receive the resource conflict indication information on the first resource or to send the uplink information on the second resource.

According to the method in the thirteenth aspect, when sending or receiving of the to-be-sent or to-be-received resource conflict indication information conflicts with sending of the to-be-sent uplink information due to a half-duplex problem, to be specific, the to-be-sent resource conflict indication information and the to-be-sent uplink information overlap in time domain, or the to-be-received resource conflict indication information and the to-be-sent uplink information overlap in time domain, data transmission reliability can be ensured.

In a possible design, the determining, based on a priority of the resource conflict indication information, whether to send the resource conflict indication information on the first resource or send the uplink information on the second resource includes: if a priority value of highest-priority resource conflict indication information in the resource conflict indication information is less than or equal to a priority threshold, sending the resource conflict indication information on the first resource; or if the priority value of the highest-priority resource conflict indication information in the resource conflict indication information is greater than or equal to the priority threshold, sending the uplink information on the second resource.

According to this possible design, whether the resource conflict indication information is important enough is determined by comparing the priority value of the resource conflict indication information with the priority threshold. If the resource conflict indication information is important enough, the resource conflict indication information is preferentially sent, so that transmission of high-priority data can be preferentially ensured in a case of a resource conflict.

In a possible design, the determining, based on a priority of the resource conflict indication information, whether to receive the resource conflict indication information on the first resource or send the uplink information on the second resource includes: if a priority value of highest-priority resource conflict indication information in the resource conflict indication information is less than or equal to a priority threshold, receiving the resource conflict indication information on the first resource; or if the priority value of the highest-priority resource conflict indication information in the resource conflict indication information is greater than or equal to the priority threshold, sending the uplink information on the second resource.

According to this possible design, whether the resource conflict indication information is important enough is determined by comparing the priority value of the resource conflict indication information with the priority threshold. If the resource conflict indication information is important enough, the resource conflict indication information is preferentially received, so that transmission of high-priority data can be preferentially ensured in a case of a resource conflict.

In another possible design, a transmit power of the resource conflict indication information does not exceed a maximum transmit power determined based on a quantity of pieces of sent resource conflict indication information.

In another possible design, the determining, based on a priority of the resource conflict indication information, whether to send or receive the resource conflict indication information on the first resource or to send the uplink information on the second resource includes: if a priority value of highest-priority resource conflict indication information in the resource conflict indication information is less than or equal to a priority threshold, preferentially sending or receiving, on the first resource, high-priority resource conflict indication information in the resource conflict indication information; or if the priority value of the highest-priority resource conflict indication information in the resource conflict indication information is greater than or equal to the priority threshold, sending the uplink information on the second resource.

According to this possible design, receiving or sending of the highest-priority resource conflict indication information can be preferentially considered, to ensure reliability of stable transmission of most important data.

In another possible design, a quantity of pieces of resource conflict indication information sent or received on the first resource is less than or equal to an upper limit of a quantity of pieces of sent or received resource conflict indication information.

In another possible design, the priority of the resource conflict indication information corresponds to a priority included in sidelink control information (SCI) associated with the resource conflict indication information. For example, a priority value of the resource conflict indication information is equal to a priority value of the SCI associated with the resource conflict indication information; or is equal to a priority value of the SCI plus a compensation value. In this way, importance of the resource conflict indication information is associated with the SCI, to be specific, is associated with importance of a resource indicated by the resource conflict indication information. The priority value indicated by the SCI indicates importance of data scheduled by using the SCI, and the resource indicated by the RCI may be used for transmitting data at the priority. Therefore, the importance of the RCI may correspond to the priority value indicated by the SCI corresponding to the resource indicated by the RCI.

In another possible design, a larger quantity of data retransmission times corresponding to a resource indicated by the resource conflict indication information or a larger quantity of resources indicated by the resource conflict indication information indicates a higher priority of the resource conflict indication information.

In another possible design, the resource conflict indication information includes first resource conflict indication information and second resource conflict indication information, and a priority of the first resource conflict indication information is higher than a priority of the second resource conflict indication information, where the first resource conflict indication information indicates a persistent resource conflict, and the second resource conflict indication information indicates a non-persistent resource conflict; the first resource conflict indication information indicates a periodic resource conflict, and the second resource conflict indication information indicates an aperiodic resource conflict; or the first resource conflict indication information indicates a resource conflict of a reserved resource, and the second resource conflict indication information indicates a resource conflict of a used resource.

According to a fourteenth aspect, a communication apparatus is provided. The communication apparatus may be a terminal; or a chip or a system-on-a-chip in a terminal. The communication apparatus may implement a function in the thirteenth aspect or the possible designs of the thirteenth aspect. The function may be implemented by hardware, or may be implemented by hardware executing corresponding software. The hardware or the software includes one or more modules corresponding to the function. For example, the communication apparatus may include a processing module and a transceiver module.

The processing module may be configured to determine that a first resource of at least one piece of to-be-sent or to-be-received resource conflict indication information and a second resource of at least one piece of to-be-sent uplink information overlap in time domain. The transceiver module is configured to send or receive the resource conflict indication information on the first resource or send the uplink information on the second resource according to a first rule, where the first rule includes: determining, based on a priority of the resource conflict indication information, whether to send or receive the resource conflict indication information on the first resource or to send the uplink information on the second resource.

In a possible design, the transceiver module is specifically configured to: if a priority value of highest-priority resource conflict indication information in the resource conflict indication information is less than or equal to a priority threshold, send or receive the resource conflict indication information on the first resource; or if the priority value of the highest-priority resource conflict indication information in the resource conflict indication information is greater than or equal to the priority threshold, send the uplink information on the second resource.

In another possible design, the transceiver module is specifically configured to: if a priority value of highest-priority resource conflict indication information in the resource conflict indication information is less than or equal to a priority threshold, preferentially send or receive, on the first resource, high-priority resource conflict indication information in the resource conflict indication information; or if the priority value of the highest-priority resource conflict indication information in the resource conflict indication information is greater than or equal to the priority threshold, send the uplink information on the second resource.

In another possible design, a quantity of pieces of resource conflict indication information sent or received on the first resource is less than or equal to an upper limit of a quantity of pieces of sent or received resource conflict indication information.

In another possible design, the priority of the resource conflict indication information corresponds to a priority included in sidelink control information (SCI) associated with the resource conflict indication information.

In another possible design, a larger quantity of data retransmission times corresponding to a resource indicated by the resource conflict indication information or a larger quantity of resources indicated by the resource conflict indication information indicates a higher priority of the resource conflict indication information.

In another possible design, the resource conflict indication information includes first resource conflict indication information and second resource conflict indication information, and a priority of the first resource conflict indication information is higher than a priority of the second resource conflict indication information, where the first resource conflict indication information indicates a persistent resource conflict, and the second resource conflict indication information indicates a non-persistent resource conflict; the first resource conflict indication information indicates a periodic resource conflict, and the second resource conflict indication information indicates an aperiodic resource conflict; or the first resource conflict indication information indicates a resource conflict of a reserved resource, and the second resource conflict indication information indicates a resource conflict of a used resource.

According to a fifteenth aspect, a communication apparatus is provided. The communication apparatus includes a processor and a memory. The memory is configured to store computer-executable instructions. When the communication apparatus runs, the processor executes the computer-executable instructions stored in the memory, so that the communication apparatus performs the method in any one of the thirteenth aspect or the possible designs of the thirteenth aspect.

According to a sixteenth aspect, a computer-readable storage medium is provided. The computer-readable storage medium stores instructions. When the instructions are run on a computer, the computer is enabled to perform the method in any one of the thirteenth aspect or the possible designs of the thirteenth aspect.

According to a seventeenth aspect, a computer program product including instructions is provided. When the computer program product runs on a computer, the computer is enabled to perform the method in any one of the thirteenth aspect or the possible designs of the thirteenth aspect.

According to an eighteenth aspect, a communication apparatus is provided. The communication apparatus may be a chip system. The chip system may include a processor and a transceiver, to support the communication apparatus in implementing a function in any one of the thirteenth aspect or the possible designs of the thirteenth aspect. In a possible design, the chip system further includes a memory. The memory is configured to store program instructions and data that are necessary for the communication apparatus. The chip system may include a chip; or may include a chip and another discrete component.

For technical effects achieved in any one of the design manners of the fourteenth aspect to the eighteenth aspect, refer to the technical effects achieved in any one of the thirteenth aspect or the possible designs of the thirteenth aspect. Details are not described again.

According to a nineteenth aspect, still another resource conflict processing method is provided. The method may include:

determining that a first resource of at least one piece of to-be-sent or to-be-received first information and a second resource of at least one piece of to-be-sent second information overlap in time domain; and sending or receiving the first information on the first resource or sending the second information on the second resource according to a first rule, where the first information includes resource conflict indication information and a hybrid automatic repeat request (HARQ), and the second information includes uplink information; and the first rule includes: determining, based on a priority of the resource conflict indication information and a priority of the HARQ, whether to send or receive the first information on the first resource or to send the second information on the second resource.

According to the method in the nineteenth aspect, when sending or receiving of the to-be-sent or to-be-received HARQ and resource conflict indication information conflicts with sending of the to-be-sent uplink information due to a transmission capability limitation of a terminal, to be specific, the to-be-sent HARQ and resource conflict indication information and the to-be-sent uplink information overlap in time domain, or the to-be-received HARQ and resource conflict indication information and the to-be-sent uplink information overlap in time domain, data transmission reliability can be ensured.

In a possible design, the determining, based on a priority of the resource conflict indication information and a priority of the HARQ, whether to send or receive the first information on the first resource or to send the second information on the second resource includes: if a priority value of highest-priority information in the resource conflict indication information and the HARQ is less than or equal to a priority threshold, sending or receiving the first information on the first resource; or if the priority value of the highest-priority information in the resource conflict indication information and the HARQ is greater than or equal to the priority threshold, sending the second information on the second resource.

According to this possible design, whether a sidelink is important enough is determined by comparing the priority value of the resource conflict indication information and the priority value of the HARQ with the priority threshold, and if the sidelink is important enough, the resource conflict indication information and the HARQ are preferentially sent or received. Transmission of high-priority data can be preferentially ensured in a case of a resource conflict.

In another possible design, the determining, based on a priority of the resource conflict indication information and a priority of the HARQ, whether to send the first information on the first resource or to send the second information on the second resource includes: if a priority value of highest-priority resource conflict indication information in resource conflict indication information is less than or equal to a first priority threshold, and a priority value of a highest-priority HARQ in HARQs is less than a second priority threshold, sending the first information on the first resource; or if the priority value of the highest-priority resource conflict indication information in the resource conflict indication information is greater than or equal to the first priority threshold, and/or the priority value of the highest-priority HARQ in the HARQs is greater than or equal to the second priority threshold, sending the second information on the second resource.

According to this possible design, whether a sidelink is important enough is determined by comparing the priority value of the resource conflict indication information and the priority value of the HARQ with the priority threshold, and if the sidelink is important enough, the resource conflict indication information and the HARQ are preferentially sent.

In another possible design, the determining, based on a priority of the resource conflict indication information and a priority of the HARQ, whether to receive the first information on the first resource or to send the second information on the second resource includes: if a priority value of highest-priority resource conflict indication information in resource conflict indication information is less than or equal to a first priority threshold, and a priority value of a highest-priority HARQ in HARQs is less than a second priority threshold, receiving the first information on the first resource; or if the priority value of the highest-priority resource conflict indication information in the resource conflict indication information is greater than or equal to the first priority threshold, and/or the priority value of the highest-priority HARQ in the HARQs is greater than or equal to the second priority threshold, sending the second information on the second resource.

According to this possible design, whether a sidelink is important enough is determined by comparing the priority value of the resource conflict indication information and the priority value of the HARQ with the priority threshold, and if the sidelink is important enough, the resource conflict indication information and the HARQ are preferentially received.

In another possible design, a transmit power of the RCI does not exceed a maximum transmit power determined based on a quantity of pieces of sent RCI. Transmit powers of the RCI and the HARQ do not exceed a maximum transmit power determined based on the quantity of pieces of sent RCIs and a quantity of sent HARQs.

In another possible design, the sending or receiving the first information on the first resource includes: preferentially sending or receiving, on the first resource, the HARQ in the first information.

According to this possible design, the HARQ is usually more important than the resource conflict indication information for feeding back a transmission stability status of data associated with the HARQ. Therefore, preferentially sending or receiving the HARQ can achieve a better gain effect on data transmission stability.

In another possible design, the sending or receiving the first information on the first resource includes: preferentially sending or receiving, on the first resource, high-priority information in the first information.

According to this possible design, receiving or sending of highest-priority information can be preferentially considered, to ensure reliability of stable transmission of most important data.

In another possible design, a quantity of pieces of resource conflict indication information sent on the first resource is less than or equal to an upper limit of a quantity of pieces of sent resource conflict indication information; or a quantity of pieces of resource conflict indication information and HARQs that are sent or received on the first resource is less than or equal to an upper limit of a total quantity of pieces of resource conflict indication information and HARQs that are sent.

In another possible design, the priority of the resource conflict indication information corresponds to a priority included in sidelink control information (SCI) associated with the resource conflict indication information. For example, a priority value of the resource conflict indication information is equal to a priority value of the SCI associated with the resource conflict indication information; or is equal to a priority value of the SCI plus a compensation value. In this way, importance of the resource conflict indication information is associated with the SCI, to be specific, is associated with importance of a resource indicated by the resource conflict indication information. The priority value indicated by the SCI indicates importance of data scheduled by using the SCI, and the resource indicated by the RCI may be used for transmitting data at the priority. Therefore, the importance of the RCI may correspond to the priority value indicated by the SCI corresponding to the resource indicated by the RCI.

In another possible design, a larger quantity of data retransmission times corresponding to a resource indicated by the resource conflict indication information or a larger quantity of resources indicated by the resource conflict indication information indicates a higher priority of the resource conflict indication information.

In another possible design, the resource conflict indication information includes first resource conflict indication information and second resource conflict indication information, and a priority of the first resource conflict indication information is higher than a priority of the second resource conflict indication information, where the first resource conflict indication information indicates a persistent resource conflict, and the second resource conflict indication information indicates a non-persistent resource conflict; the first resource conflict indication information indicates a periodic resource conflict, and the second resource conflict indication information indicates an aperiodic resource conflict; or the first resource conflict indication information indicates a resource conflict of a reserved resource, and the second resource conflict indication information indicates a resource conflict of a used resource.

According to a twentieth aspect, a communication apparatus is provided. The communication apparatus may be a terminal; or a chip or a system-on-a-chip in a terminal. The communication apparatus may implement a function in the nineteenth aspect or the possible designs of the nineteenth aspect. The function may be implemented by hardware, or may be implemented by hardware executing corresponding software. The hardware or the software includes one or more modules corresponding to the function. For example, the communication apparatus may include a processing module and a transceiver module.

The processing module may be configured to determine that a first resource of at least one piece of to-be-sent or to-be-received first information and a second resource of at least one piece of to-be-sent second information overlap in time domain. The transceiver module may be configured to send or receive the first information on the first resource or send the second information on the second resource according to a first rule, where the first information includes resource conflict indication information and a hybrid automatic repeat request (HARQ), and the second information includes uplink information; and the first rule includes: determining, based on a priority of the resource conflict indication information and a priority of the HARQ, whether to send or receive the first information on the first resource or to send the second information on the second resource.

In a possible design, the transceiver module is specifically configured to: if a priority value of highest-priority information in the resource conflict indication information and the HARQ is less than or equal to a priority threshold, send or receive the first information on the first resource; or if the priority value of the highest-priority information in the resource conflict indication information and the HARQ is greater than or equal to the priority threshold, send the second information on the second resource.

In another possible design, the transceiver module is specifically configured to: if a priority value of highest-priority resource conflict indication information in resource conflict indication information is less than or equal to a first priority threshold, and a priority value of a highest-priority HARQ in HARQs is less than a second priority threshold, send or receive the first information on the first resource; or if the priority value of the highest-priority resource conflict indication information in the resource conflict indication information is greater than or equal to the first priority threshold, and/or the priority value of the highest-priority HARQ in the HARQs is greater than or equal to the second priority threshold, send the second information on the second resource.

In another possible design, the transceiver module is specifically configured to preferentially send or receive, on the first resource, the HARQ in the first information.

In another possible design, the transceiver module is specifically configured to preferentially send or receive, on the first resource, high-priority information in the first information.

In another possible design, a quantity of pieces of resource conflict indication information sent on the first resource is less than or equal to an upper limit of a quantity of pieces of sent resource conflict indication information; or a quantity of pieces of resource conflict indication information and HARQs that are sent or received on the first resource is less than or equal to an upper limit of a total quantity of pieces of resource conflict indication information and HARQs that are sent.

In another possible design, the priority of the resource conflict indication information corresponds to a priority included in sidelink control information (SCI) associated with the resource conflict indication information.

In another possible design, a larger quantity of data retransmission times corresponding to a resource indicated by the resource conflict indication information or a larger quantity of resources indicated by the resource conflict indication information indicates a higher priority of the resource conflict indication information.

In another possible design, the resource conflict indication information includes first resource conflict indication information and second resource conflict indication information, and a priority of the first resource conflict indication information is higher than a priority of the second resource conflict indication information, where the first resource conflict indication information indicates a persistent resource conflict, and the second resource conflict indication information indicates a non-persistent resource conflict; the first resource conflict indication information indicates a periodic resource conflict, and the second resource conflict indication information indicates an aperiodic resource conflict; or the first resource conflict indication information indicates a resource conflict of a reserved resource, and the second resource conflict indication information indicates a resource conflict of a used resource.

According to a twenty-first aspect, a communication apparatus is provided. The communication apparatus includes a processor and a memory. The memory is configured to store computer-executable instructions. When the communication apparatus runs, the processor executes the computer-executable instructions stored in the memory, so that the communication apparatus performs the method in any one of the nineteenth aspect or the possible designs of the nineteenth aspect.

According to a twenty-second aspect, a computer-readable storage medium is provided. The computer-readable storage medium stores instructions. When the instructions are run on a computer, the computer is enabled to perform the method in any one of the nineteenth aspect or the possible designs of the nineteenth aspect.

According to a twenty-third aspect, a computer program product including instructions is provided. When the computer program product runs on a computer, the computer is enabled to perform the method in any one of the nineteenth aspect or the possible designs of the nineteenth aspect.

According to a twenty-fourth aspect, a communication apparatus is provided. The communication apparatus may be a chip system. The chip system may include a processor and a transceiver, to support the communication apparatus in implementing a function in any one of the nineteenth aspect or the possible designs of the nineteenth aspect. In a possible design, the chip system further includes a memory. The memory is configured to store program instructions and data that are necessary for the communication apparatus. The chip system may include a chip; or may include a chip and another discrete component.

For technical effects achieved in any one of the design manners of the twentieth aspect to the twenty-fourth aspect, refer to the technical effects achieved in any one of the nineteenth aspect or the possible designs of the nineteenth aspect. Details are not described again.

According to a twenty-fifth aspect, still another resource conflict processing method is provided. The method may include: determining that a first resource of at least one piece of to-be-transmitted resource conflict indication information and a second resource of at least one to-be-transmitted hybrid automatic repeat request (HARQ) overlap in time domain, where transmission includes sending or receiving; and transmitting the resource conflict indication information and/or the HARQ based on a priority of the resource conflict indication information and a priority of the HARQ.

According to the method in the twenty-fifth aspect, when sending or receiving of the to-be-sent or to-be-received resource conflict indication information conflicts with sending or receiving of the to-be-sent or to-be-received HARQ due to a transmission capability limitation of a terminal, sending or receiving of the resource conflict indication information and the HARQ that are associated with important data can be preferentially ensured, to ensure stable and reliable data transmission.

In a possible design, the transmitting the resource conflict indication information and/or the HARQ based on a priority of the resource conflict indication information and a priority of the HARQ includes: preferentially transmitting the HARQ based on the priority of the resource conflict indication information and the priority of the HARQ; or preferentially transmitting high-priority information in the HARQ and the resource conflict indication information based on the priority of the resource conflict indication information and the priority of the HARQ.

According to this possible design, receiving or sending of highest-priority information can be preferentially considered, to ensure reliability of stable transmission of most important data.

In another possible design, a quantity of pieces of sent resource conflict indication information is less than or equal to an upper limit of a quantity of pieces of sent resource conflict indication information; or a quantity of pieces of sent resource conflict indication information and HARQs is less than or equal to an upper limit of a total quantity of pieces of sent resource conflict indication information and HARQs.

In another possible design, a quantity of pieces of received resource conflict indication information is less than or equal to an upper limit of a quantity of pieces of received resource conflict indication information; or a quantity of pieces of received resource conflict indication information and HARQs is less than or equal to an upper limit of a total quantity of pieces of received resource conflict indication information and HARQs.

In another possible design, a transmit power of the RCI does not exceed a maximum transmit power determined based on a quantity of pieces of sent RCI. Transmit powers of the RCI and the HARQ do not exceed a maximum transmit power determined based on the quantity of pieces of sent RCIs and a quantity of sent HARQs.

In another possible design, the priority of the resource conflict indication information corresponds to a priority included in sidelink control information (SCI) associated with the resource conflict indication information. For example, a priority value of the resource conflict indication information is equal to a priority value of the SCI associated with the resource conflict indication information; or is equal to a priority value of the SCI plus a compensation value. In this way, importance of the resource conflict indication information is associated with the SCI, to be specific, is associated with importance of a resource indicated by the resource conflict indication information.

In another possible design, a larger quantity of data retransmission times corresponding to a resource indicated by the resource conflict indication information or a larger quantity of resources indicated by the resource conflict indication information indicates a higher priority of the resource conflict indication information.

In another possible design, the resource conflict indication information includes first resource conflict indication information and second resource conflict indication information, and a priority of the first resource conflict indication information is higher than a priority of the second resource conflict indication information, where the first resource conflict indication information indicates a persistent resource conflict, and the second resource conflict indication information indicates a non-persistent resource conflict; the first resource conflict indication information indicates a periodic resource conflict, and the second resource conflict indication information indicates an aperiodic resource conflict; or the first resource conflict indication information indicates a resource conflict of a reserved resource, and the second resource conflict indication information indicates a resource conflict of a used resource.

According to a twenty-sixth aspect, a communication apparatus is provided. The communication apparatus may be a terminal; or a chip or a system-on-a-chip in a terminal. The communication apparatus may implement a function in the twenty-fifth aspect or the possible designs of the twenty-fifth aspect. The function may be implemented by hardware, or may be implemented by hardware executing corresponding software. The hardware or the software includes one or more modules corresponding to the function. For example, the communication apparatus may include a processing module and a transceiver module.

The processing module may be configured to determine that a first resource of at least one piece of to-be-transmitted resource conflict indication information and a second resource of at least one to-be-transmitted hybrid automatic repeat request (HARQ) overlap in time domain, where transmission includes sending or receiving. The transceiver module is configured to transmit the resource conflict indication information and/or the HARQ based on a priority of the resource conflict indication information and a priority of the HARQ.

In a possible design, the transceiver module is specifically configured to: preferentially transmit the HARQ based on the priority of the resource conflict indication information and the priority of the HARQ; or preferentially transmit high-priority information in the HARQ and the resource conflict indication information based on the priority of the resource conflict indication information and the priority of the HARQ.

In another possible design, a quantity of pieces of transmitted resource conflict indication information is less than or equal to an upper limit of a quantity of pieces of transmitted resource conflict indication information; or a quantity of pieces of transmitted resource conflict indication information and HARQs is less than or equal to an upper limit of a total quantity of pieces of transmitted resource conflict indication information and HARQs.

In another possible design, the priority of the resource conflict indication information corresponds to a priority included in sidelink control information (SCI) associated with the resource conflict indication information.

In another possible design, a larger quantity of data retransmission times corresponding to a resource indicated by the resource conflict indication information or a larger quantity of resources indicated by the resource conflict indication information indicates a higher priority of the resource conflict indication information.

In another possible design, the resource conflict indication information includes first resource conflict indication information and second resource conflict indication information, and a priority of the first resource conflict indication information is higher than a priority of the second resource conflict indication information, where the first resource conflict indication information indicates a persistent resource conflict, and the second resource conflict indication information indicates a non-persistent resource conflict; the first resource conflict indication information indicates a periodic resource conflict, and the second resource conflict indication information indicates an aperiodic resource conflict; or the first resource conflict indication information indicates a resource conflict of a reserved resource, and the second resource conflict indication information indicates a resource conflict of a used resource.

According to a twenty-seventh aspect, a communication apparatus is provided. The communication apparatus includes a processor and a memory. The memory is configured to store computer-executable instructions. When the communication apparatus runs, the processor executes the computer-executable instructions stored in the memory, so that the communication apparatus performs the method in any one of the twenty-fifth aspect or the possible designs of the twenty-fifth aspect.

According to a twenty-eighth aspect, a computer-readable storage medium is provided. The computer-readable storage medium stores instructions. When the instructions are run on a computer, the computer is enabled to perform the method in any one of the twenty-fifth aspect or the possible designs of the twenty-fifth aspect.

According to a twenty-ninth aspect, a computer program product including instructions is provided. When the computer program product runs on a computer, the computer is enabled to perform the method in any one of the twenty-fifth aspect or the possible designs of the twenty-fifth aspect.

According to a thirtieth aspect, a communication apparatus is provided. The communication apparatus may be a chip system. The chip system may include a processor and a transceiver, to support the communication apparatus in implementing a function in any one of the twenty-fifth aspect or the possible designs of the twenty-fifth aspect. In a possible design, the chip system further includes a memory. The memory is configured to store program instructions and data that are necessary for the communication apparatus. The chip system may include a chip; or may include a chip and another discrete component.

For technical effects achieved in any one of the design manners of the twenty-sixth aspect to the thirtieth aspect, refer to the technical effects achieved in any one of the twenty-fifth aspect or the possible designs of the twenty-fifth aspect. Details are not described again.

According to a thirty-first aspect, still another resource conflict processing method is provided. The method may include: determining that at least two pieces of to-be-transmitted resource conflict indication information overlap in time domain, where transmission includes sending or receiving; and transmitting the resource conflict indication information based on priorities of the resource conflict indication information.

According to the method in the thirty-first aspect, when sending or receiving of the at least two pieces of to-be-sent or to-be-received resource conflict indication information conflict due to a transmission capability limitation of a terminal, sending or receiving of the resource conflict indication information associated with important data can be preferentially ensured, to ensure stable and reliable data transmission.

In a possible design, a quantity of pieces of sent resource conflict indication information is less than or equal to an upper limit of a quantity of pieces of sent resource conflict indication information.

In a possible design, a quantity of pieces of received resource conflict indication information is less than or equal to an upper limit of a quantity of pieces of received resource conflict indication information.

In another possible design, a transmit power of the resource conflict indication information does not exceed a maximum transmit power determined based on a quantity of pieces of sent resource conflict indication information.

In another possible design, the priority of the resource conflict indication information corresponds to a priority included in sidelink control information (SCI) associated with the resource conflict indication information. For example, a priority value of the resource conflict indication information is equal to a priority value of the SCI associated with the resource conflict indication information; or is equal to a priority value of the SCI plus a compensation value. In this way, importance of the resource conflict indication information is associated with the SCI, to be specific, is associated with importance of a resource indicated by the resource conflict indication information. The priority value indicated by the SCI indicates importance of data scheduled by using the SCI, and the resource indicated by the RCI may be used for transmitting data at the priority. Therefore, the importance of the RCI may correspond to the priority value indicated by the SCI corresponding to the resource indicated by the RCI.

In another possible design, a larger quantity of data retransmission times corresponding to a resource indicated by the resource conflict indication information or a larger quantity of resources indicated by the resource conflict indication information indicates a higher priority of the resource conflict indication information.

In another possible design, the resource conflict indication information includes first resource conflict indication information and second resource conflict indication information, and a priority of the first resource conflict indication information is higher than a priority of the second resource conflict indication information, where the first resource conflict indication information indicates a persistent resource conflict, and the second resource conflict indication information indicates a non-persistent resource conflict; the first resource conflict indication information indicates a periodic resource conflict, and the second resource conflict indication information indicates an aperiodic resource conflict; or the first resource conflict indication information indicates a resource conflict of a reserved resource, and the second resource conflict indication information indicates a resource conflict of a used resource.

According to a thirty-second aspect, a communication apparatus is provided. The communication apparatus may be a terminal; or a chip or a system-on-a-chip in a terminal. The communication apparatus may implement a function in the thirty-first aspect or the possible designs of the thirty-first aspect. The function may be implemented by hardware, or may be implemented by hardware executing corresponding software. The hardware or the software includes one or more modules corresponding to the function. For example, the communication apparatus may include a processing module and a transceiver module.

The processing module may be configured to determine that at least two pieces of to-be-transmitted resource conflict indication information overlap in time domain, where transmission includes sending or receiving. The transceiver module may be configured to transmit the resource conflict indication information based on priorities of the resource conflict indication information.

In a possible design, a quantity of pieces of transmitted resource conflict indication information is less than or equal to an upper limit of a quantity of pieces of transmitted resource conflict indication information.

In another possible design, the priority of the resource conflict indication information corresponds to a priority included in sidelink control information (SCI) associated with the resource conflict indication information.

In another possible design, a larger quantity of data retransmission times corresponding to a resource indicated by the resource conflict indication information or a larger quantity of resources indicated by the resource conflict indication information indicates a higher priority of the resource conflict indication information.

In another possible design, the resource conflict indication information includes first resource conflict indication information and second resource conflict indication information, and a priority of the first resource conflict indication information is higher than a priority of the second resource conflict indication information, where the first resource conflict indication information indicates a persistent resource conflict, and the second resource conflict indication information indicates a non-persistent resource conflict; the first resource conflict indication information indicates a periodic resource conflict, and the second resource conflict indication information indicates an aperiodic resource conflict; or the first resource conflict indication information indicates a resource conflict of a reserved resource, and the second resource conflict indication information indicates a resource conflict of a used resource.

According to a thirty-third aspect, a communication apparatus is provided. The communication apparatus includes a processor and a memory. The memory is configured to store computer-executable instructions. When the communication apparatus runs, the processor executes the computer-executable instructions stored in the memory, so that the communication apparatus performs the method in any one of the thirty-first aspect or the possible designs of the thirty-first aspect.

According to a thirty-fourth aspect, a computer-readable storage medium is provided. The computer-readable storage medium stores instructions. When the instructions are run on a computer, the computer is enabled to perform the method in any one of the thirty-first aspect or the possible designs of the thirty-first aspect.

According to a thirty-fifth aspect, a computer program product including instructions is provided. When the computer program product runs on a computer, the computer is enabled to perform the method in any one of the thirty-first aspect or the possible designs of the thirty-first aspect.

According to a thirty-sixth aspect, a communication apparatus is provided. The communication apparatus may be a chip system. The chip system may include a processor and a transceiver, to support the communication apparatus in implementing a function in any one of the thirty-first aspect or the possible designs of the thirty-first aspect. In a possible design, the chip system further includes a memory. The memory is configured to store program instructions and data that are necessary for the communication apparatus. The chip system may include a chip; or may include a chip and another discrete component.

For technical effects achieved in any one of the design manners of the thirty-second aspect to the thirty-sixth aspect, refer to the technical effects achieved in any one of the thirty-first aspect or the possible designs of the thirty-first aspect. Details are not described again.

**BRIEF DESCRIPTION OF DRAWINGS**

FIG. 1 is a schematic diagram of a resource configuration of a physical sidelink feedback channel according to an embodiment of this application;

FIG. 2 is a schematic diagram of slots for sending hybrid automatic repeat requests according to an embodiment of this application;

FIG. 3 is a schematic diagram of slots in which hybrid automatic repeat requests are correspondingly sent after data is received in each slot according to an embodiment of this application;

FIG. 4 is a bitmap of a physical resource block of a physical sidelink feedback channel according to an embodiment of this application;

FIG. 5 is a schematic diagram in which a conflict occurs in a resource indicated by sidelink control information according to an embodiment of this application;

FIG. 6 is another schematic diagram in which a conflict occurs in a resource indicated by sidelink control information according to an embodiment of this application;

FIG. 7 is a schematic diagram of a vehicle-to-everything scenario according to an embodiment of this application;

FIG. 8 is a schematic diagram of another vehicle-to-everything scenario according to an embodiment of this application;

FIG. 9 is a schematic flowchart of a resource conflict processing method according to an embodiment of this application;

FIG. 10 is another schematic diagram in which a conflict occurs in a resource indicated by sidelink control information according to an embodiment of this application;

FIG. 11 is a schematic flowchart of another resource conflict processing method according to an embodiment of this application;

FIG. 12 is a schematic flowchart of another resource conflict processing method according to an embodiment of this application;

FIG. 13 is a schematic flowchart of another resource conflict processing method according to an embodiment of this application;

FIG. 14 is a schematic flowchart of another resource conflict processing method according to an embodiment of this application;

FIG. 15 is a schematic flowchart of another resource conflict processing method according to an embodiment of this application;

FIG. 16 is a schematic composition diagram of a communication apparatus according to an embodiment of this application; and

FIG. 17 is a schematic composition diagram of another communication apparatus according to an embodiment of this application.

## DESCRIPTION OF EMBODIMENTS

Sidelink (sidelink, SL) communication is wireless communication directly performed between two or more terminals. In this type of communication, two or more terminals that are geographically close to each other can directly communicate without using a node, a base station, or a core network. Therefore, data transmission in sidelink communication is different from that in typical cellular network communication. In typical cellular network communication, a terminal sends data to a base station (that is, uplink transmission) or a terminal receives data from a base station (that is, downlink transmission). In sidelink communication, data may be directly sent from a sending terminal to a receiving terminal through a unified air interface (for example, a PC5 interface) without passing through a base station.

In a new radio (new radio, NR) mobile communication system, sidelink communication may support transmission modes such as broadcast, unicast, and multicast. Unicast is a transmission mode in which a destination address is a single target in a data transmission process, to be specific, a sending terminal and a receiving terminal are unique. Multicast is a transmission mode in which a destination address is a group of targets in a data transmission process, to be specific, each terminal in the group of targets is a receiving terminal of data transmission. Broadcast is a transmission mode in which a destination address is not limited in a data transmission process, to be specific, a receiving terminal is not limited. In unicast and multicast transmission modes, sidelink communication further supports a hybrid automatic repeat request (hybrid automatic repeat request, HARQ) feedback. To be specific, if a receiving terminal successfully decodes data, the receiving terminal feeds back an acknowledgment (acknowledge character, ACK) to a sending terminal; or if a receiving terminal fails to decode data, the receiving terminal feeds back a negative acknowledgment (negative acknowledgement, NACK) to a sending terminal. When the sending terminal receives the ACK after sending the data, the sending terminal may determine that the receiving terminal successfully receives the data and does not need to retransmit the data. When the sending terminal receives the NACK after sending the data, the sending terminal may determine that the receiving terminal fails to receive the data and needs to retransmit the data. HARQ feedback manners may also vary based on different transmission modes. For example, in the unicast transmission mode, when successfully decoding data, a receiving terminal may feed back an ACK to a sending terminal; or when unsuccessfully decoding data, a receiving terminal may feed back a NACK to a sending terminal. However, in the multicast transmission mode, a receiving terminal may use a same HARQ feedback manner as that in the unicast transmission mode. Alternatively, when successfully decoding data, a receiving terminal may not feed back an ACK to a sending terminal; or when failing to decode data, a receiving terminal may feed back a NACK to a sending terminal.

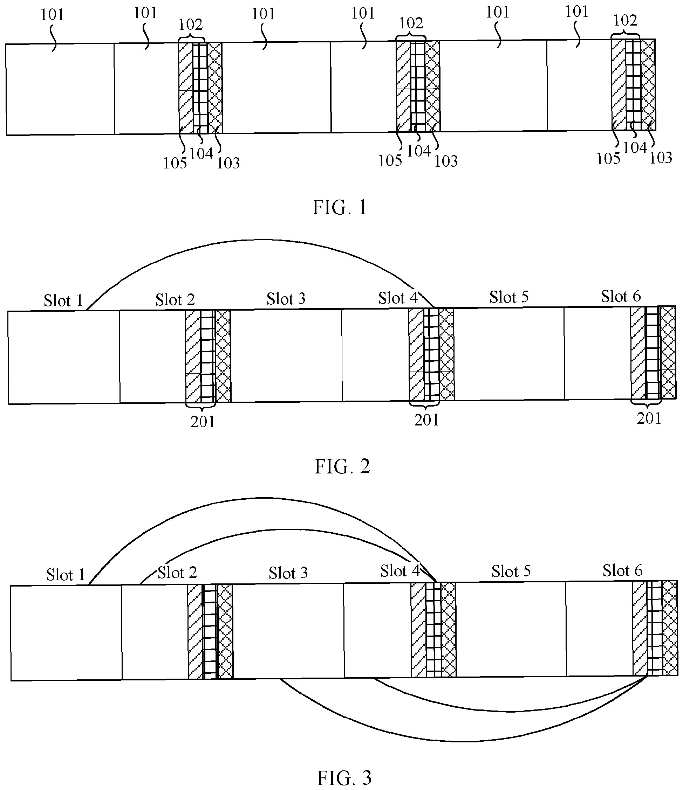

In sidelink communication, a HARQ may be carried on a physical sidelink feedback channel (physical sidelink feedback channel, PSFCH). A resource used for PSFCH transmission is usually periodically allocated. A periodicity of the resource used for PSFCH transmission may be 0, 1, 2, 4, or the like. For example, if the configuration periodicity of the PSFCH resource is 0, it indicates that no PSFCH resource is configured in a resource pool. In this case, a HARQ is disabled (to be specific, a terminal cannot use a HARQ feedback in the resource pool). For another example, if the configuration periodicity of the PSFCH resource is 1, it indicates that a PSFCH resource is configured in each slot. For another example, if the configuration periodicity of the PSFCH resource is 2, it indicates that a PSFCH resource is configured in one of every two slots. The PSFCH resource is usually configured at a tail end of the slot. For example, a configuration periodicity of a PSFCH resource is 2. As shown in FIG. 1, a PSFCH resource 102 is configured in one of every two slots 101. The PSFCH resource 102 is configured at a tail end of the slot 101, for example, configured in a tail orthogonal frequency division multiplexing (orthogonal frequency division multiplexing, OFDM) symbol of the corresponding slot 101. For example, if numbers of 14 OFDM symbols in one slot 101 are respectively 0 to 13, in the slot 101 in which a PSFCH resource 102 is configured, a $13^{th}$ OFDM symbol 103 may be a guard period (guard period, GP) symbol, a $12^{th}$ OFDM symbol 104 may be a PSFCH symbol (that is, an OFDM symbol used for PSFCH transmission), and an $11^{th}$ OFDM symbol 105 may be a repetition of the PSFCH symbol, and may further be used for automatic gain control AGC (automatic gain control).

After a terminal serving as a receiving terminal receives data, a specific slot in which the receiving terminal is to send a HARQ to a sending terminal through a PSFCH needs to be determined based on a minimum time interval (mintimegap) and a configuration periodicity of a PSFCH resource. The mintimegap may be two slots, three slots, or the like. The receiving terminal may send, through the PSFCH, the HARQ in the first slot, in which the PSFCH resource is configured, after mintimegap slots after receiving the data. For example, the mintimegap is two slots. As shown in FIG. 2, when a receiving terminal receives data in a slot 1, the receiving terminal may send, through a PSFCH, a HARQ in a slot in which a PSFCH resource 201 is first configured in a slot 3 and subsequent slots (to be specific, send, on the PSFCH resource 201 in a slot 4, the HARQ corresponding to the data received in the slot 1). An example in which the mintimegap is two slots is still used. FIG. 3 shows slots in which HARQs are correspondingly fed back after data is received in each slot. As shown in FIG. 3, a HARQ corresponding to data received by a receiving terminal in a slot 1 may be sent (or fed back) in a slot 4 through a PSFCH. A HARQ corresponding to data received by the receiving terminal in a slot 2 may be sent in the slot 4 through a PSFCH. A HARQ corresponding to data received by the receiving terminal in a slot 3 may be sent in a slot 6 through a PSFCH. A HARQ corresponding to data received by the receiving terminal in the slot 4 may be sent in the slot 6 through a PSFCH.

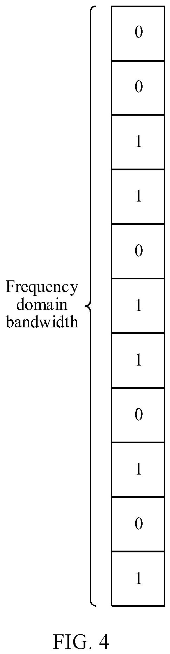

It should be noted that in a slot in which a PSFCH resource is configured, not all frequency domain resources on an OFDM symbol (namely, a PSFCH symbol) for PSFCH transmission are used for PSFCH transmission. A bitmap (bitmap) may be preconfigured or configured by a base station to indicate specific physical resource blocks (physical resource blocks, PRBs), on the PSFCH symbol, that can be used for PSFCH transmission. For example, a frequency domain bandwidth of a resource pool is 11 PRBs. As shown in FIG. 4, an indication of a bitmap may be "00110110101". A position indicated by 1 indicates that a physical resource block can be used for PSFCH transmission, and a position indicated by 0 indicates that a physical resource block cannot be used for PSFCH transmission.

After a terminal serving as a sending terminal sends data, the terminal may also determine, based on a mintimegap and a configuration periodicity of a PSFCH resource, a specific slot in which a HARQ carried on a PSFCH is to be received. For a specific process, refer to the foregoing example. Details are not described herein again. Therefore, in a data transmission process, a terminal may need to send a HARQ through a PSFCH and receive a HARQ carried on the PSFCH in a same slot. However, due to a half-duplex limitation of the terminal, the terminal cannot perform sending and receiving at the same time. Therefore, in this case, a HARQ sending and receiving conflict (or a PSFCH sending and receiving conflict) exists in the terminal. In other words, a resource of a to-be-received HARQ and a resource of a to-be-sent HARQ overlap in time domain. When a HARQ sending and receiving conflict exists, the terminal needs to determine whether to send or receive a HARQ. For example, the terminal may use a priority value included in SCI associated with a HARQ as a priority of the HARQ (where the priority may be represented by using the priority value, for example, a smaller priority value indicates a higher priority).

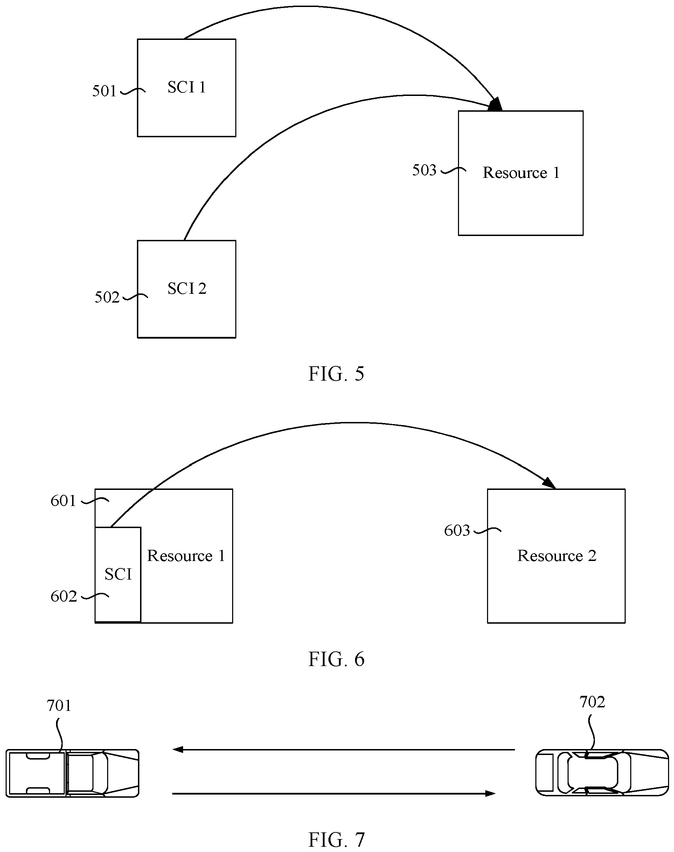

In sidelink communication, when a terminal finds that a resource conflict occurs between other terminals, to be specific, a conflict occurs in a resource indicated by received SCI respectively sent by the other terminals, the terminal may separately send indication information (for example, resource conflict indication information (Resource conflict indication information, RCI), where the resource conflict indication information is used as an example below) to the terminals that sends the SCI, to indicate that a resource conflict exists on the resource indicated by the other terminals; or send the resource conflict indication information to one of the terminals, to indicate that a conflict occurs in the resource indicated by the SCI sent by the terminal. The resource conflict herein may be understood as resource overlapping, a resource collision, partial resource overlapping, full resource overlapping, strong resource interference, or the like. A type of the resource conflict is not limited herein. For example, as shown in FIG. 5, both SCI 1 501 sent by a terminal B and SCI 2 502 sent by a terminal C indicate a resource 1 503. In other words, a conflict occurs in the resource 1 503 indicated by the SCI 1 501 of the terminal B and the SCI 2 502 of the terminal C. In this case, if a terminal A receives the SCI 1 501 sent by the terminal B and the SCI 2 502 sent by the terminal C, the terminal A may detect that the resource conflict exists on the resource 1 503 separately indicated by the SCI 1 501 of the terminal B and the SCI 2 502 of the terminal C (that is, the resource 1 503 is a conflicting resource). The terminal A may send resource conflict indication information to at least one of the terminal B and the terminal C, to indicate that the resource conflict occurs in the resource 1 503. When a terminal sends SCI to schedule data, if another terminal receives the SCI and finds that a resource conflict exists on a resource indicated by the SCI (for example, a transmission resource and a reserved resource indicated by the SCI, or a resource occupied by the SCI), the another terminal sends resource conflict indication information to the terminal, to indicate, to the terminal, that the resource conflict occurs in the resource indicated by the SCI sent by the terminal. In this case, the terminal needs to receive the resource conflict indication information from the another terminal, to determine whether the resource conflict occurs in the to-be-used resource. For example, as shown in FIG. 6, a terminal A sends SCI 602 on a resource 1 601. The SCI 602 indicates a resource 2 603 used as a reserved resource. In this case, if another terminal receives the SCI 602 sent by the terminal A, and finds that a resource conflict exists between the resource 2 603 indicated by the SCI 602 and/or the resource 1 601 occupied by the SCI 602, the another terminal sends resource conflict indication information to the terminal A. Correspondingly, the terminal A needs to receive the resource conflict indication information from the another terminal.

It should be noted that the resource conflict indication information may be carried on a PSFCH or another channel, for example, a channel dedicated to carrying the resource conflict indication information. Therefore, a specific manner such as a channel for carrying the resource conflict indication information or a resource for transmitting the resource conflict indication information is similar to a specific manner of HARQ sending and receiving. Therefore, a transmission conflict may also occur between resources for transmitting the resource conflict indication information, or between the resource for transmitting the resource conflict indication information and a resource for transmitting other information (such as a HARQ and uplink information) due to overlapping in time domain.

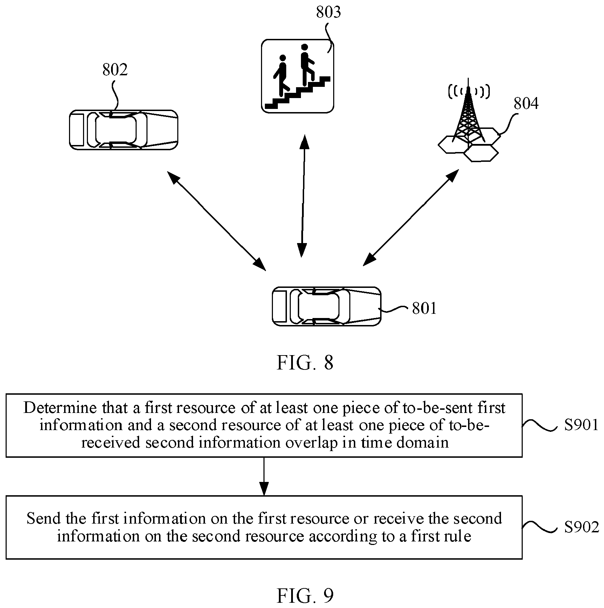

To resolve the foregoing problem, an embodiment of this application provides a resource conflict processing method. The method may be applied to a terminal in various sidelink communication scenarios. For example, FIG. 7 shows a V2V scenario. As shown in FIG. 7, sidelink communication is performed between a first terminal 701 (for example, a vehicle-mounted device) and a second terminal 702 (for example, a vehicle-mounted device). For another example, FIG. 8 shows a V2X scenario. As shown in FIG. 8, a first terminal 801 (for example, a vehicle-mounted device) may separately communicate with a second terminal 802 (for example, a vehicle-mounted device), a pedestrian 803 (for example, a pedestrian handheld device), and an access network device 804 (for example, a base station). Sidelink communication is performed between the terminal 801 and the terminal 802, and uplink communication and downlink communication are performed between the terminal 801 and the access network device 803.

Optionally, the terminal may be user equipment (user equipment, UE), a road side unit (road side unit, RSU), a mobile station (mobile station, MS), a mobile terminal (mobile terminal, MT), or the like. Specifically, the terminal may be a mobile phone (a "cellular" phone), a cell phone, a computer, a cordless phone, a session initiation protocol (session initiation protocol, SIP) phone, a wireless local loop (wireless local loop, WLL) station, a personal digital assistant (personal digital assistant, PDA), a laptop computer, a handheld communication device, a handheld computing device, a satellite wireless device, a wireless modem card, a television set-top box (set-top box, STB), customer premises equipment (customer premises equipment, CPE), a wearable device (for example, a smartwatch, a smart band, or a pedometer), a vehicle-mounted device (for example, an automobile, a bicycle, an electric vehicle, an aircraft, a ship, a train, or a high-speed train), a virtual reality (virtual reality, VR) device, an augmented reality (augmented reality, AR) device, a wireless terminal in industrial control (industrial control), a smart home device (for example, a refrigerator, a television, an air conditioner, or an electricity meter), an intelligent robot, a workshop device, a wireless terminal in self driving (self driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), a flight device (for example, an intelligent robot, a hot balloon, an unmanned aerial vehicle, or an aircraft), another device used for communication in a wireless system, or the like. A specific representation form of the terminal is not limited in this application either.

In some embodiments, the access network device may be a next generation NodeB (next generation NodeB, gNB), a next generation evolved NodeB (next generation evolved NodeB, ng-eNB), a central unit (central unit, CU), a distributed unit (distributed unit, DU), a central unit-control plane (central unit-control plane, CU-CP), a central unit-user plane (central unit-user plane, CU-UP), or the like.

The gNB may provide a new radio (new radio, NR) control plane and/or user plane protocol and function for the terminal, and access a 5G core network (5th generation core, 5GC). The ng-eNB may provide an evolved universal terrestrial radio access (evolved universal terrestrial radio access, E-UTRA) control plane and/or user plane protocol and function for the terminal, and access the 5GC. The CU mainly includes an RRC layer, a service data adaptation protocol (service data adaptation protocol, SDAP) layer, and a packet data convergence protocol (packet data convergence protocol, PDCP) layer of the gNB; or an RRC layer and a PDCP layer of the ng-eNB. The DU mainly includes a radio link control (radio link control, RLC) layer, a media access control (media access control, MAC) layer, and a physical layer of the gNB or the ng-eNB. The CU-CP mainly includes an RRC layer in a gNB-CU or an ng-eNB-CU and a control plane at the PDCP layer. The CU-UP mainly includes an SDAP layer in the gNB-CU or the ng-eNB-CU and a user plane at the PDCP layer.

A person of ordinary skill in the art may learn that the technical solutions provided in embodiments of this application are also applicable to a similar technical problem as a network architecture evolves and a new service scenario emerges.

With reference to the accompanying drawings, the following describes, by using examples, the resource conflict processing method provided in embodiments of this application.

It should be noted that, in descriptions of this application, words such as "first" and "second" are merely used for distinguishing and description, and are not used for specially limiting a feature. In descriptions of embodiments of this application, the term "and/or" describes an association relationship between associated objects and indicates that three relationships may exist. For example, A and/or B may indicate the following three cases: Only A exists, both A and B exist, and only B exists. The character "/" generally indicates an "or" relationship between the associated objects. In this application, "at least one" means one or more, and "a plurality of" means two or more.

**Embodiment 1**

FIG. 9 is a schematic flowchart of a resource conflict processing method. As shown in FIG. 9, the method may include the following S901 and S902.

S901: Determine that a first resource of at least one piece of to-be-sent first information and a second resource of at least one piece of to-be-received second information overlap in time domain.

The at least one piece of to-be-sent first information may be understood as at least one piece of first information that needs to be sent, or at least one piece of first information that may need to be sent.

The at least one piece of to-be-received first information may be understood as at least one piece of first information that needs to be received, or at least one piece of first information that may need to be received.

That the first resource of the at least one piece of to-be-sent first information and the second resource of the at least one piece of to-be-received second information overlap in time domain may be understood as that the first resource for transmitting the at least one piece of first information and the second resource for transmitting the at least one piece of second information overlap in time domain, or may be understood as that the at least one piece of first information and the at least one piece of second information overlap in time domain, or may be understood as that a channel for carrying the at least one piece of first information and a channel for carrying the at least one piece of second information overlap in time domain.

For example, the first information and the second information may be specifically: The first information includes resource conflict indication information and a HARQ, and the second information includes resource conflict indication information and/or a HARQ; or the first information includes resource conflict indication information or a HARQ, and the second information includes resource conflict indication information and a HARQ. In other words, a resource of the to-be-sent resource conflict indication information and HARQ overlaps a resource of the to-be-received resource conflict indication information and HARQ in time domain; a resource of the to-be-sent resource conflict indication information and HARQ overlaps a resource of the to-be-received resource conflict indication information in time domain; a resource of the to-be-sent resource conflict indication information and HARQ overlaps a resource of the to-be-received HARQ in time domain; a resource of the to-be-sent resource conflict indication information overlaps a resource of the to-be-received resource conflict indication information and HARQ in time domain; or a resource of the to-be-sent HARQ overlaps a resource of the to-be-received resource conflict indication information and HARQ in time domain.

The resource conflict indication information may be carried on a PSFCH, or may be carried on a channel dedicated to carrying the resource conflict indication information. The channel dedicated to carrying the resource conflict indication information may be sent in a form of a sequence (for example, a physical sidelink resource indication channel (physical sidelink resource indication channel, PSRCH)). In some embodiments, a channel for carrying the resource conflict indication information and a channel for carrying the HARQ may be distinguished by using a frequency domain resource or a code domain resource. For example, different PRBs are used for differentiation. For another example, different root sequences are used for differentiation. For example, the channel for carrying the resource conflict indication information and the channel for carrying the HARQ use different cyclic shifts CSs, or the channel for carrying the resource conflict indication information and the channel for carrying the HARQ use different orthogonal cover codes (Orthogonal Cover Codes, OCCs), or the channel for carrying the resource conflict indication information and the channel for carrying the HARQ use different root sequences.

A resource conflict indicated by the resource conflict indication information may be a time-frequency resource conflict, a frequency-domain resource conflict, a conflict caused by a hidden node problem, a conflict caused by a half-duplex problem, a persistent conflict, a persistent half-duplex conflict, a single resource conflict, a plurality of resource conflicts, a conflict caused by a single half-duplex problem, a conflict caused by a plurality of half-duplex problems, resource overlapping, a resource collision, partial resource overlapping, full resource overlapping, strong resource interference, and the like. A type of the resource conflict indication information is not limited in the present invention.

S902: Send the first information on the first resource or receive the second information on the second resource according to a first rule.

In some possible implementations, the first rule may be: determining, based on priorities of the HARQs, whether to send the first information on the first resource or receive the second information on the second resource. For example, if a highest-priority HARQ in the HARQs is a to-be-sent HARQ, the first information is sent on the first resource; or if a highest-priority HARQ in the HARQs is a to-be-received HARQ, the second information is received on the second resource. The highest-priority HARQ in the HARQs is a HARQ with a smallest priority value in the HARQs. For example, a smaller priority value on a sidelink indicates a higher priority. A range of the priority value is 1, 2, 3, 4, 5, 6, 7, and 8. If the priority value is 1, the priority is the highest. If the priority value is 8, the priority is the lowest. If to-be-sent HARQs are respectively three HARQs whose priorities are 1, 4, and 6, and to-be-received HARQs are respectively three HARQs whose priorities are 3, 6, and 7, a highest-priority HARQ is the HARQ whose priority value is 1. In this case, the first information is sent.

In this embodiment of this application, if the highest-priority HARQ in the HARQs is the to-be-sent HARQ, the HARQ in the first information is preferentially sent on the first resource; or if the highest-priority HARQ in the HARQ is the to-be-received HARQ, the HARQ in the second information is preferentially received on the second resource.

The HARQ in the first information is preferentially sent on the first resource, so that reliability brought by a HARQ mechanism for data transmission can be ensured. On such as basis, the RCI is further used for improving data transmission reliability, to avoid a case in which the data transmission reliability is reduced because the HARQ cannot be transmitted due to transmission of the RCI.

Similarly, the HARQ in the second information is preferentially received on the second resource, so that reliability brought by the HARQ mechanism for data transmission can be ensured. On such as basis, the RCI is further used for improving data transmission reliability. This avoids a case in which the data transmission reliability is reduced because the HARQ cannot be received due to receiving of the RCI.

For example, the resource of the to-be-sent resource conflict indication information and HARQ overlaps the resource of the to-be-received resource conflict indication information and HARQ in time domain (that is, the first information includes the HARQ and the resource conflict indication information, and the second information includes the HARQ and the resource conflict indication information). If a highest-priority HARQ in the HARQs is the to-be-sent HARQ, the HARQ and the resource conflict indication information are sent on the first resource. If a highest-priority HARQ in the HARQs is the to-be-received HARQ, the HARQ and the resource conflict indication information are received on the second resource.

Alternatively, the resource of the to-be-sent resource conflict indication information and HARQ overlaps the resource of the to-be-received resource conflict indication information in time domain (that is, the first information includes the HARQ and the resource conflict indication information, and the second information includes the resource conflict indication information). Because the HARQ is the to-be-sent HARQ, the HARQ and the resource conflict indication information are sent on the first resource.

Alternatively, the resource of the to-be-sent resource conflict indication information and HARQ overlaps the resource of the to-be-received HARQ in time domain (that is, the first information includes the HARQ and the resource conflict indication information, and the second information includes the HARQ). If a highest-priority HARQ in the HARQs is the to-be-sent HARQ, the HARQ and the resource conflict indication information are sent on the first resource. If a highest-priority HARQ in the HARQs is the to-be-received HARQ, the HARQ is received on the second resource.

Alternatively, the resource of the to-be-sent resource conflict indication information overlaps the resource of the to-be-received resource conflict indication information and HARQ in time domain (that is, the first information includes the resource conflict indication information, and the second information includes the HARQ and the resource conflict indication information). Because the HARQ is the to-be-received HARQ, the HARQ and the resource conflict indication information are received on the second resource.

Alternatively, the resource of the to-be-sent HARQ overlaps the resource of the to-be-received resource conflict indication information and HARQ in time domain (that is, the first information includes the HARQ, and the second information includes the HARQ and the resource conflict indication information). If a highest-priority HARQ in the HARQs is the to-be-sent HARQ, the HARQ is sent on the first resource. If a highest-priority HARQ in the HARQs is the to-be-received HARQ, the HARQ and the resource conflict indication information are received on the second resource.

In some other possible implementations, the first rule may alternatively be: determining, based on priorities of the HARQs and priorities of the resource conflict indication information, whether to send the first information on the first resource or receive the second information on the second resource. For example, if highest-priority information in the HARQs and the resource conflict indication information is to-be-sent information, the first information is sent on the first resource; or if highest-priority information in the HARQs and the resource conflict indication information is to-be-received information, the second information is received on the second resource. In this embodiment of this application, if highest-priority information in the HARQs and the resource conflict indication information is to-be-sent information, high-priority information in the first information is preferentially sent on the first resource; or if highest-priority information in the HARQs and the resource conflict indication information is to-be-received information, high-priority information in the second information is preferentially received on the second resource.

For example, a terminal determines, in ascending order of priority values of the resource conflict indication information and the HARQs, a quantity of pieces of to-be-sent resource conflict indication information and a quantity of to-be-sent HARQs.

That high-priority information in the first information is preferentially sent on the first resource can preferentially ensure transmission reliability of high-priority data, and avoid performance deterioration of high-priority transmission.

Similarly, that high-priority information in the second information is preferentially received on the second resource can preferentially ensure transmission reliability of high-priority data, and avoid performance deterioration of high-priority transmission.

It should be noted that when the HARQ and the resource conflict indication information are sent on the first resource, if a priority of the resource conflict indication information is the same as a priority of the HARQ (for example, priority levels are the same, or priority values are the same), the HARQ is preferentially sent.

For example, the resource of the to-be-sent resource conflict indication information and HARQ overlaps the resource of the to-be-received resource conflict indication information and HARQ in time domain (that is, the first information includes the HARQ and the resource conflict indication information, and the second information includes the HARQ and the resource conflict indication information). If highest-priority information in the HARQs and the resource conflict indication information is the to-be-sent HARQ or the to-be-sent resource conflict indication information, the HARQ and the resource conflict indication information are sent on the first resource. If highest-priority information in the HARQs and the resource conflict indication information is the to-be-received HARQ or the to-be-received resource conflict indication information, the HARQ and the resource conflict indication information are received on the second resource.

Alternatively, the resource of the to-be-sent resource conflict indication information and HARQ overlaps the resource of the to-be-received resource conflict indication information in time domain (that is, the first information includes the HARQ and the resource conflict indication information, and the second information includes the resource conflict indication information). If highest-priority information in the HARQs and the resource conflict indication information is the to-be-sent HARQ or the to-be-sent resource conflict indication information, the HARQ and the resource conflict indication information are sent on the first resource. If highest-priority information in the HARQs and the resource conflict indication information is the to-be-received resource conflict indication information, the resource conflict indication information is received on the second resource.

Alternatively, the resource of the to-be-sent resource conflict indication information and HARQ overlaps the resource of the to-be-received HARQ in time domain (that is, the first information includes the HARQ and the resource conflict indication information, and the second information includes the HARQ). If highest-priority information in the HARQs and the resource conflict indication information is the to-be-sent HARQ or the to-be-sent resource conflict indication information, the HARQ and the resource conflict indication information are sent on the first resource. If highest-priority information in the HARQs and the resource conflict indication information is the to-be-received HARQ, the HARQ is received on the second resource.

Alternatively, the resource of the to-be-sent resource conflict indication information overlaps the resource of the to-be-received resource conflict indication information and HARQ in time domain (that is, the first information includes the resource conflict indication information, and the second information includes the HARQ and the resource conflict indication information). If highest-priority information in the HARQs and the resource conflict indication information is the to-be-sent resource conflict indication information, the resource conflict indication information is sent on the first resource. If highest-priority information in the HARQs and the resource conflict indication information is the to-be-received HARQ or the to-be-received resource conflict indication information, the HARQ and the resource conflict indication information are received on the second resource.

Alternatively, the resource of the to-be-sent HARQ overlaps the resource of the to-be-received resource conflict indication information and HARQ in time domain (that is, the first information includes the HARQ, and the second information includes the HARQ and the resource conflict indication information). If highest-priority information in the HARQs and the resource conflict indication information is the to-be-sent HARQ, the HARQ is sent on the first resource. If highest-priority information in the HARQs and the resource conflict indication information is the to-be-received HARQ or the to-be-received resource conflict indication information, the HARQ and the resource conflict indication information are received on the second resource.

For example, if the priority of the HARQ is low, and the priority of the resource conflict indication information is high, it is considered that importance of the resource conflict indication information is equivalent to importance of the HARQ. In this case, whether to send the first information or receive the second information may be determined based on both the priorities of the resource conflict indication information and the priorities of the HARQs (to be specific, whether to send the first information on the first resource or receive the second information on the second resource is determined based on the priorities of the HARQs and the priorities of the resource conflict indication information). For example, a smaller priority value indicates a higher priority. A priority value of the highest-priority HARQ in the HARQs is greater than or equal to a first priority threshold (for example, a threshold 1), and a priority value of the highest-priority resource conflict indication information in the resource conflict indication information is less than or equal to a second priority threshold (for example, a threshold 2). Alternatively, a priority value of the highest-priority resource conflict indication information in the resource conflict indication information is less than or equal to a priority threshold (for example, a threshold 3). It is considered that the importance of the resource conflict indication information is equivalent to the importance of the HARQ. In this case, whether to send the first information on the first resource or receive the second information on the second resource is determined based on the priorities of the HARQs and the priorities of the resource conflict indication information. The foregoing priority thresholds may be set based on an actual requirement, and may be preconfigured or may be configured by an access network device (for example, a base station). For example, the access network device configures the priority threshold for the terminal by using radio resource control (radio resource control, RRC) signaling. This is not limited herein. For example, the threshold 1, the threshold 2, and the threshold 3 are preconfigured values or are configured by a network device in a resource pool. Threshold 1 and threshold 2 are two independent thresholds. The threshold 1 is used for determining whether the priority of the HARQ is low enough, and the threshold 2 is used for determining whether the priority of the RCI is high enough. When the priority of the HARQ is low and the priority of the resource conflict indication information is high, it is considered that the importance of the resource conflict indication information is equivalent to the importance of the HARQ. In this case, the priorities of the RCI and the priorities of the HARQs need to be mixed together to perform priority determining. The threshold 3 is used for determining whether the priority of the resource conflict indication information is high enough. When the priority of the resource conflict indication information is less than or equal to the threshold 3, it is considered that the priority of the resource conflict indication information is high enough, and the priorities of the resource conflict indication information and the priorities of the HARQs need to be mixed together to perform priority determining.

In an example, the priority of the resource conflict indication information may correspond to a priority value included in SCI associated with the resource conflict indication information (that is, a priority included in SCI corresponding to a resource indicated by the resource conflict indication information). The resource indicated by the resource conflict indication information is a conflicting resource indicated by the resource conflict indication information. The priority value included in the SCI may be understood as a value in a priority field included in the SCI.

For example, a priority value of the resource conflict indication information is equal to the priority value included in the SCI associated with the resource conflict indication information. It should be noted that a smaller priority value may indicate a higher priority, or a larger priority value may indicate a higher priority. This is not limited herein. For example, a smaller priority value indicates a higher priority. The priority value of the resource conflict indication information may alternatively be equal to a sum of the priority value included in the SCI associated with the resource indicated by the resource conflict indication information and a compensation value. The compensation value may be a positive integer greater than 0, and the priority value of the resource conflict indication information is less than or equal to 8. For example, if the priority value included in the SCI associated with the resource indicated by the resource conflict indication information is 4, and the compensation value is 2, the priority value of the resource conflict indication information is 6. For another example, if the priority value included in the SCI associated with the resource indicated by the resource conflict indication information is 7, and the compensation value is 2, the priority value of the resource conflict indication information is 8. Because the priority value of the HARQ is usually equal to a priority value included in SCI corresponding to the HARQ, in a HARQ and resource conflict indication information that correspond to a same piece of SCI, a priority of the HARQ can be higher than a priority of the resource conflict indication information by setting a compensation value. In this way, importance of the resource conflict indication information can be associated with importance of data corresponding to a resource indicated by the resource conflict indication information, so that the terminal determines, based on the importance of the data corresponding to the resource indicated by the resource conflict indication information, whether to send the resource conflict indication information or receive the resource conflict indication information. This helps improve transmission reliability of important data, and further ensures improvement of transmission reliability brought by the HARQ.

In another example, the priority of the resource conflict indication information may alternatively correspond to a quantity of data retransmission times corresponding to the resource indicated by the resource conflict indication information. For example, a larger quantity of data retransmission times corresponding to the resource indicated by the resource conflict indication information indicates a higher priority of the resource conflict indication information. Therefore, when sending and receiving of the resource conflict indication information conflict, the terminal can preferentially ensure transmission of resource conflict indication information whose indicated resource corresponds to a large quantity of data retransmission times. Therefore, it is convenient for the terminal that receives the resource conflict indication information to determine, in a timely manner based on the resource conflict indication information, that the large quantity of data retransmission times is caused because a resource conflict occurs in the resource used for data transmission, to improve data transmission reliability. The quantity of data retransmission times corresponding to the resource indicated by the resource conflict indication information may also be understood as a quantity of times of continuously receiving NACKs.

In another example, when there are a plurality of resources indicated by the resource conflict indication information, the priority of the resource conflict indication information may alternatively correspond to the quantity of resources indicated by the resource conflict indication information. For example, a larger quantity of resources indicated by the resource conflict indication information indicates a higher priority of the resource conflict indication information. For example, a priority of resource conflict indication information indicating three conflicting resources is higher than resource conflict indication information indicating one conflicting resource.

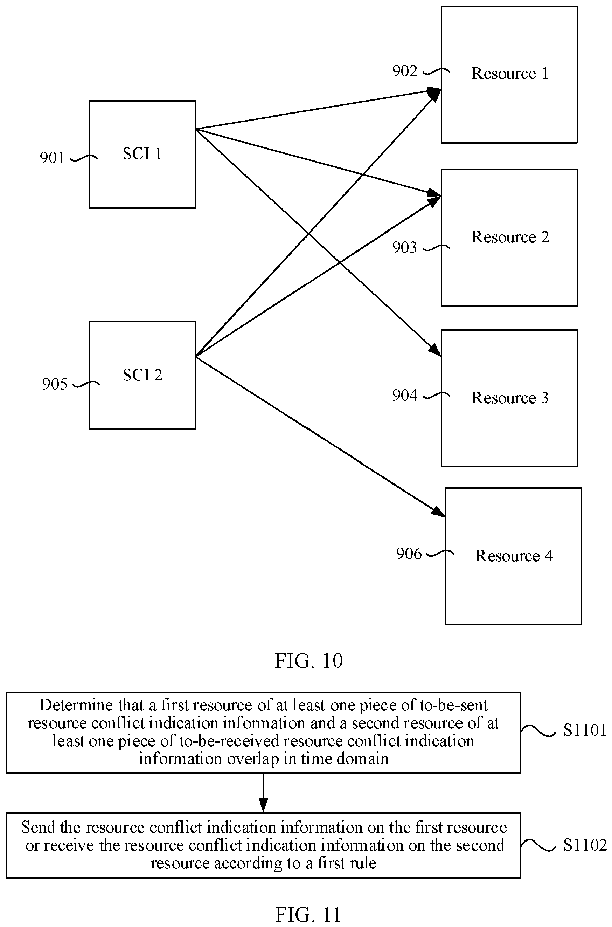

It should be noted that, that there are a plurality of resources indicated by the resource conflict indication information may mean that the resource conflict indication information indicates a plurality of conflicting resources. For example, as shown in FIG. 10, SCI 1 1001 sent by a terminal B indicates a resource 1 1002, a resource 2 1003, and a resource 3 1004, and SCI 2 1005 sent by a terminal C indicates a resource 1 1002, a resource 2 1003, and a resource 4 1006. In this case, if a terminal A receives the SCI 1 1001 and the SCI 2 1005, the terminal A may detect that resource conflicts occur in the resource 1 1002 and the resource 2 1003 indicated by the SCI 1 1001 of the terminal B and the SCI 2 1005 of the terminal C. The terminal A may send resource conflict indication information to at least one of the terminal B and the terminal C, to indicate that the resource conflict exists on the resource 1 1002 and the resource conflict exists on the resource 2 1003. In other words, the resource conflict indication information sent by the terminal A indicates two conflicting resources, that is, the resource conflict indication information indicates a plurality of resources.

Herein, a larger quantity of resources indicated by the resource conflict indication information indicates more useful information provided for a terminal that receives the resource conflict indication information. In this case, more gains are brought to the terminal that receives the resource conflict indication information. This can effectively improve data transmission reliability of the terminal that receives the resource conflict indication information.

In another example, the priority of the resource conflict indication information may alternatively correspond to a conflict type corresponding to the resource indicated by the resource conflict indication information. For example, an aperiodic resource conflict may be generally resolved through retransmission; however, a periodic resource conflict is generally persistent, and cannot be resolved through retransmission, or if retransmission is used for resolving the periodic resource conflict, there is large impact on data transmission. Therefore, resource conflict indication information indicating a periodic resource conflict is more meaningful. In other words, a priority of resource conflict indication information whose indicated resource conflict type is a periodic resource conflict (for example, the resource conflict indication information indicating a periodic resource conflict is referred to as first resource conflict indication information) is higher than a priority of resource conflict indication information whose indicated resource conflict type is an aperiodic resource conflict (for example, the resource conflict indication information indicating an aperiodic resource conflict is referred to as second resource conflict indication information). The periodic resource conflict is a conflict that occurs continuously between resources at a specific periodicity interval.

For another example, a priority of resource conflict indication information whose indicated resource conflict type is a persistent resource conflict (for example, resource conflict indication information indicating a persistent resource conflict is referred to as first resource conflict indication information) is higher than a priority of resource conflict indication information whose indicated resource conflict type is a non-persistent resource conflict (for example, resource conflict indication information indicating a non-persistent resource conflict is referred to as second resource conflict indication information). The persistent resource conflict is that a resource continuously conflicts within specific duration, or there is more than one conflicting resource, or a plurality of resources continuously conflict.

For another example, a priority of resource conflict indication information whose indicated resource conflict type is a time-frequency conflict is higher than a priority of resource conflict indication information whose indicated resource conflict type is a time-domain conflict.

In another example, the priority of the resource conflict indication information may alternatively correspond to a type of the resource indicated by the resource conflict indication information. In other words, the priority of the resource conflict indication information corresponds to a type of the resource conflict indication information. For example, a priority of resource conflict indication information whose indicated resource is a reserved resource (for example, resource conflict indication information indicating a resource conflict of a reserved resource is referred to as first resource conflict indication information) is higher than a priority of resource conflict indication information whose indicated resource is a used resource (for example, resource conflict indication information indicating a resource conflict of a used resource is referred to as second resource conflict indication information). In other words, a priority of resource conflict indication information whose type is a pre-conflict indication (or referred to as pre-conflict resource conflict indication information, pre-conflict indication information, or the like) is higher than a priority of resource conflict indication information whose type is a post-conflict indication (or referred to as post-conflict resource conflict indication information, post-conflict indication information, or the like). The pre-conflict indication may be a resource collision pre-indication (pre-indication), a pre-half duplex (pre-half duplex) indication, or the like. The post-conflict indication may be a resource collision post-indication (post-indication), a post-half duplex (post-half duplex) indication, or the like. Therefore, for example, a priority of resource conflict indication information whose type is a resource collision pre-indication is higher than a priority of resource conflict indication information whose type is a resource collision post-indication. A priority of resource conflict indication information whose type is a pre-half duplex indication is higher than a priority of resource conflict indication information whose type is a post-half duplex indication.

Post-conflict resource conflict indication information indicates a conflict of a used resource. Assuming that a conflict of a used resource affects data transmission reliability, a data sender corresponding to the conflicting resource retransmits data, and a resource conflict does not necessarily occur in the retransmitted resource. Pre-conflict resource conflict indication information indicates a conflict of a reserved resource, and the reserved resource is a resource that is not used. The resource conflict indication information of the reserved resource can avoid a resource conflict. Therefore, a priority of the pre-conflict resource conflict indication information is set to be higher than that of the post-conflict resource conflict indication information, so that it can be ensured that the pre-conflict resource conflict indication information is preferentially transmitted. Therefore, transmission reliability of data corresponding to the reserved resource, namely, transmission reliability of to-be-transmitted data, is improved.

It should be noted that the foregoing examples of the priorities of the resource conflict indication information may be combined with each other. This is not limited herein.

For example, when quantities of data retransmission times corresponding to resources indicated by resource conflict indication information are the same, priorities of the resource conflict indication information may be further determined with reference to priority values included in SCI associated with the resources indicated by the resource conflict indication information.

For another example, when quantities of resources indicated by resource conflict indication information are equal, priorities of the resource conflict indication information may be further determined with reference to priority values included in SCI associated with the resources indicated by the resource conflict indication information.

For another example, when types of resource conflict indication information are the same, priorities of the resource conflict indication information may be further determined with reference to priority values included in SCI associated with resources indicated by the resource conflict indication information.

For another example, when conflict types of resources indicated by resource conflict indication information are the same, priorities of the resource conflict indication information may be further determined with reference to priority values included in SCI associated with the resources indicated by the resource conflict indication information. For example, priorities of resource conflict indication information whose indicated resource conflict types are all periodic resource conflicts may be further determined based on priority values included in SCI associated with resources indicated by the resource conflict indication information. For another example, priorities of resource conflict indication information whose indicated resource conflict types are all aperiodic resource conflicts may be further determined based on priority values included in SCI associated with resources indicated by the resource conflict indication information. For another example, priorities of resource conflict indication information whose indicated resource conflict types are all persistent resource conflicts may be further determined based on priority values included in SCI associated with resources indicated by the resource conflict indication information. For another example, priorities of resource conflict indication information whose indicated resource conflict types are all single resource conflicts may be further determined based on priority values included in SCI associated with resources indicated by the resource conflict indication information.

In this embodiment of this application, when the first information sent on the first resource includes the HARQ and the resource conflict indication information, a quantity of pieces of resource conflict indication information sent on the first resource may be less than or equal to an upper limit of a quantity of pieces of sent resource conflict indication information; or a total quantity of pieces of resource conflict indication information and HARQs that are sent on the first resource may be less than or equal to an upper limit of a total quantity of pieces of resource conflict indication information and HARQs that are sent.

In an example, the terminal may sort the resource conflict indication information and the HARQs in descending order of the priorities of the resource conflict indication information and the priorities of the HARQs. The priority of the HARQ is higher than the priority of the resource conflict indication information, to be specific, when the resource conflict indication information conflicts with the HARQ, the HARQ is preferentially sent. If a sum of a quantity of to-be-sent HARQs and a quantity of pieces of to-be-sent resource conflict indication information is greater than the upper limit of the total quantity of pieces of resource conflict indication information and HARQs that are sent, the terminal sends the first M pieces of information in an order of the HARQs and the resource conflict indication information, where M is equal to the upper limit of the quantity of pieces of resource conflict indication information and HARQs that are sent. In other words, if the quantity of to-be-sent HARQs is less than the upper limit of the total quantity of pieces of resource conflict indication information and HARQs that are sent, all the to-be-sent HARQs are sent, and a remaining quantity of pieces of resource conflict indication information that can be sent are sent. For example, if the upper limit of the total quantity of pieces of resource conflict indication information and HARQs that are sent is 12, a quantity of to-be-sent HARQs is 8, and a quantity of pieces of to-be-sent conflict indication information is 6, the terminal sends the eight HARQs and the first four pieces of to-be-sent resource conflict indication information sorted based on priorities. If the quantity of to-be-sent HARQs is greater than or equal to the upper limit of the total quantity of pieces of resource conflict indication information and HARQs that are sent, the terminal sends HARQs of only the upper limit of the total quantity of pieces of resource conflict indication information and HARQs that are sent. If a sum of a quantity of to-be-sent HARQs and a quantity of pieces of to-be-sent resource conflict indication information is less than or equal to the upper limit of the total quantity of pieces of resource conflict indication information and HARQs that are sent, the terminal sends all of the to-be-sent HARQs and the to-be-sent resource conflict indication information.

It should be noted that the upper limit of the total quantity of pieces of resource conflict indication information and HARQs that are sent is a sending capability of the terminal. A capability of the upper limit of the total quantity of pieces of resource conflict indication information and HARQs and a capability of an upper limit of a quantity of sent PSFCHs may be independent. In other words, the upper limit of the total quantity of pieces of resource conflict indication information and HARQs that are sent and the upper limit of the quantity of sent PSFCHs are two terminal capabilities. The upper limit of the total quantity of pieces of resource conflict indication information and HARQs that are sent may alternatively be the upper limit of the quantity of sent PSFCHs. The upper limit of the total quantity of pieces of resource conflict indication information and HARQs that are sent may be reported by the terminal to the network device or stored in the terminal.

In another example, the terminal may sort the resource conflict indication information in descending order of the priorities of the resource conflict indication information, and sort the HARQs in descending order of the priorities of HARQs. If the quantity of to-be-sent HARQs is greater than an upper limit of a quantity of sent HARQs, the terminal sends the first X HARQs in an order of the HARQs, where X is equal to the upper limit of the quantity of sent HARQs. If the quantity of to-be-sent HARQs is less than or equal to the upper limit of the quantity of sent HARQs, the terminal sends all the to-be-sent HARQs. If the quantity of pieces of to-be-sent resource conflict indication information is greater than the upper limit of the quantity of pieces of sent resource conflict indication information, the terminal sends the first Y pieces of resource conflict indication information in an order of the resource conflict indication information, where Y is equal to the upper limit of the quantity of pieces of sent resource conflict indication information. If the quantity of pieces of to-be-sent resource conflict indication information is less than or equal to the upper limit of the quantity of pieces of sent resource conflict indication information, the terminal sends all the to-be-sent resource conflict indication information. For example, if the upper limit of the quantity of sent HARQs is 12, the quantity of to-be-sent HARQs is 18, the upper limit of the quantity of pieces of sent resource conflict indication information is 10, and the quantity of pieces of to-be-sent conflict indication information is 12, the terminal sends the first 12 sorted HARQs and the first 10 pieces of sorted resource conflict indication information.

It should be noted that in the foregoing example, the sum of the quantity of HARQs sent by the terminal and the quantity of pieces of resource conflict indication information sent by the terminal may alternatively be less than or equal to the upper limit of the total quantity of pieces of resource conflict indication information and HARQs that are sent. This is not limited herein.

The upper limit of the quantity of pieces of sent resource conflict indication information is a sending capability of the terminal. A capability of the upper limit of the quantity of pieces of sent resource conflict indication information and the capability of the upper limit of the quantity of sent PSFCHs may be independent. In other words, the upper limit of the quantity of pieces of sent resource conflict indication information and the upper limit of the quantity of sent PSFCHs are two terminal capabilities. The upper limit of the quantity of pieces of sent resource conflict indication information may alternatively be the upper limit of the quantity of sent PSFCHs. That is, the upper limit of the quantity of pieces of sent resource conflict indication information is the upper limit of the quantity of sent PSFCHs.

The upper limit of the quantity of pieces of sent resource conflict indication information and the upper limit of the quantity of sent HARQs may be two terminal capabilities. The upper limit of the total quantity of pieces of resource conflict indication information and HARQs that are sent may be a terminal capability. In other words, the upper limit of the quantity of pieces of sent resource conflict indication information, the upper limit of the quantity of sent HARQs, and the upper limit of the total quantity of pieces of resource conflict indication information and HARQs that are sent are three terminal capabilities. The upper limit of the quantity of sent HARQs and the upper limit of the total quantity of pieces of resource conflict indication information and HARQs that are sent may be reported by the terminal to the network device, or may be stored in the terminal.

In some possible implementations, a transmit power used by the terminal for each piece of resource conflict indication information may be a power based on a downlink path loss. For example, the transmit power used by the terminal for the resource conflict indication information satisfies the following formula:

$$P_{\mathrm{RCI}} = P_{0,RCI} + 10\,log_{10}(2^{\mu}) + \alpha_{RCI} \cdot PL$$

$P_{\mathrm{RCI}}$ is the transmit power of the resource conflict indication information, $P_{0,\ RCI}$, $\alpha_{\mathrm{RCI}}$, and $\mu$ are constants, and PL is the downlink path loss. Configurations of $P_{0,\ RCI}$, and $\alpha_{\mathrm{RCI}}$ can reuse $P_0$ and $\alpha$ of the power that is of a current PSFCH and that is obtained based on the downlink path loss. The configurations of $P_{0,\ RCI}$, and $\alpha_{\mathrm{RCI}}$ may be preconfigured, or may be configured by the access network device in the resource pool, or may be configured by using RRC signaling. $\mu$ is a subcarrier spacing, and may be a parameter that is preconfigured or is configured by the access network device in the resource pool.

In some other possible implementations, transmit powers of the resource conflict indication information and the HARQs do not exceed a total power upper limit determined based on a quantity of pieces of resource conflict indication information and a quantity of HARQs.

In some other possible implementations, a quantity of pieces of to-be-sent resource conflict indication information and a quantity of to-be-sent HARQs are determined, in ascending order of the priority values of the resource conflict indication information and the HARQs, based on at least one of the upper limit of the quantity of pieces of sent resource conflict indication information, the upper limit of the quantity of sent HARQs, the upper limit of the total quantity of pieces of resource conflict indication information and HARQs that are sent, an upper limit of a transmit power of the resource conflict indication information, an upper limit of a transmit power of the HARQ, and the upper limit of the total transmit power of the resource conflict indication information and the HARQs.

In some other possible implementations, a transmit power of resource conflict indication information is an equally divided power of a maximum transmit power of resource conflict indication information.

For example, due to limitation of a maximum transmit power of the terminal, when a total transmit power of the resource conflict indication information exceeds the maximum transmit power, a specific quantity of pieces of resource conflict indication information may be selected based on the priorities of the resource conflict indication information. Then, the maximum transmit power is equally divided based on the quantity of pieces of selected resource conflict indication information, and the selected resource conflict indication information is sent by using the equally divided power as a transmit power. For example, the transmit power of the resource conflict indication information may satisfy the following formula:

$$P = P_{\mathrm{CMAX}} - 10\,log_{10}(N_{Tx,RCI})$$

P is the transmit power of the resource conflict indication information, $P_{\mathrm{CMAX}}$ is the maximum transmit power, and $N_{Tx,\ RCI}$ is the quantity of pieces of to-be-sent resource conflict indication information, namely, the quantity of pieces of resource conflict indication information that need to be sent and that are selected based on the priorities.

For example, a specific quantity of pieces of resource conflict indication information are selected based on the priorities of the resource conflict indication information for sending, and high-priority resource conflict indication may be preferentially sent. The quantity of pieces of selected resource conflict indication information may be the upper limit of the quantity of pieces of sent resource conflict indication information.

The transmit power of the resource conflict indication information is determined in an equal power division manner, so that the resource conflict indication information can be sent to a maximum extent, and a high transmit power can be ensured. Therefore, reliability of sending the resource conflict indication information is improved.

In some other possible implementations, a transmit power used by the terminal for each piece of resource conflict indication information may be a power obtained by equally dividing a maximum transmit power based on a quantity of sent HARQs and a quantity of pieces of sent resource conflict indication information. For example, the following formula may be satisfied:

$$P = P_{\mathrm{CMAX}} - 10\,log_{10}(N_{Tx,HARQ} + N_{Tx,RCI})$$

P is the transmit power of the resource conflict indication information, $P_{\mathrm{CMAX}}$ is the maximum transmit power, $N_{tx,\ HARQ}$ is the quantity of sent HARQs, and $N_{tx,\ RCI}$ is the quantity of pieces of sent resource conflict indication information.

A transmit power of the HARQ and the transmit power of the resource conflict indication information are set in an equal power division manner, so that the resource conflict indication information and the HARQ can be sent to a maximum extent, so that a sum of the transmit powers of the two is not greater than the maximum transmit power, a high transmit power can be ensured, and reliability of sending the HARQ and the resource conflict indication information can be improved.

In some other possible implementations, if a total transmit power used by the terminal for the resource conflict indication information and the HARQ is greater than a maximum transmit power, a specific quantity of pieces of resource conflict indication information may be selected based on the priorities of the resource conflict indication information, and a specific quantity of HARQs are selected based on the priorities of the HARQs, so that when the selected HARQs and the selected resource conflict indication information are sent by using a power based on a downlink path loss, a power sum can be less than the maximum transmit power.

In some other possible implementations, the terminal may alternatively combine the foregoing possible implementations. For example, the resource conflict indication information and the HARQ are sent by using a smaller value of the power based on the downlink path loss and the equally divided power as the transmit power. For another example, if $P_0$, $\alpha$, and $\mu$ in the formula for calculating the power for sending the HARQ based on the downlink path loss are not configured, the resource conflict indication information and the HARQ may be sent based on the equally divided power.

It should be noted that, in some other possible implementations, the terminal may alternatively send the HARQ by using a power based on a downlink path loss, and send the resource conflict indication information based on a remaining power. The remaining power is a total transmit power of the HARQ and the resource conflict indication information minus a total transmit power of the HARQ. The remaining power may be equally divided for sending the resource conflict indication information. Alternatively, high-priority resource conflict indication information may be preferentially sent, and a power of the resource conflict indication information is a power based on a downlink path loss. This is not limited herein.

In this embodiment of this application, when the second information received on the second resource includes the HARQ and the resource conflict indication information, a quantity of pieces of resource conflict indication information received on the second resource may be less than or equal to an upper limit of a quantity of pieces of received resource conflict indication information, or a total quantity of pieces of resource conflict indication information and HARQs that are received on the second resource is less than or equal to an upper limit of a total quantity of pieces of resource conflict indication information and HARQs that are received.

In an example, the terminal may sort the resource conflict indication information and the HARQs in descending order of the priorities of the resource conflict indication information and the priorities of the HARQs. The priority of the HARQ is higher than the priority of the resource conflict indication information, that is, the HARQ is preferentially received. If a sum of a quantity of to-be-received HARQs and a quantity of pieces of to-be-received resource conflict indication information is greater than the upper limit of the total quantity of pieces of resource conflict indication information and HARQs that are received, the terminal receives the first N pieces of information in an order of the HARQs and the resource conflict indication information, where N is equal to the upper limit of the total quantity of pieces of resource conflict indication information and HARQs that are received. In other words, if the quantity of to-be-received HARQs is less than the upper limit of the total quantity of pieces of resource conflict indication information and HARQs that are received, all the to-be-received HARQs are received, and a remaining quantity of pieces of resource conflict indication information that can be received are received. If the quantity of to-be-received HARQs is greater than or equal to the upper limit of the total quantity of pieces of resource conflict indication information and HARQs that are received, the terminal receives only HARQs of the upper limit of the total quantity of pieces of resource conflict indication information and HARQs that are received. If a sum of a quantity of to-be-received HARQs and a quantity of pieces of to-be-received resource conflict indication information is less than or equal to the upper limit of the total quantity of pieces of resource conflict indication information and HARQs that are received, the terminal receives all of the to-be-received HARQs and the to-be-received resource conflict indication information. For example, if the upper limit of the total quantity of pieces of resource conflict indication information and HARQs that are received is 12, a quantity of to-be-received HARQs is 8, and a quantity of pieces of to-be-received resource conflict indication information is 6, the terminal receives the eight HARQs and the first four pieces of to-be-received resource conflict indication information sorted based on priorities.

It should be noted that the upper limit of the total quantity of pieces of resource conflict indication information and HARQs that are received is a receiving capability of the terminal. A capability of the upper limit of the total quantity of pieces of resource conflict indication information and HARQs and a capability of an upper limit of a quantity of received PSFCHs may be independent. In other words, the upper limit of the total quantity of pieces of resource conflict indication information and HARQs that are received and the upper limit of the quantity of received PSFCHs are two terminal capabilities. The upper limit of the total quantity of pieces of resource conflict indication information and HARQs that are received may alternatively be the upper limit of the quantity of received PSFCHs. The upper limit of the total quantity of pieces of resource conflict indication information and HARQs that are received may be reported by the terminal to the network device or stored in the terminal.

In another example, the terminal may sort the resource conflict indication information in descending order of the priorities of the resource conflict indication information, and sort the HARQs in descending order of the priorities of HARQs. If the quantity of to-be-received HARQs is greater than an upper limit of a quantity of received HARQs, the terminal receives the first X HARQs in an order of the HARQs, where X is equal to the upper limit of the quantity of received HARQs. If the quantity of to-be-received HARQs is less than or equal to an upper limit of a quantity of received HARQs, the terminal receives all the to-be-received HARQs. If the quantity of pieces of to-be-received resource conflict indication information is greater than the upper limit of the quantity of pieces of received resource conflict indication information, the terminal receives the first Y pieces of resource conflict indication information in an order of the resource conflict indication information, where Y is equal to the upper limit of the quantity of pieces of received resource conflict indication information. If the quantity of pieces of to-be-received resource conflict indication information is less than or equal to the upper limit of the quantity of pieces of received resource conflict indication information, the terminal receives all the to-be-received resource conflict indication information. For example, if the upper limit of the quantity of received HARQs is 12, the quantity of to-be-received HARQs is 18, the upper limit of the quantity of pieces of received resource conflict indication information is 10, and the quantity of pieces of to-be-received conflict indication information is 12, the terminal receives the first 12 sorted HARQs and the first 10 pieces of sorted resource conflict indication information.

It should be noted that in the foregoing example, the sum of the quantity of HARQs received by the terminal and the quantity of pieces of resource conflict indication information received by the terminal may alternatively be less than or equal to the upper limit of the total quantity of pieces of resource conflict indication information and HARQs that are received. This is not limited herein.

The upper limit of the quantity of pieces of received resource conflict indication information is a receiving capability of the terminal. A capability of the upper limit of the quantity of pieces of received resource conflict indication information and the capability of the upper limit of the quantity of received PSFCHs may be independent. In other words, the upper limit of the quantity of pieces of received resource conflict indication information and the upper limit of the quantity of received PSFCHs are two terminal capabilities. The upper limit of the quantity of pieces of received resource conflict indication information may alternatively be the upper limit of the quantity of received PSFCHs. That is, the upper limit of the quantity of pieces of received resource conflict indication information is the upper limit of the quantity of received PSFCHs.

The upper limit of the quantity of pieces of received resource conflict indication information and the upper limit of the quantity of received HARQs may be two terminal capabilities. The upper limit of the total quantity of pieces of resource conflict indication information and HARQs that are received may be a terminal capability. In other words, the upper limit of the quantity of pieces of received resource conflict indication information, the upper limit of the quantity of received HARQs, and the upper limit of the total quantity of pieces of resource conflict indication information and HARQs that are received are three terminal capabilities. The terminal capability may be reported by the terminal to the network device or stored in the terminal.

According to the method, a problem that a sending and receiving conflict is caused because the to-be-sent resource conflict indication information and/or HARQ and the to-be-received resource conflict indication information and/or HARQ overlap in time domain and cannot be simultaneously received and sent can be resolved. According to the method, stable and reliable data transmission can be ensured. Sending and receiving are determined based on the priorities of the HARQs, and the HARQ of the first information is preferentially sent or the HARQ of the second information is preferentially received, so that reliability brought by a basic HARQ mechanism can be ensured, and introduction of the resource conflict indication information does not affect a gain brought by the HARQ. On the premise of ensuring reliability brought by the HARQ, the resource conflict indication information is further used for improving data transmission reliability. Sending and receiving are determined based on high-priority information in the priorities of the HARQs and the priorities of the resource conflict indication information, so that reliability of high-priority transmission can be ensured.

**Embodiment 2**

FIG. 11 is a schematic flowchart of a resource conflict processing method. As shown in FIG. 11, the method may include the following S1101 and S 1102.

S1101: Determine that a first resource of at least one piece of to-be-sent resource conflict indication information and a second resource of at least one piece of to-be-received resource conflict indication information overlap in time domain.

The at least one piece of to-be-sent resource conflict indication information may be understood as at least one piece of resource conflict indication information that needs to be sent, or at least one piece of resource conflict indication information that may need to be sent.

The at least one piece of to-be-received resource conflict indication information may be understood as at least one piece of resource conflict indication information that needs to be received, or at least one piece of resource conflict indication information that may need to be received.

That a first resource of at least one piece of to-be-sent resource conflict indication information and a second resource of at least one piece of to-be-received resource conflict indication information overlap in time domain may be understood as that the first resource for sending the at least one piece of resource conflict indication information and the second resource for receiving the at least one piece of resource conflict indication information overlap in time domain, or may be understood as that the at least one piece of to-be-sent resource conflict indication information and the at least one piece of to-received resource conflict indication information overlap in time domain, or may be understood as that a channel for carrying the at least one piece of to-be-sent resource conflict indication information and a channel for carrying the at least one piece of to-be-received resource conflict indication information overlap in time domain.

For the channel for carrying the resource conflict indication information and the resource conflict indicated by the resource conflict indication information, refer to the descriptions of the channel for carrying the resource conflict indication information and the resource conflict indicated by the resource conflict indication information in S901 in the method shown in FIG. 9. Details are not described herein again.

S 1102: Send the resource conflict indication information on the first resource or receive the resource conflict indication information on the second resource according to a first rule.

In some possible implementations, the first rule may be: determining, based on priorities of the resource conflict indication information, whether to send the resource conflict indication information on the first resource or receive the resource conflict indication information on the second resource. For example, if highest-priority resource conflict indication information in the resource conflict indication information is to-be-sent resource conflict indication information, the resource conflict indication information is sent on the first resource; or if highest-priority resource conflict indication information in the resource conflict indication information is to-be-received resource conflict indication information, the resource conflict indication information is received on the second resource. The highest-priority resource conflict indication information in the resource conflict indication information is resource conflict indication information with a smallest priority value in the resource conflict indication information. For example, a smaller priority value on a sidelink indicates a higher priority. A range of the priority value is 1, 2, 3, 4, 5, 6, 7, and 8. If the priority value is 1, the priority is the highest. If the priority value is 8, the priority is the lowest. If to-be-sent resource conflict indication information is three pieces of resource conflict indication information whose priorities are 1, 4, and 6, and to-be-received resource conflict indication information is three pieces of resource conflict indication information whose priorities are 3, 6, and 7, highest-priority resource conflict indication information is the resource conflict indication information whose priority value is 1. In this case, the resource conflict indication information is sent.

For the priority of the resource conflict indication information, refer to the descriptions of the priority of the resource conflict indication information in S902 in the method shown in FIG. 9. Details are not described herein again.

In some other possible implementations, the first rule may alternatively be: sending the resource conflict indication information on the first resource. To be specific, when the first resource of the at least one piece of to-be-sent resource conflict indication information and the second resource of the at least one piece of to-be-sent resource conflict indication information overlap in time domain, a terminal sends the resource conflict indication information on the first resource.

After the terminal selects a resource, the selected resource is a resource that the terminal considers to be a low-interference resource. However, due to problems such as a hidden node and half-duplex, a conflict may occur in the resource selected by the terminal. After sending SCI, the terminal cannot determine whether another terminal can identify that a resource conflict exists on a resource indicated by the SCI of the terminal (for example, a resource used for sending the SCI or a reserved resource indicated by the SCI). In other words, it is uncertain whether the terminal can receive resource conflict indication information from the another terminal.

However, it is determined that the terminal sends resource conflict indication information when finding that a resource conflict exists on a resource indicated by SCI of the another terminal. In other words, sending resource conflict indication information by the terminal can improve data transmission reliability of another terminal, but the terminal may not necessarily receive resource conflict indication information when determining to receive the resource conflict indication information. Therefore, in this implementation, when sending and receiving of the resource conflict indication information conflict, the terminal sends the resource conflict indication information, to avoid a case in which the terminal actually does not receive the resource conflict indication information when predicting that the resource conflict indication information needs to be received.

In some other possible implementations, the first rule may alternatively be: determining, based on configuration information, whether to send the resource conflict indication information on the first resource or receive the resource conflict indication information on the second resource. The configuration information indicates to send the resource conflict indication information on the first resource or receive the resource conflict indication information on the second resource when the first resource and the second resource overlap in time domain. In other words, the terminal may determine, based on the indication of the configuration information, whether to send the resource conflict indication information or receive the resource conflict indication information. For example, the configuration information indicates the terminal to send the resource conflict indication information when a resource of the to-be-received resource conflict indication information and a resource of the to-be-sent resource conflict indication information overlap in time domain (that is, when sending and receiving of the resource conflict indication information conflict). When sending and receiving of the resource conflict indication information conflict, the terminal sends the resource conflict indication information based on the indication of the configuration information. For another example, the configuration information indicates the terminal to receive the resource conflict indication information when a resource of the to-be-received resource conflict indication information and a resource of the to-be-sent resource conflict indication information overlap in time domain (that is, when sending and receiving of the resource conflict indication information conflict). When sending and receiving of the resource conflict indication information conflict, the terminal receives the resource conflict indication information based on the indication of the configuration information.

It should be noted that the configuration information may be preconfigured, or may be configured by an access network device in a resource pool, or may be configured by using RRC signaling. In other words, the configuration information may be preconfigured in the terminal, or may be configured by the access network device (for example, a base station) for the terminal. For example, the access network device may configure the configuration information for the terminal by using RRC signaling.

In some other possible implementations, the first rule may alternatively be: determining, based on a quantity of data retransmission times corresponding to a resource indicated by the to-be-received resource conflict indication information, whether to send the resource conflict indication information on the first resource or receive the resource conflict indication information on the second resource. For example, if the quantity of data retransmission times corresponding to the resource indicated by the to-be-received resource conflict indication information is greater than or equal to a threshold (for example, a first threshold) (for example, a quantity of data retransmission times corresponding to a resource indicated by resource conflict indication information in the to-be-received resource conflict indication information is greater than or equal to the threshold), the resource conflict indication information is received on the second resource. If the quantity of data retransmission times corresponding to the resource indicated by the to-be-received resource conflict indication information is less than or equal to a threshold (for example, a first threshold) (for example, a quantity of data retransmission times corresponding to a resource indicated by resource conflict indication information in the to-be-received resource conflict indication information is less than or equal to the threshold), the resource conflict indication information is sent on the first resource. When the quantity of data retransmission times corresponding to the resource indicated by the to-be-received resource conflict indication information is equal to the threshold, the resource conflict indication information may be sent, or the resource conflict indication information may be received. This is not limited herein. It should be noted that the threshold may be preconfigured, or may be configured by the access network device in the resource pool, or may be configured by using RRC signaling. In other words, the threshold may be preconfigured in the terminal, or may be configured by the access network device (for example, a base station) for the terminal. For example, the access network device may configure the threshold for the terminal by using RRC signaling.

If a quantity of data retransmission times corresponding to a resource indicated by resource conflict indication information in the to-be-received resource conflict indication information is greater than the threshold, it indicates that a plurality of times of data transmission of the terminal fail, and there is a high probability that the terminal does not discover a potential resource conflict due to a limitation of the terminal. Therefore, the terminal needs to determine, by receiving the corresponding resource conflict indication information, whether the large quantity of data retransmission times is caused by a resource conflict. In this case, if sending and receiving of the resource conflict indication information conflict, the terminal needs to preferentially receive the resource conflict indication information, to improve data transmission reliability of the terminal.

In this embodiment of this application, sending the resource conflict indication information on the first resource may be preferentially sending, on the first resource, high-priority resource conflict indication information in the to-be-sent resource conflict indication information. A quantity of pieces of resource conflict indication information sent on the first resource may be less than or equal to an upper limit of a quantity of pieces of sent resource conflict indication information.

For example, the terminal may sort the resource conflict indication information in descending order of the priorities of the resource conflict indication information. If a quantity of pieces of to-be-sent resource conflict indication information is greater than the upper limit of the quantity of pieces of sent resource conflict indication information, the terminal sends only the first M pieces of sorted resource conflict indication information, where M is equal to the upper limit of the quantity of pieces of sent resource conflict indication information. For example, if the upper limit of the quantity of pieces of sent resource conflict indication information is 12, and the quantity of pieces of to-be-sent resource conflict indication information is 18, the terminal sends the first 12 pieces of resource conflict indication information in an order of the to-be-sent resource conflict indication information. If the quantity of pieces of to-be-sent resource conflict indication information is less than or equal to the upper limit of the quantity of pieces of sent resource conflict indication information, the terminal sends all the to-be-sent resource conflict indication information.

It should be noted that the upper limit of the quantity of pieces of sent resource conflict indication information is a sending capability of the terminal. A capability of the upper limit of the quantity of pieces of sent resource conflict indication information and a capability of an upper limit of a quantity of sent PSFCHs may be independent. In other words, the upper limit of the quantity of pieces of sent resource conflict indication information and the upper limit of the quantity of sent PSFCHs are two terminal capabilities. The upper limit of the quantity of pieces of sent resource conflict indication information may alternatively be the upper limit of the quantity of sent PSFCHs. That is, the upper limit of the quantity of pieces of sent resource conflict indication information is the upper limit of the quantity of sent PSFCHs. The upper limit of the quantity of pieces of sent resource conflict indication information may be reported by the terminal to a network device or stored in the terminal.

In some possible implementations, a transmit power used by the terminal for each piece of resource conflict indication information may be a power based on a downlink path loss. For example, the transmit power used by the terminal for the resource conflict indication information satisfies the following formula:

$$P = P_0 + 10\,log(2^\mu) + \alpha \cdot PL$$

P is the transmit power of the resource conflict indication information; $P_0$, $\alpha$, and $\mu$ are constants; and PL is a maximum transmit power. Configurations of $P_0$ and $\alpha$ can reuse $P_0$ and $\alpha$ of the power that is of a current PSFCH and that is based on the downlink path loss. The configurations of $P_0$ and $\alpha$ may be preconfigured, or may be configured by the access network device in the resource pool, or may be configured by using RRC signaling. $\mu$ is a subcarrier spacing, and may be a parameter that is preconfigured or is configured by the access network device in the resource pool.

In some other possible implementations, a transmit power of resource conflict indication information is an equally divided power of a maximum transmit power of resource conflict indication information.

For example, due to limitation of a maximum transmit power of the terminal, when a total transmit power of the resource conflict indication information exceeds the maximum transmit power, a specific quantity of pieces of resource conflict indication information may be selected based on the priorities of the resource conflict indication information. Then, the maximum transmit power is equally divided based on the quantity of pieces of selected resource conflict indication information, and the selected resource conflict indication information is sent by using a power value obtained by equally dividing the maximum transmit power as a transmit power. For example, the transmit power of the resource conflict indication information may satisfy the following formula:

$$P = P_{\mathrm{CMAX}} - 10\,log_{10}(N_{Tx,RCI})$$

P is the transmit power of the resource conflict indication information, $P_{\mathrm{CMAX}}$ is the maximum transmit power, and $N_{Tx,\,RCI}$ is the quantity of pieces of to-be-sent resource conflict indication information, namely, the quantity of pieces of resource conflict indication information that need to be sent and that are selected based on the priorities.

For example, a specific quantity of pieces of resource conflict indication information are selected based on the priorities of the resource conflict indication information for sending, and high-priority resource conflict indication may be preferentially sent. The quantity of pieces of selected resource conflict indication information may be the upper limit of the quantity of pieces of sent resource conflict indication information.

The transmit power of the resource conflict indication information is set in an equal power division manner, so that the resource conflict indication information can be sent to a maximum extent, and a high transmit power can be ensured. Therefore, reliability of sending the resource conflict indication information is improved.

In some other possible implementations, if a total transmit power used by the terminal for the resource conflict indication information is greater than a maximum transmit power, a specific quantity of pieces of resource conflict indication information may be selected based on the priorities of the resource conflict indication information, so that when the selected resource conflict indication information is sent by using a power based on a downlink path loss, a power sum can be less than the maximum transmit power.

In some other possible implementations, the terminal may alternatively combine the foregoing possible implementations. For example, the resource conflict indication information is sent by using a smaller value of the power based on the downlink path loss and the equally divided power as the transmit power. For another example, if $P_0$, $\alpha$, and $\mu$ in the downlink path loss-based power calculation formula are not configured, the resource conflict indication information may be sent based on the equally divided power.

In this embodiment of this application, receiving the resource conflict indication information on the second resource may be preferentially receiving, on the second resource, high-priority resource conflict indication information in the to-be-received resource conflict indication information. A quantity of pieces of resource conflict indication information received on the second resource may be less than or equal to an upper limit of a quantity of pieces of received resource conflict indication information.

For example, the terminal may sort the resource conflict indication information in descending order of the priorities of the resource conflict indication information. If a quantity of pieces of to-be-received resource conflict indication information is greater than the upper limit of the quantity of pieces of received resource conflict indication information, the terminal receives only the first N pieces of sorted resource conflict indication information, where N is equal to the upper limit of the quantity of pieces of received resource conflict indication information. For example, if the upper limit of the total quantity of pieces of received resource conflict indication information is 12, and the quantity of pieces of to-be-received resource conflict indication information is 18, the terminal receives the first 12 pieces of resource conflict indication information in an order of the to-be-received resource conflict indication information. If the quantity of pieces of to-be-received resource conflict indication information is less than or equal to the upper limit of the quantity of pieces of received resource conflict indication information, the terminal receives all the to-be-received resource conflict indication information.

It should be noted that the upper limit of the quantity of pieces of received resource conflict indication information is a receiving capability of the terminal. A capability of the upper limit of the quantity of pieces of received resource conflict indication information and a capability of an upper limit of a quantity of received PSFCHs may be independent. In other words, the upper limit of the quantity of pieces of received resource conflict indication information and the upper limit of the quantity of received PSFCHs are two terminal capabilities. The upper limit of the quantity of pieces of received resource conflict indication information may alternatively be the upper limit of the quantity of received PSFCHs. That is, the upper limit of the quantity of pieces of received resource conflict indication information is the upper limit of the quantity of received PSFCHs. The upper limit of the quantity of pieces of received resource conflict indication information may be reported by the terminal to a network device or stored in the terminal.

For the priority of the resource conflict indication information, refer to the related descriptions of the priority of the resource conflict indication information. Details are not described herein again.

According to the method, a problem that a sending and receiving conflict is caused because the to-be-sent resource conflict indication information and the to-be-received resource conflict indication information overlap in time domain and cannot be simultaneously received and sent can be resolved. According to the method, stable and reliable data transmission can be ensured.

**Embodiment 3**

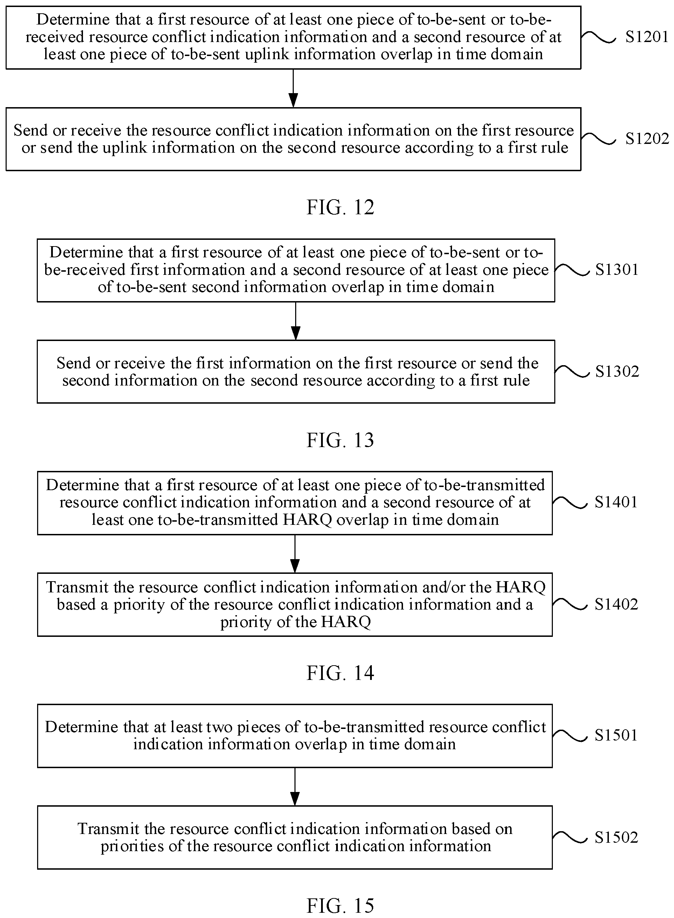

FIG. 12 is a schematic flowchart of a resource conflict processing method. As shown in FIG. 12, the method may include the following S1201 and S1202.

S1201: Determine that a first resource of at least one piece of to-be-sent or to-be-received resource conflict indication information and a second resource of at least one piece of to-be-sent uplink information overlap in time domain.

For example, it is determined that the first resource of the at least one piece of to-be-sent resource conflict indication information and the second resource of the at least one piece of to-be-sent uplink information overlap in time domain; or it is determined that the first resource of the at least one piece of to-be-received resource conflict indication information and the second resource of the at least one piece of to-be-sent uplink information overlap in time domain.

The at least one piece of to-be-received resource conflict indication information may be understood as at least one piece of resource conflict indication information that needs to be received, or at least one piece of resource conflict indication information that may need to be received.

The at least one piece of to-be-sent resource conflict indication information may be understood as at least one piece of resource conflict indication information that needs to be sent, or at least one piece of resource conflict indication information that may need to be sent.

The at least one piece of to-be-sent uplink information may be understood as at least one piece of uplink information that needs to be sent, or at least one piece of uplink information that may need to be sent.

That a first resource of at least one piece of to-be-received resource conflict indication information and a second resource of at least one piece of to-be-sent uplink information overlap in time domain may be understood as that the first resource for receiving the at least one piece of resource conflict indication information and the second resource for sending the at least one piece of uplink information overlap in time domain, or may be understood as that the at least one piece of to-be-received resource conflict indication information and the at least one piece of to-be-sent uplink information overlap in time domain, or may be understood as that a channel for carrying the at least one piece of to-be-received resource conflict indication information and a channel for carrying the at least one piece of to-be-sent uplink information overlap in time domain.

That a first resource of at least one piece of to-be-sent resource conflict indication information and a second resource of at least one piece of to-be-sent uplink information overlap in time domain may be understood as that the first resource for sending the at least one piece of resource conflict indication information and the second resource for sending the at least one piece of uplink information overlap in time domain, or may be understood as that the at least one piece of to-be-sent resource conflict indication information and the at least one piece of to-be-sent uplink information overlap in time domain, or may be understood as that a channel for carrying the at least one piece of to-be-sent resource conflict indication information and a channel for carrying the at least one piece of to-be-sent uplink information overlap in time domain.

For the channel for carrying the resource conflict indication information and the resource conflict indicated by the resource conflict indication information, refer to the descriptions of the channel for carrying the resource conflict indication information and the resource conflict indicated by the resource conflict indication information in S901 in the method shown in FIG. 9. Details are not described herein again.

S 1202: Send or receive the resource conflict indication information on the first resource or send the uplink information on the second resource according to a first rule.

For example, the first rule may be: determining, based on a priority of the resource conflict indication information, whether to send or receive the resource conflict indication information on the first resource or to send the uplink information on the second resource. In other words, it is determined, based on the priority of the resource conflict indication information, whether to send the resource conflict indication information on the first resource or send the uplink information on the second resource; or it is determined, based on the priority of the resource conflict indication information, whether to receive the resource conflict indication information on the first resource or send the uplink information on the second resource.

In an example, the terminal may determine, by comparing a priority value of the resource conflict indication information with a priority threshold, whether to send the resource conflict indication information or the uplink information.

For example, a smaller priority value indicates a higher priority, and uplink information transmission is high-priority transmission. If a priority value of highest-priority resource conflict indication information in the resource conflict indication information is less than or equal to a priority threshold (for example, a threshold 1), the resource conflict indication information is sent or received on the first resource. If the priority value of the highest-priority resource conflict indication information in the resource conflict indication information is greater than or equal to the priority threshold, the uplink information is sent on the second resource. When the priority value of the highest-priority resource conflict indication information is equal to the priority threshold, the resource conflict indication information may be sent or received on the first resource, or the uplink information may be sent on the second resource. This is not limited herein.

For another example, a smaller priority value indicates a higher priority, and uplink information transmission is low-priority transmission. If a priority value of highest-priority resource conflict indication information in the resource conflict indication information is less than or equal to a priority threshold (for example, a threshold 2), the resource conflict indication information is sent or received on the first resource. If the priority value of the highest-priority resource conflict indication information in the resource conflict indication information is greater than or equal to the priority threshold, the uplink information is sent on the second resource. When the priority value of the highest-priority resource conflict indication information is equal to the priority threshold, the resource conflict indication information may be sent or received on the first resource, or the uplink information may be sent on the second resource. This is not limited herein.

For example, the threshold 1 and the threshold 2 are preconfigured values or are configured by a network device in a resource pool. Threshold 1 and threshold 2 are two independent thresholds. Both the threshold 1 and the threshold 2 may be used for determining whether the priority of the resource conflict indication information is high enough. When the priority of the resource conflict indication information is high, it is considered that a sidelink is important. In this case, the resource conflict indication information needs to be preferentially received or sent.

For a specific process of sending the resource conflict indication information on the first resource, refer to related descriptions of sending the resource conflict indication information on the first resource in S1102 in the method shown in FIG. 11. For a specific process of receiving the resource conflict indication information on the first resource, refer to related descriptions of receiving the resource conflict indication information on the second resource in S1102 in the method shown in FIG. 11. In addition, for the priority of the resource conflict indication information, refer to the descriptions of the priority of the resource conflict indication information in S902 in the method shown in FIG. 9. Details are not described herein again.

For example, the first rule may alternatively be: if the first resource of the at least one piece of to-be-received resource conflict indication information and the second resource of the at least one piece of to-be-sent uplink information overlap in time domain, determining to send the uplink information on the second resource. In other words, a priority of the uplink information is higher than the priority of the resource conflict indication information. This is because after the terminal selects a resource, the selected resource is a resource that the terminal considers to be a low-interference resource. However, due to problems such as a hidden node and half-duplex, a conflict may occur in the resource selected by the terminal. After sending SCI, the terminal cannot determine whether another terminal can identify that a resource conflict exists on a resource indicated by the SCI of the terminal (for example, a resource used for sending the SCI or a reserved resource indicated by the SCI). In other words, it is uncertain whether the terminal can receive resource conflict indication information from the another terminal. The terminal may not receive the resource conflict indication information when determining to receive the resource conflict indication information. However, it is determined that the terminal sends the uplink information. Therefore, the uplink information needs to be preferentially sent.

According to the method, a conflict occurs in time domain resources of the to-be-sent or to-be-received resource conflict indication information and the to-be-sent uplink information. Due to a limitation on sending and receiving capabilities and a limitation on a transmit power of the terminal, in this method, sending or receiving of the sidelink information or sending of the uplink information is determined by determining a priority of sidelink transmission, and the priority of the sidelink transmission is determined by using the priority value threshold. In this way, stability and reliability of high-priority data transmission can be ensured.

**Embodiment 4**

FIG. 13 is a schematic flowchart of a resource conflict processing method. As shown in FIG. 13, the method may include the following S1301 and S1302.

S1301: Determine that a first resource of at least one piece of to-be-sent or to-be-received first information and a second resource of at least one piece of to-be-sent second information overlap in time domain.

For example, it is determined that the first resource of the at least one piece of to-be-received first information and the second resource of the at least one piece of to-be-sent second information overlap in time domain; or it is determined that the first resource of the at least one piece of to-be-sent first information and the second resource of the at least one piece of to-be-sent second information overlap in time domain.

The first information may include a HARQ and resource conflict indication information, and the second information may include uplink information.

The at least one piece of to-be-sent first information may be understood as at least one piece of first information that needs to be sent, or at least one piece of first information that may need to be sent.

The at least one piece of to-be-received first information may be understood as at least one piece of first information that needs to be received, or at least one piece of first information that may need to be received.

The at least one piece of to-be-sent second information may be understood as at least one piece of second information that needs to be sent, or at least one piece of second information that may need to be sent.

That the first resource of the at least one piece of to-be-received first information and the second resource of the at least one piece of to-be-sent second information overlap in time domain may be understood as that the first resource for receiving the at least one piece of first information and the second resource for sending the at least one piece of second information overlap in time domain, or may be understood as that the at least one piece of to-be-received first information and the at least one piece of to-be-sent second information overlap in time domain, or may be understood as that a channel for carrying the at least one piece of to-be-received first information and a channel for carrying the at least one piece of to-be-sent second information overlap in time domain.

That the first resource of the at least one piece of to-be-sent first information and the second resource of the at least one piece of to-be-sent second information overlap in time domain may be understood as that the first resource for sending the at least one piece of first information and the second resource for sending the at least one piece of second information overlap in time domain, or may be understood as that the at least one piece of to-be-sent first information and the at least one piece of to-be-sent second information overlap in time domain, or may be understood as that a channel for carrying the at least one piece of to-be-sent first information and a channel for carrying the at least one piece of to-be-sent second information overlap in time domain.

For the channel for carrying the resource conflict indication information and the resource conflict indicated by the resource conflict indication information, refer to the descriptions of the channel for carrying the resource conflict indication information and the resource conflict indicated by the resource conflict indication information in S901 in the method shown in FIG. 9. Details are not described herein again.

S1302: Send or receive the first information on the first resource or send the second information on the second resource according to a first rule.

For example, the first rule may be: determining, based on a priority of the resource conflict indication information and a priority of the HARQ, whether to send or receive the first information on the first resource or to send the second information on the second resource. In other words, it is determined, based on the priority of the resource conflict indication information and the priority of the HARQ, whether to send the first information on the first resource or send the second information on the second resource; or it is determined, based on the priority of the resource conflict indication information and the priority of the HARQ, whether to receive the first information on the first resource or send the second information on the second resource.

In an example, a terminal may determine, by comparing a priority threshold with a priority value of highest-priority information in the resource conflict indication information and the HARQ, whether to send or receive the resource conflict indication information and the HARQ or to send the uplink information.

For example, a smaller priority value indicates a higher priority, and uplink information transmission is high-priority transmission. If the priority value of the highest-priority information in the resource conflict indication information and the HARQ is less than or equal to the priority threshold (for example, a threshold 1), the terminal sends or receives the resource conflict indication information and the HARQ. If the priority value of the highest-priority information in the resource conflict indication information and the HARQ is greater than or equal to the priority threshold (for example, the threshold 1), the uplink information is sent. When the priority value of the highest-priority information in the resource conflict indication information and the HARQ is equal to the priority threshold (for example, the threshold 1), the HARQ and the resource conflict indication information may be sent or received, or the uplink information may be sent. This is not limited herein.

For another example, a smaller priority value indicates a higher priority, and uplink information transmission is low-priority transmission. If the priority value of the highest-priority information in the resource conflict indication information and the HARQ is less than or equal to the priority threshold (for example, a threshold 2), the terminal sends or receives the resource conflict indication information and the HARQ. If the priority value of the highest-priority information in the resource conflict indication information and the HARQ is greater than or equal to the priority threshold (for example, the threshold 2), the uplink information is sent. When the priority value of the highest-priority information in the resource conflict indication information and the HARQ is equal to the priority threshold (for example, the threshold 2), the HARQ and the resource conflict indication information may be sent or received, or the uplink information may be sent. This is not limited herein.

For example, the threshold 1 and the threshold 2 are preconfigured values or are configured by a network device in a resource pool. Threshold 1 and threshold 2 are two independent thresholds. Both the threshold 1 and the threshold 2 may be used for determining whether the priority of the resource conflict indication information or the HARQ is high enough. When the priority of the resource conflict indication information or the HARQ is high, it is considered that a sidelink is important. In this case, the resource conflict indication information and the HARQ need to be preferentially received or sent.

In another example, the terminal may alternatively determine, by comparing a priority of highest-priority resource conflict indication information in resource conflict indication information with a first priority threshold, and by comparing a priority value of a highest-priority HARQ in HARQs with a second priority threshold, whether to send or receive the resource conflict indication information and the HARQ or to send the uplink information.

For example, a smaller priority value indicates a higher priority, and uplink information transmission is high-priority transmission. If a priority value of the highest-priority resource conflict indication information in the resource conflict indication information is less than or equal to the first priority threshold (for example, a threshold A), and the priority value of the highest-priority HARQ in the HARQs is less than or equal to the second priority threshold (for example, a threshold B), the terminal sends or receives the resource conflict indication information and the HARQ. If the priority value of the highest-priority resource conflict indication information in the resource conflict indication information is greater than or equal to the first priority threshold (for example, the threshold A), and the priority value of the highest-priority HARQ in the HARQs is greater than or equal to the second priority threshold (for example, the threshold B), the terminal sends the uplink information. When the priority value of the highest-priority resource conflict indication information in the resource conflict indication information is equal to the first priority threshold (for example, the threshold A), and the priority value of the highest-priority HARQ in the HARQs is equal to the second priority threshold (for example, the threshold B), the HARQ and resource conflict indication information may be sent or received, or the uplink information may be sent. This is not limited herein.

For example, the threshold A and the threshold B are preconfigured values or are configured by a network device in a resource pool. The threshold A and the threshold B are two independent thresholds. The threshold A is used for determining whether the priority of the resource conflict indication information is high enough, and the threshold B is used for determining whether the priority of the HARQ is high enough. When the priority of the resource conflict indication information and the priority of the HARQ are high, it is considered that a sidelink is important. In this case, the resource conflict indication information and the HARQ need to be preferentially received or sent.

For another example, a smaller priority value indicates a higher priority, and uplink information transmission is low-priority transmission. If a priority value of the highest-priority resource conflict indication information in the resource conflict indication information is less than or equal to the first priority threshold (for example, a threshold C), and the priority value of the highest-priority HARQ in the HARQs is less than or equal to the second priority threshold (for example, a threshold D), the terminal sends or receives the resource conflict indication information and the HARQ. If the priority value of the highest-priority resource conflict indication information in the resource conflict indication information is greater than or equal to the first priority threshold (for example, the threshold C), and the priority value of the highest-priority HARQ in the HARQs is greater than or equal to the second priority threshold (for example, the threshold D), the terminal sends the uplink information. When the priority value of the highest-priority resource conflict indication information in the resource conflict indication information is equal to the first priority threshold (for example, the threshold C), and the priority value of the highest-priority HARQ in the HARQs is equal to the second priority threshold (for example, the threshold D), the HARQ and resource conflict indication information may be sent or received, or the uplink information may be sent. This is not limited herein.

For example, the threshold C and the threshold D are preconfigured values or are configured by a network device in a resource pool. The threshold C and the threshold D are two independent thresholds. The threshold C is used for determining whether the priority of the resource conflict indication information is high enough, and the threshold D is used for determining whether the priority of the HARQ is high enough. When the priority of the resource conflict indication information and the priority of the HARQ are high, it is considered that a sidelink is important. In this case, the resource conflict indication information and the HARQ need to be preferentially received or sent.

It should be noted that the threshold A, the threshold B, the threshold C, and the threshold D may be four independent thresholds.

For a specific process of sending or receiving the first information on the first resource, refer to related descriptions of a case, in S902 in the method shown in FIG. 9, in which when the first information sent on the first resource includes the HARQ and the resource conflict indication information, a quantity of pieces of resource conflict indication information sent on the first resource may be less than or equal to an upper limit of a quantity of pieces of sent resource conflict indication information; or a total quantity of pieces of resource conflict indication information and HARQs that are sent on the first resource may be less than or equal to an upper limit of a total quantity of pieces of resource conflict indication information and HARQs that are sent. In addition, for the priority of the resource conflict indication information, refer to the descriptions of the priority of the resource conflict indication information in S902 in the method shown in FIG. 9. Details are not described herein again.

For example, the first rule may alternatively be: if the first resource of the at least one piece of to-be-received resource conflict indication information and HARQ and the second resource of the at least one piece of to-be-sent uplink information overlap in time domain, determining to send the uplink information on the second resource. In other words, a priority of the uplink information is higher than the priority of the resource conflict indication information and the priority of the HARQ. This is because after the terminal selects a resource, the selected resource is a resource that the terminal considers to be a low-interference resource. However, due to problems such as a hidden node and half-duplex, a conflict may occur in the resource selected by the terminal. After sending SCI, the terminal cannot determine whether another terminal can identify that a resource conflict exists on a resource indicated by the SCI of the terminal (for example, a resource used for sending the SCI or a reserved resource indicated by the SCI). In other words, it is uncertain whether the terminal can receive resource conflict indication information from the another terminal. The terminal may not receive the resource conflict indication information when determining to receive the resource conflict indication information. However, it is determined that the terminal sends the uplink information. Therefore, the uplink information needs to be preferentially sent.

According to the method, a conflict occurs in time domain resources of the to-be-sent uplink information and sending or receiving of the to-be-sent or to-be-received HARQ and resource conflict indication information. Due to a limitation on sending and receiving capabilities and a limitation on a transmit power of the terminal, in this method, sending or receiving of the sidelink information or sending of the uplink information is determined by determining a priority of sidelink transmission, and the priority of the sidelink transmission is determined by using the priority value threshold. In this way, stability and reliability of high-priority data transmission can be ensured.

**Embodiment 5**

FIG. 14 is a schematic flowchart of a resource conflict processing method. As shown in FIG. 14, the method may include the following S1401 and S1402.

S1401: Determine that a first resource of at least one piece of to-be-transmitted resource conflict indication information and a second resource of at least one to-be-transmitted HARQ overlap in time domain.

Transmission may be sending or receiving. In other words, it is determined that the first resource of at least one piece of to-be-sent resource conflict indication information and the second resource of at least one to-be-sent HARQ overlap in time domain; or it is determined that the first resource of at least one piece of to-be-received resource conflict indication information and the second resource of at least one to-be-received HARQ overlap in time domain.

The at least one piece of to-be-transmitted resource conflict indication information may be understood as at least one piece of resource conflict indication information that needs to be transmitted, or at least one piece of resource conflict indication information that may need to be transmitted.

The at least one to-be-transmitted HARQ may be understood as at least one HARQ that needs to be transmitted, or at least one HARQ that may need to be transmitted.

That a first resource of at least one piece of to-be-transmitted resource conflict indication information and a second resource of at least one to-be-transmitted HARQ overlap in time domain may be understood as that the first resource for transmitting the at least one piece of resource conflict indication information and the second resource for transmitting the at least one HARQ overlap in time domain, or may be understood as that the at least one piece of to-be-transmitted resource conflict indication information and the at least one to-be-transmitted HARQ overlap in time domain, or may be understood as that a channel for carrying the at least one piece of to-be-transmitted resource conflict indication information and a channel for carrying the at least one to-be-transmitted HARQ overlap in time domain.

For the channel for carrying the resource conflict indication information and the resource conflict indicated by the resource conflict indication information, refer to the descriptions of the channel for carrying the resource conflict indication information and the resource conflict indicated by the resource conflict indication information in S901 in the method shown in FIG. 9. Details are not described herein again.

S1402: Transmit the resource conflict indication information and/or the HARQ based on a priority of the resource conflict indication information and a priority of the HARQ.

For details, refer to related descriptions of sending the first information when the first information sent on the first resource includes the HARQ and the resource conflict indication information, and receiving the second information when the second information received on the second resource includes the HARQ and the resource conflict indication information in S902 in the method shown in FIG. 9. In addition, for the priority of the resource conflict indication information, refer to the descriptions of the priority of the resource conflict indication information in S902 in the method shown in FIG. 9. Details are not described herein again.

According to the method, a problem that due to a transmission capability limitation of the terminal, a conflict occurs because the to-be-sent or to-be-received resource conflict indication information overlaps the to-be-sent or to-be-received HARQ in time domain can be resolved, and stable and reliable data transmission can be ensured. The HARQ is preferentially sent or received, so that reliability brought by a basic HARQ mechanism can be ensured, and introduction of the resource conflict indication information does not affect a gain brought by the HARQ. On the premise of ensuring reliability brought by the HARQ, the resource conflict indication information is further used for improving data transmission reliability.

**Embodiment 6**

FIG. 15 is a schematic flowchart of a resource conflict processing method. As shown in FIG. 15, the method may include the following S1501 and S1502.

S1501: Determine that at least two pieces of to-be-transmitted resource conflict indication information overlap in time domain.

Transmission may be sending or receiving. In other words, it is determined that at least two pieces of to-be-sent resource conflict indication information overlap in time domain; or it is determined that at least two pieces of to-be-received resource conflict indication information overlap in time domain.

The at least two pieces of to-be-transmitted resource conflict indication information may be understood as at least two pieces of resource conflict indication information that need to be transmitted, or at least two pieces of resource conflict indication information that may need to be transmitted.

That the at least two pieces of to-be-transmitted resource conflict indication information overlap in time domain may be understood as that resources for transmitting the at least two pieces of resource conflict indication information overlap in time domain, or may be understood as that channels for carrying the at least two pieces of to-be-transmitted resource conflict indication information overlap in time domain.

For the channel for carrying the resource conflict indication information and a resource conflict indicated by the resource conflict indication information, refer to the descriptions of the channel for carrying the resource conflict indication information and the resource conflict indicated by the resource conflict indication information in S901 in the method shown in FIG. 9. Details are not described herein again.

S1502: Transmit the resource conflict indication information based on priorities of the resource conflict indication information.

For details, refer to related descriptions of sending the resource conflict indication information on the first resource and receiving the resource conflict indication information on the second resource in S1102 in the method shown in FIG. 11. In addition, for the priority of the resource conflict indication information, refer to the descriptions of the priority of the resource conflict indication information in S902 in the method shown in FIG. 9. Details are not described herein again.

According to the method, a problem that due to a transmission capability limitation of a terminal, a conflict occurs between the at least two pieces of to-be-sent or to-be-received resource conflict indication information can be resolved, and stable and reliable data transmission can be ensured.

In embodiments of this application, the terminal may be divided into functional modules based on the foregoing method examples. For example, each functional module may be obtained through division based on each corresponding function, or two or more functions may be integrated into one transceiver module. The integrated module may be implemented in a form of hardware, or may be implemented in a form of a software functional module. It should be noted that, in embodiments of this application, division into the modules is an example, and is merely logical function division. In an actual implementation, another division manner may be used.

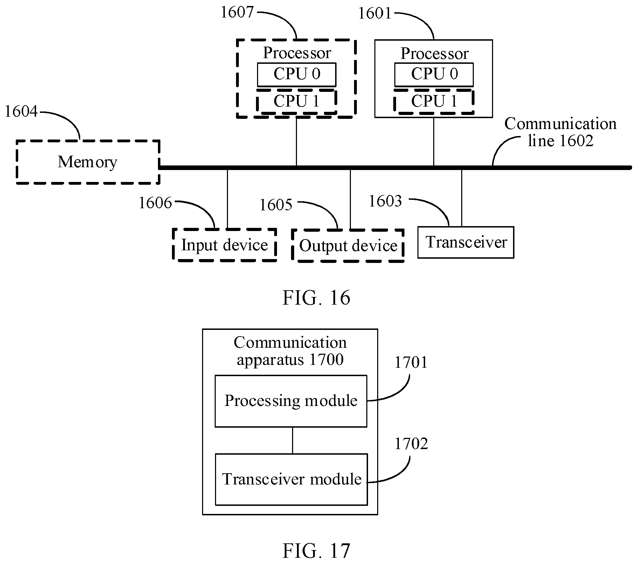

In a specific implementation, the terminal shown in this application may use a composition structure shown in FIG. 16 or include components shown in FIG. 16. FIG. 16 is a schematic structural diagram of a communication apparatus according to an embodiment of this application. When the communication apparatus has a function of the terminal in embodiments of this application, the communication apparatus may be a terminal; or a chip or a system-on-a-chip in a terminal.

As shown in FIG. 16, the communication apparatus may include a processor 1601, a communication line 1602, and a Transceiver 1603. The processor 1601, a memory 1604, and the transceiver 1603 may be connected through the communication line 1602. In an example, the processor 1601 may include one or more CPUs, for example, a CPU 0 and a CPU 1 in FIG. 16.

In an optional implementation, the communication apparatus includes a plurality of processors. For example, in addition to the processor 1601 in FIG. 16, the communication apparatus may further include a processor 1607.

The processor 1601 may be a central processing unit (central processing unit, CPU), a general-purpose processor, a network processor (network processor, NP), a digital signal processor (digital signal processor, DSP), a microprocessor, a microcontroller, a programmable logic device (programmable logic device, PLD), or any combination thereof. The processor 1601 may alternatively be another apparatus having a processing function, for example, a circuit, a component, or a software module.

The communication line 1602 is configured to transmit information between the components included in the communication apparatus.

The transceiver 1603 is configured to communicate with another device or another communication network. The another communication network may be an Ethernet, a radio access network (radio access network, RAN), a wireless local area network (wireless local area network, WLAN), or the like. The transceiver 1603 may be an interface circuit, a pin, a radio frequency module, a transceiver, or any apparatus that can implement communication.

Further, the communication apparatus may further include the memory 1604. The memory 1604 is configured to store instructions. The instructions may be a computer program.

The memory 1604 may be a read-only memory (read-only memory, ROM) or another type of static storage device that can store static information and/or instructions; may be a random access memory (random access memory, RAM) or another type of dynamic storage device that can store information and/or instructions; or may be an electrically erasable programmable read-only memory (electrically erasable programmable read-only memory, EEPROM), a compact disc read-only memory (compact disc read-only memory, CD-ROM) or another compact disc storage, an optical disc storage, or a magnetic disk storage medium or another magnetic storage device, where the optical disc storage includes a compressed optical disc, a laser disc, an optical disc, a digital versatile disc, a Blu-ray disc, or the like.

It should be noted that the memory 1604 may exist independently of the processor 1601, or may be integrated with the processor 1601. The memory 1604 may be configured to store instructions, program code, some data, or the like. The memory 1604 may be located inside the communication apparatus, or may be located outside the communication apparatus. This is not limited. When executing the instructions stored in the memory 1604, the processor 1601 may implement the non-public network subscription information update method provided in the foregoing embodiments of this application.

In an optional implementation, the communication apparatus may further include an output device 1605 and an input device 1606. For example, the input device 1606 is a device, for example, a keyboard, a mouse, a microphone, or a joystick, and the output device 1605 is a device, for example, a display or a speaker (speaker).

It should be noted that the communication apparatus may be a desktop computer, a portable computer, a network server, a mobile phone, a tablet computer, a wireless terminal, an embedded device, a chip system, or a device having a structure similar to that in FIG. 16. In addition, the composition structure shown in FIG. 16 does not constitute a limitation on the communication apparatus. In addition to the components shown in FIG. 16, the communication apparatus may include more or fewer components than those shown in the figure, or some components may be combined, or have different component arrangements.

In this embodiment of this application, the chip system may include a chip; or may include a chip and another discrete component.

FIG. 17 is a structural diagram of a communication apparatus 1700. The communication apparatus 1700 may be a chip or a system-on-a-chip in a terminal, another apparatus that can implement a function of the terminal in the foregoing method, or the like. The communication apparatus 1700 may be configured to perform the resource conflict processing method shown in FIG. 9, FIG. 11, FIG. 12, FIG. 13, FIG. 14, or FIG. 15 in the foregoing method embodiments. In an implementation, the communication apparatus 1700 shown in FIG. 17 includes a processing module 1701 and a transceiver module 1702.

In an example, when the communication apparatus 1700 performs the method shown in FIG. 9, the processing module 1701 may be configured to determine that a first resource of at least one piece of to-be-sent first information and a second resource of at least one piece of to-be-received second information overlap in time domain; and the transceiver module 1702 may be configured to send the first information on the first resource or receive the second information on the second resource according to a first rule, where the first information includes resource conflict indication information and a HARQ, and the second information includes resource conflict indication information and/or a HARQ; or the first information includes resource conflict indication information or a HARQ, and the second information includes resource conflict indication information and a HARQ; and the first rule includes one of the following: determining, based on priorities of the HARQs, whether to send the first information on the first resource or receive the second information on the second resource; or determining, based on priorities of the HARQs and priorities of the resource conflict indication information, whether to send the first information on the first resource or receive the second information on the second resource.

In a possible design, if a priority value of a highest-priority HARQ in the HARQs is greater than or equal to a first priority threshold, and a priority value of highest-priority resource conflict indication information in the resource conflict indication information is less than or equal to a second priority threshold, the first rule is: determining, based on the priorities of the HARQs and the priorities of the resource conflict indication information, whether to send the first information on the first resource or receive the second information on the second resource; or if the priority value of the highest-priority HARQ in the HARQs is less than or equal to the first priority threshold, and/or the priority value of the highest-priority resource conflict indication information in the resource conflict indication information is greater than or equal to the second priority threshold, the first rule is: determining, based on the priorities of the HARQs, whether to send the first information on the first resource or receive the second information on the second resource.

In another possible design, if a priority value of highest-priority resource conflict indication information in the resource conflict indication information is less than or equal to a priority threshold, the first rule is: determining, based on the priorities of the HARQs and the priorities of the resource conflict indication information, whether to send the first information on the first resource or receive the second information on the second resource; or if the priority value of the highest-priority resource conflict indication information in the resource conflict indication information is greater than or equal to the priority threshold, the first rule is: determining, based on the priorities of the HARQs, whether to send the first information on the first resource or receive the second information on the second resource.

In another possible design, the transceiver module 1702 is specifically configured to: if the highest-priority HARQ in the HARQs is a to-be-sent HARQ, send the first information on the first resource; or if the highest-priority HARQ in the HARQs is a to-be-received HARQ, receive the second information on the second resource.

In another possible design, the transceiver module 1702 is specifically configured to: if a highest-priority HARQ in the HARQs is a to-be-sent HARQ, preferentially send the HARQ in the first information on the first resource; or if a highest-priority HARQ in the HARQs is a to-be-received HARQ, preferentially receive the HARQ in the second information on the second resource.

In another possible design, the transceiver module 1702 is specifically configured to: if highest-priority information in the HARQs and the resource conflict indication information is to-be-sent information, send the first information on the first resource; or if highest-priority information in the HARQs and the resource conflict indication information is to-be-received information, receive the second information on the second resource.

In another possible design, the transceiver module 1702 is specifically configured to: if highest-priority information in the HARQs and the resource conflict indication information is to-be-sent information, preferentially send high-priority information in the first information on the first resource; or if highest-priority information in the HARQs and the resource conflict indication information is to-be-received information, preferentially receive high-priority information in the second information on the second resource.

In another possible design, the first information sent on the first resource includes the HARQ and the resource conflict indication information, and a quantity of pieces of resource conflict indication information sent on the first resource is less than or equal to an upper limit of a quantity of pieces of sent resource conflict indication information; or the first information sent on the first resource includes the HARQ and the resource conflict indication information, and a total quantity of pieces of resource conflict indication information and HARQs that are sent on the first resource is less than or equal to an upper limit of a total quantity of pieces of resource conflict indication information and HARQs that are sent.

In another possible design, the second information received on the second resource includes the HARQ and the resource conflict indication information, and a quantity of pieces of resource conflict indication information received on the second resource is less than or equal to an upper limit of a quantity of pieces of received resource conflict indication information; or the second information received on the second resource includes the HARQ and the resource conflict indication information, and a total quantity of pieces of resource conflict indication information and HARQs that are received on the second resource is less than or equal to an upper limit of a total quantity of pieces of resource conflict indication information and HARQs that are received.

In another possible design, the priority of the resource conflict indication information corresponds to a priority included in SCI associated with the resource conflict indication information.

In another possible design, a larger quantity of data retransmission times corresponding to a resource indicated by the resource conflict indication information or a larger quantity of resources indicated by the resource conflict indication information indicates a higher priority of the resource conflict indication information.

In another possible design, the resource conflict indication information includes first resource conflict indication information and second resource conflict indication information, and a priority of the first resource conflict indication information is higher than a priority of the second resource conflict indication information, where the first resource conflict indication information indicates a persistent resource conflict, and the second resource conflict indication information indicates a non-persistent resource conflict; the first resource conflict indication information indicates a periodic resource conflict, and the second resource conflict indication information indicates an aperiodic resource conflict; or the first resource conflict indication information indicates a resource conflict of a reserved resource, and the second resource conflict indication information indicates a resource conflict of a used resource.

In another example, when the communication apparatus 1700 performs the method shown in FIG. 11, the processing module 1701 may be configured to determine that a first resource of at least one piece of to-be-sent resource conflict indication information and a second resource of at least one piece of to-be-received resource conflict indication information overlap in time domain; and the transceiver module 1702 may be configured to send the resource conflict indication information on the first resource or receive the resource conflict indication information on the second resource according to a first rule, where the first rule includes one of the following: determining, based on priorities of the resource conflict indication information, whether to send the resource conflict indication information on the first resource or receive the resource conflict indication information on the second resource; sending the resource conflict indication information on the first resource; determining, based on configuration information, whether to send the resource conflict indication information on the first resource or receive the resource conflict indication information on the second resource, where the configuration information indicates that when the first resource and the second resource overlap in time domain, the resource conflict indication information is sent on the first resource or received on the resource; and determining, based on a quantity of data retransmission times corresponding to a resource indicated by the to-be-received resource conflict indication information, whether to send the resource conflict indication information on the first resource or receive the resource conflict indication information on the second resource.

In a possible design, the transceiver module 1702 is specifically configured to: if highest-priority resource conflict indication information in the resource conflict indication information is to-be-sent resource conflict indication information, send the resource conflict indication information on the first resource; or if highest-priority resource conflict indication information in the resource conflict indication information is to-be-received resource conflict indication information, receive the resource conflict indication information on the second resource.

In another possible design, the transceiver module 1702 is specifically configured to: if the quantity of data retransmission times corresponding to the resource indicated by the to-be-received resource conflict indication information is greater than or equal to a first threshold, receive the resource conflict indication information on the second resource; or if the quantity of data retransmission times corresponding to the resource indicated by the to-be-received resource conflict indication information is less than or equal to a first threshold, send the resource conflict indication information on the first resource.

In another possible design, the transceiver module 1702 is specifically configured to: preferentially send, on the first resource, high-priority resource conflict indication information in the to-be-sent resource conflict indication information; or preferentially receive, on the second resource, high-priority resource conflict indication information in the to-be-received resource conflict indication information.

In another possible design, a quantity of pieces of resource conflict indication information sent on the first resource is less than or equal to an upper limit of a quantity of pieces of sent resource conflict indication information.

In another possible design, a quantity of pieces of resource conflict indication information received on the second resource is less than or equal to an upper limit of a quantity of pieces of received resource conflict indication information.

In another possible design, the priority of the resource conflict indication information corresponds to a priority included in SCI corresponding to a resource indicated by the resource conflict indication information.

In another possible design, a larger quantity of data retransmission times corresponding to a resource indicated by the resource conflict indication information or a larger quantity of resources indicated by the resource conflict indication information indicates a higher priority of the resource conflict indication information.

In another possible design, the resource conflict indication information includes first resource conflict indication information and second resource conflict indication information, and a priority of the first resource conflict indication information is higher than a priority of the second resource conflict indication information, where the first resource conflict indication information indicates a persistent resource conflict, and the second resource conflict indication information indicates a non-persistent resource conflict; the first resource conflict indication information indicates a periodic resource conflict, and the second resource conflict indication information indicates an aperiodic resource conflict; or the first resource conflict indication information indicates a resource conflict of a reserved resource, and the second resource conflict indication information indicates a resource conflict of a used resource.

In another example, when the communication apparatus 1700 performs the method shown in FIG. 12, the processing module 1701 may be configured to determine that a first resource of at least one piece of to-be-sent or to-be-received resource conflict indication information and a second resource of at least one piece of to-be-sent uplink information overlap in time domain; and the transceiver module is configured to send or receive the resource conflict indication information on the first resource or send the uplink information on the second resource according to a first rule, where the first rule includes: determining, based on a priority of the resource conflict indication information, whether to send or receive the resource conflict indication information on the first resource or to send the uplink information on the second resource.

In a possible design, the transceiver module 1702 is specifically configured to: if a priority value of highest-priority resource conflict indication information in the resource conflict indication information is less than or equal to a priority threshold, send or receive the resource conflict indication information on the first resource; or if the priority value of the highest-priority resource conflict indication information in the resource conflict indication information is greater than or equal to the priority threshold, send the uplink information on the second resource.

In another possible design, the transceiver module 1702 is specifically configured to: if a priority value of highest-priority resource conflict indication information in the resource conflict indication information is less than or equal to a priority threshold, preferentially send or receive, on the first resource, high-priority resource conflict indication information in the resource conflict indication information; or if the priority value of the highest-priority resource conflict indication information in the resource conflict indication information is greater than or equal to the priority threshold, send the uplink information on the second resource.

In another possible design, a quantity of pieces of resource conflict indication information sent or received on the first resource is less than or equal to an upper limit of a quantity of pieces of sent or received resource conflict indication information.

In another possible design, the priority of the resource conflict indication information corresponds to a priority included in SCI associated with the resource conflict indication information.

In another possible design, a larger quantity of data retransmission times corresponding to a resource indicated by the resource conflict indication information or a larger quantity of resources indicated by the resource conflict indication information indicates a higher priority of the resource conflict indication information.

In another possible design, the resource conflict indication information includes first resource conflict indication information and second resource conflict indication information, and a priority of the first resource conflict indication information is higher than a priority of the second resource conflict indication information, where the first resource conflict indication information indicates a persistent resource conflict, and the second resource conflict indication information indicates a non-persistent resource conflict; the first resource conflict indication information indicates a periodic resource conflict, and the second resource conflict indication information indicates an aperiodic resource conflict; or the first resource conflict indication information indicates a resource conflict of a reserved resource, and the second resource conflict indication information indicates a resource conflict of a used resource.

In another example, when the communication apparatus 1700 performs the method shown in FIG. 13, the processing module 1701 may be configured to determine that a first resource of at least one piece of to-be-sent or to-be-received first information and a second resource of at least one piece of to-be-sent second information overlap in time domain; and the transceiver module 1702 may be configured to send or receive the first information on the first resource or send the second information on the second resource according to a first rule, where the first information includes resource conflict indication information and a HARQ, and the second information includes uplink information; and the first rule includes: determining, based on a priority of the resource conflict indication information and a priority of the HARQ, whether to send or receive the first information on the first resource or to send the second information on the second resource.

In a possible design, the transceiver module 1702 is specifically configured to: if a priority value of highest-priority information in the resource conflict indication information and the HARQ is less than or equal to a priority threshold, send or receive the first information on the first resource; or if the priority value of the highest-priority information in the resource conflict indication information and the HARQ is greater than or equal to the priority threshold, send the second information on the second resource.

In another possible design, the transceiver module 1702 is specifically configured to: if a priority value of highest-priority resource conflict indication information in resource conflict indication information is less than or equal to a first priority threshold, and a priority value of a highest-priority HARQ in HARQs is less than a second priority threshold, send or receive the first information on the first resource; or if the priority value of the highest-priority resource conflict indication information in the resource conflict indication information is greater than or equal to the first priority threshold, and/or the priority value of the highest-priority HARQ in the HARQs is greater than or equal to the second priority threshold, send the second information on the second resource.

In another possible design, the transceiver module 1702 is specifically configured to preferentially send or receive, on the first resource, the HARQ in the first information.

In another possible design, the transceiver module 1702 is specifically configured to preferentially send or receive, on the first resource, high-priority information in the first information.

In another possible design, a quantity of pieces of resource conflict indication information sent on the first resource is less than or equal to an upper limit of a quantity of pieces of sent resource conflict indication information; or a quantity of pieces of resource conflict indication information and HARQs that are sent or received on the first resource is less than or equal to an upper limit of a total quantity of pieces of resource conflict indication information and HARQs that are sent.

In another possible design, the priority of the resource conflict indication information corresponds to a priority included in sidelink control information SCI associated with the resource conflict indication information.

In another possible design, a larger quantity of data retransmission times corresponding to a resource indicated by the resource conflict indication information or a larger quantity of resources indicated by the resource conflict indication information indicates a higher priority of the resource conflict indication information.

In another possible design, the resource conflict indication information includes first resource conflict indication information and second resource conflict indication information, and a priority of the first resource conflict indication information is higher than a priority of the second resource conflict indication information, where the first resource conflict indication information indicates a persistent resource conflict, and the second resource conflict indication information indicates a non-persistent resource conflict; the first resource conflict indication information indicates a periodic resource conflict, and the second resource conflict indication information indicates an aperiodic resource conflict; or the first resource conflict indication information indicates a resource conflict of a reserved resource, and the second resource conflict indication information indicates a resource conflict of a used resource.

In another example, when the communication apparatus 1700 performs the method shown in FIG. 14, the processing module 1701 may be configured to determine that a first resource of at least one piece of to-be-transmitted resource conflict indication information and a second resource of at least one to-be-transmitted HARQ overlap in time domain, where transmission includes sending or receiving; and the transceiver module 1702 is configured to transmit the resource conflict indication information and/or the HARQ based on a priority of the resource conflict indication information and a priority of the HARQ.

In a possible design, the transceiver module 1702 is specifically configured to: preferentially transmit the HARQ based on the priority of the resource conflict indication information and the priority of the HARQ; or preferentially transmit high-priority information in the HARQ and the resource conflict indication information based on the priority of the resource conflict indication information and the priority of the HARQ.

In another possible design, a quantity of pieces of transmitted resource conflict indication information is less than or equal to an upper limit of a quantity of pieces of transmitted resource conflict indication information; or a quantity of pieces of transmitted resource conflict indication information and HARQs is less than or equal to an upper limit of a total quantity of pieces of transmitted resource conflict indication information and HARQs.

In another possible design, the priority of the resource conflict indication information corresponds to a priority included in SCI associated with the resource conflict indication information.

In another possible design, a larger quantity of data retransmission times corresponding to a resource indicated by the resource conflict indication information or a larger quantity of resources indicated by the resource conflict indication information indicates a higher priority of the resource conflict indication information.

In another possible design, the resource conflict indication information includes first resource conflict indication information and second resource conflict indication information, and a priority of the first resource conflict indication information is higher than a priority of the second resource conflict indication information, where the first resource conflict indication information indicates a persistent resource conflict, and the second resource conflict indication information indicates a non-persistent resource conflict; the first resource conflict indication information indicates a periodic resource conflict, and the second resource conflict indication information indicates an aperiodic resource conflict; or the first resource conflict indication information indicates a resource conflict of a reserved resource, and the second resource conflict indication information indicates a resource conflict of a used resource.

In another example, when the communication apparatus 1700 performs the method shown in FIG. 15, the processing module 1701 may be configured to determine that at least two pieces of to-be-transmitted resource conflict indication information overlap in time domain, and transmission includes sending or receiving; and the transceiver module 1702 may be configured to transmit the resource conflict indication information based on priorities of the resource conflict indication information.

In a possible design, a quantity of pieces of transmitted resource conflict indication information is less than or equal to an upper limit of a quantity of pieces of transmitted resource conflict indication information.

In another possible design, the priority of the resource conflict indication information corresponds to a priority included in SCI associated with the resource conflict indication information.

In another possible design, a larger quantity of data retransmission times corresponding to a resource indicated by the resource conflict indication information or a larger quantity of resources indicated by the resource conflict indication information indicates a higher priority of the resource conflict indication information.

In another possible design, the resource conflict indication information includes first resource conflict indication information and second resource conflict indication information, and a priority of the first resource conflict indication information is higher than a priority of the second resource conflict indication information, where the first resource conflict indication information indicates a persistent resource conflict, and the second resource conflict indication information indicates a non-persistent resource conflict; the first resource conflict indication information indicates a periodic resource conflict, and the second resource conflict indication information indicates an aperiodic resource conflict; or the first resource conflict indication information indicates a resource conflict of a reserved resource, and the second resource conflict indication information indicates a resource conflict of a used resource.

An embodiment of this application further provides a computer-readable storage medium. All or some of the procedures in the foregoing method embodiments may be implemented by a computer program instructing related hardware. The program may be stored in the computer-readable storage medium. When the program is executed, the procedures of the foregoing method embodiments may be included. The computer-readable storage medium may be a hard disk or a memory of the apparatus in any one of the foregoing embodiments. The computer-readable storage medium may alternatively be an external storage device of the foregoing apparatus, for example, a plug-in hard disk, a smart media card (smart media card, SMC), a secure digital (secure digital, SD) card, or a flash card (flash card) that is provided on the apparatus. Further, the computer-readable storage medium may alternatively include both an internal storage unit and an external storage device of the foregoing apparatus. The computer-readable storage medium is configured to store the computer program and other programs and data that are required by the foregoing apparatus. The computer-readable storage medium may be further configured to temporarily store data that has been output or is to be output.

An embodiment of this application further provides computer instructions. All or some of the procedures in the foregoing method embodiments may be implemented by the computer instructions instructing related hardware (such as a computer, a processor, a network device, and a terminal). A program may be stored in the foregoing computer-readable storage medium.

An embodiment of this application further provides a chip system. The chip system may include a chip; or may include a chip and another discrete component. This is not limited herein. The chip system includes a processor and a transceiver. All or some of the procedures in the foregoing method embodiments may be completed by the chip system. For example, the chip system may be configured to implement a function performed by the terminal in the foregoing method embodiments.

In a possible design, the chip system further includes a memory. The memory is configured to store program instructions and/or data. When the chip system runs, the processor executes the program instructions stored in the memory, so that the chip system performs a function performed by the terminal in the foregoing method embodiments.

In embodiments of this application, the processor may be a general-purpose processor, a digital signal processor, an application-specific integrated circuit, a field programmable gate array or another programmable logic device, a discrete gate or transistor logic device, or a discrete hardware component, and may implement or perform the methods, steps, and logical block diagrams disclosed in embodiments of this application. The general-purpose processor may be a microprocessor, or may be any conventional processor or the like. The steps of the method disclosed with reference to embodiments of this application may be directly performed by a hardware processor, or may be performed by using a combination of hardware in the processor and a software module.

In embodiments of this application, the memory may be a non-volatile memory, such as a hard disk drive (hard disk drive, HDD) or a solid-state drive (solid-state drive, SSD), or may be a volatile memory (volatile memory), such as a random access memory (random access memory, RAM). The memory is any other medium that can carry or store expected program code in a form of an instruction or a data structure and that can be accessed by a computer, but is not limited thereto. The memory in embodiments of this application may alternatively be a circuit or any other apparatus that can implement a storage function, and is configured to store instructions and/or data.

It should be noted that, the terms "including", "having", or any other variant thereof mentioned in the specification, claims, and the accompanying drawings of this application, are intended to cover non-exclusive inclusion. For example, a process, a method, a system, a product, or a device that includes a series of steps or units is not limited to the listed steps or units, but optionally further includes an unlisted step or unit, or optionally further includes another inherent step or unit of the process, the method, the product, or the device.

The foregoing descriptions about implementations allow a person skilled in the art to understand that, for the purpose of convenient and brief description, division of the foregoing functional modules is taken as an example for illustration. In actual application, the foregoing functions can be allocated to different modules and implemented according to a requirement, that is, an inner structure of an apparatus is divided into different functional modules to implement all or some of the functions described above.

Each of the functional modules in embodiments of this application may be integrated into one processing unit, each of the modules may exist alone physically, or at least two modules may be integrated into one unit. The integrated unit may be implemented in a form of hardware, or may be implemented in a form of a software functional unit. When the integrated unit is implemented in the form of a software functional unit and sold or used as an independent product, the integrated unit may be stored in a readable storage medium. Based on such an understanding, the technical solutions of embodiments of this application essentially, or the part contributing to the current technology, or all or some of the technical solutions may be implemented in a form of a software product. The software product is stored in a storage medium and includes several instructions for instructing a device, where for example, the device may be a single-chip microcomputer or a chip, or a processor (processor) to perform all or some of the steps of the methods in embodiments of this application. The foregoing storage medium includes any medium that can store program code, such as a USB flash drive, a removable hard disk, a ROM, a RAM, a magnetic disk, or an optical disc.

The foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

**Claims**

1.  A resource conflict processing method, comprising:

    determining that a first resource of at least one piece of to-be-sent first information and a second resource of at least one piece of to-be-received second information overlap in time domain; and
    sending the first information on the first resource or receiving the second information on the second resource according to a first rule, wherein
    the first information comprises resource conflict indication information and a hybrid automatic repeat request HARQ, and the second information comprises resource conflict indication information and/or a HARQ; or
    the first information comprises resource conflict indication information or a HARQ, and the second information comprises resource conflict indication information and a HARQ; and
    the first rule comprises one of the following:

    determining, based on priorities of the HARQs, whether to send the first information on the first resource or receive the second information on the second resource; or
    determining, based on priorities of the HARQs and priorities of the resource conflict indication information, whether to send the first information on the first resource or receive the second information on the second resource.

2.  The method according to claim 1, wherein

    if a priority value of a highest-priority HARQ in the HARQs is greater than or equal to a first priority threshold, and a priority value of highest-priority resource conflict indication information in the resource conflict indication information is less than or equal to a second priority threshold, the first rule is: determining, based on the priorities of the HARQs and the priorities of the resource conflict indication information, whether to send the first information on the first resource or receive the second information on the second resource; or
    if the priority value of the highest-priority HARQ in the HARQs is less than or equal to the first priority threshold, and/or the priority value of the highest-priority resource conflict indication information in the resource conflict indication information is greater than or equal to the second priority threshold, the first rule is: determining, based on the priorities of the HARQs, whether to send the first information on the first resource or receive the second information on the second resource.

3.  The method according to claim 1, wherein

    if a priority value of highest-priority resource conflict indication information in the resource conflict indication information is less than or equal to a priority threshold, the first rule is:
    determining, based on the priorities of the HARQs and the priorities of the resource conflict indication information, whether to send the first information on the first resource or receive the second information on the second resource; or
    if the priority value of the highest-priority resource conflict indication information in the resource conflict indication information is greater than or equal to the priority threshold, the first rule is: determining, based on the priorities of the HARQs, whether to send the first information on the first resource or receive the second information on the second resource.

4.  The method according to any one of claims 1 to 3, wherein the determining, based on priorities of the HARQs, whether to send the first information on the first resource or receive the second information on the second resource comprises:

    if the highest-priority HARQ in the HARQs is a to-be-sent HARQ, sending the first information on the first resource; or
    if the highest-priority HARQ in the HARQs is a to-be-received HARQ, receiving the second information on the second resource.

5.  The method according to any one of claims 1 to 3, wherein the determining, based on priorities of the HARQs, whether to send the first information on the first resource or receive the second information on the second resource comprises:

if the highest-priority HARQ in the HARQs is a to-be-sent HARQ, preferentially sending the HARQ in the first information on the first resource; or
if the highest-priority HARQ in the HARQs is a to-be-received HARQ, preferentially receiving the HARQ in the second information on the second resource.

6. The method according to any one of claims 1 to 3, wherein the determining, based on priorities of the HARQs and priorities of the resource conflict indication information, whether to send the first information on the first resource or receive the second information on the second resource comprises:

if highest-priority information in the HARQs and the resource conflict indication information is to-be-sent information, sending the first information on the first resource; or
if highest-priority information in the HARQs and the resource conflict indication information is to-be-received information, receiving the second information on the second resource.

7. The method according to any one of claims 1 to 3, wherein the determining, based on priorities of the HARQs and priorities of the resource conflict indication information, whether to send the first information on the first resource or receive the second information on the second resource comprises:

if highest-priority information in the HARQs and the resource conflict indication information is to-be-sent information, preferentially sending high-priority information in the first information on the first resource; or
if highest-priority information in the HARQs and the resource conflict indication information is to-be-received information, preferentially receiving high-priority information in the second information on the second resource.

8. The method according to any one of claims 4 to 7, wherein

the first information sent on the first resource comprises the HARQ and the resource conflict indication information, and a quantity of pieces of resource conflict indication information sent on the first resource is less than or equal to an upper limit of a quantity of pieces of sent resource conflict indication information; or
the first information sent on the first resource comprises the HARQ and the resource conflict indication information, and a total quantity of pieces of resource conflict indication information and HARQs that are sent on the first resource is less than or equal to an upper limit of a total quantity of pieces of resource conflict indication information and HARQs that are sent.

9. The method according to any one of claims 4 to 7, wherein

the second information received on the second resource comprises the HARQ and the resource conflict indication information, and a quantity of pieces of resource conflict indication information received on the second resource is less than or equal to an upper limit of a quantity of pieces of received resource conflict indication information; or
the second information received on the second resource comprises the HARQ and the resource conflict indication information, and a total quantity of pieces of resource conflict indication information and HARQs that are received on the second resource is less than or equal to an upper limit of a total quantity of pieces of resource conflict indication information and HARQs that are received.

10. The method according to any one of claims 1 to 9, wherein the priority of the resource conflict indication information corresponds to a priority comprised in sidelink control information SCI associated with the resource conflict indication information.

11. The method according to any one of claims 1 to 10, wherein a larger quantity of data retransmission times corresponding to a resource indicated by the resource conflict indication information or a larger quantity of resources indicated by the resource conflict indication information indicates a higher priority of the resource conflict indication information.

12. The method according to any one of claims 1 to 11, wherein the resource conflict indication information comprises first resource conflict indication information and second resource conflict indication information, and a priority of the first resource conflict indication information is higher than a priority of the second resource conflict indication information, wherein

the first resource conflict indication information indicates a persistent resource conflict, and the second resource conflict indication information indicates a non-persistent resource conflict;
the first resource conflict indication information indicates a periodic resource conflict, and the second resource conflict indication information indicates an aperiodic resource conflict; or
the first resource conflict indication information indicates a resource conflict of a reserved resource, and the second resource conflict indication information indicates a resource conflict of a used resource.

13. A communication apparatus, comprising:

a processing module, configured to determine that a first resource of at least one piece of to-be-sent first information and a second resource of at least one piece of to-be-received second information overlap in time domain; and
a transceiver module, configured to send the first information on the first resource or receive the second information on the second resource according to a first rule, wherein
the first information comprises resource conflict indication information and a hybrid automatic repeat request HARQ, and the second information comprises resource conflict indication information and/or a HARQ; or
the first information comprises resource conflict indication information or a HARQ, and the second information comprises resource conflict indication information and a HARQ; and
the first rule comprises one of the following:

determining, based on priorities of the HARQs, whether to send the first information on the first resource or receive the second information on the second resource; or
determining, based on priorities of the HARQs and priorities of the resource conflict indication information, whether to send the first information on the first resource or receive the second information on the second resource.

14. The apparatus according to claim 13, wherein

if a priority value of a highest-priority HARQ in the HARQs is greater than or equal to a first priority threshold, and a priority value of highest-priority resource conflict indication information in the resource conflict indication information is less than or equal to a second priority threshold, the first rule is: determining, based on the priorities of the HARQs and the priorities of the resource conflict indication information, whether to send the first information on the first resource or receive the second information on the second resource; or
if the priority value of the highest-priority HARQ in the HARQs is less than or equal to the first priority threshold, and/or the priority value of the highest-priority resource conflict indication information in the resource conflict indication information is greater than or equal to the second priority threshold, the first rule is: determining, based on the priorities of the HARQs, whether to send the first information on the first resource or receive the second information on the second resource.

15. The apparatus according to claim 13, wherein

if a priority value of highest-priority resource conflict indication information in the resource conflict indication information is less than or equal to a priority threshold, the first rule is: determining, based on the priorities of the HARQs and the priorities of the resource conflict indication information, whether to send the first information on the first resource or receive the second information on the second resource; or
if the priority value of the highest-priority resource conflict indication information in the resource conflict indication information is greater than or equal to the priority threshold, the first rule is: determining, based on the priorities of the HARQs, whether to send the first information on the first resource or receive the second information on the second resource.

16. The apparatus according to any one of claims 13 to 15, wherein the transceiver module is specifically configured to: if the highest-priority HARQ in the HARQs is a to-be-sent HARQ, send the first information on the first resource; or if the highest-priority HARQ in the HARQs is a to-be-received HARQ, receive the second information on the second resource.

17. The apparatus according to any one of claims 13 to 15, wherein the transceiver module is specifically configured to: if the highest-priority HARQ in the HARQs is a to-be-sent HARQ, preferentially send the HARQ in the first information on the first resource; or

if the highest-priority HARQ in the HARQs is a to-be-received HARQ, preferentially receive the HARQ in the second information on the second resource.

18. The apparatus according to any one of claims 13 to 15, wherein the transceiver module is specifically configured to: if highest-priority information in the HARQs and the resource conflict indication information is to-be-sent information, send the first information on the first resource; or

if highest-priority information in the HARQs and the resource conflict indication information is to-be-received information, receive the second information on the second resource.

19. The apparatus according to any one of claims 13 to 15, wherein the transceiver module is specifically configured to: if highest-priority information in the HARQs and the resource conflict indication information is to-be-sent information, preferentially send high-priority information in the first information on the first resource; or

if highest-priority information in the HARQs and the resource conflict indication information is to-be-received information, preferentially receive high-priority information in the second information on the second resource.

20. The apparatus according to any one of claims 16 to 19, wherein

the first information sent on the first resource comprises the HARQ and the resource conflict indication information, and a quantity of pieces of resource conflict indication information sent on the first resource is less than or equal to an upper limit of a quantity of pieces of sent resource conflict indication information; or

the first information sent on the first resource comprises the HARQ and the resource conflict indication information, and a total quantity of pieces of resource conflict indication information and HARQs that are sent on the first resource is less than or equal to an upper limit of a total quantity of pieces of resource conflict indication information and HARQs that are sent.

21. The apparatus according to any one of claims 16 to 19, wherein

the second information received on the second resource comprises the HARQ and the resource conflict indication information, and a quantity of pieces of resource conflict indication information received on the second resource is less than or equal to an upper limit of a quantity of pieces of received resource conflict indication information; or

the second information received on the second resource comprises the HARQ and the resource conflict indication information, and a total quantity of pieces of resource conflict indication information and HARQs that are received on the second resource is less than or equal to an upper limit of a total quantity of pieces of resource conflict indication information and HARQs that are received.

22. The apparatus according to any one of claims 13 to 21, wherein the priority of the resource conflict indication information corresponds to a priority comprised in sidelink control information SCI associated with the resource conflict indication information.

23. The apparatus according to any one of claims 13 to 22, wherein a larger quantity of data retransmission times corresponding to a resource indicated by the resource conflict indication information or a larger quantity of resources indicated by the resource conflict indication information indicates a higher priority of the resource conflict indication information.

24. The apparatus according to any one of claims 13 to 23, wherein the resource conflict indication information comprises first resource conflict indication information and second resource conflict indication information, and a priority of the first resource conflict indication information is higher than a priority of the second resource conflict indication information, wherein

the first resource conflict indication information indicates a persistent resource conflict, and the second resource conflict indication information indicates a non-persistent resource conflict;

the first resource conflict indication information indicates a periodic resource conflict, and the second resource conflict indication information indicates an aperiodic resource conflict; or

the first resource conflict indication information indicates a resource conflict of a reserved resource, and the second resource conflict indication information indicates a resource conflict of a used resource.

**25.** A communication apparatus, wherein the communication apparatus comprises a processor and a transceiver, and the processor and the transceiver are configured to support the communication apparatus in performing the resource conflict processing method according to any one of claims 1 to 12.

**26.** A computer-readable storage medium, wherein the computer-readable storage medium stores computer instructions; and when the computer instructions are run, the resource conflict processing method according to any one of claims 1 to 12 is performed.

FIG. 1

FIG. 2

FIG. 3

| |
|:---:|
| 0 |
| 0 |
| 1 |
| 1 |
| 0 |
| 1 |
| 1 |
| 0 |
| 1 |
| 0 |
| 1 |

Frequency domain bandwidth

FIG. 4

FIG. 5

FIG. 6

FIG. 7

803

802

804

801

FIG. 8

| Determine that a first resource of at least one piece of to-be-sent first information and a second resource of at least one piece of to-be-received second information overlap in time domain | S901 |
|---|---|

| Send the first information on the first resource or receive the second information on the second resource according to a first rule | S902 |

FIG. 9

901 ⌐ SCI 1

902 ⌐ Resource 1

903 ⌐ Resource 2

905 ⌐ SCI 2

904 ⌐ Resource 3

906 ⌐ Resource 4

FIG. 10

| Determine that a first resource of at least one piece of to-be-sent resource conflict indication information and a second resource of at least one piece of to-be-received resource conflict indication information overlap in time domain | ∿ S1101 |

| Send the resource conflict indication information on the first resource or receive the resource conflict indication information on the second resource according to a first rule | ∿ S1102 |

FIG. 11

> Determine that a first resource of at least one piece of to-be-sent or to-be-received resource conflict indication information and a second resource of at least one piece of to-be-sent uplink information overlap in time domain — S1201

> Send or receive the resource conflict indication information on the first resource or send the uplink information on the second resource according to a first rule — S1202

FIG. 12

> Determine that a first resource of at least one piece of to-be-sent or to-be-received first information and a second resource of at least one piece of to-be-sent second information overlap in time domain — S1301

> Send or receive the first information on the first resource or send the second information on the second resource according to a first rule — S1302

FIG. 13

> Determine that a first resource of at least one piece of to-be-transmitted resource conflict indication information and a second resource of at least one to-be-transmitted HARQ overlap in time domain — S1401

> Transmit the resource conflict indication information and/or the HARQ based a priority of the resource conflict indication information and a priority of the HARQ — S1402

FIG. 14

> Determine that at least two pieces of to-be-transmitted resource conflict indication information overlap in time domain — S1501

> Transmit the resource conflict indication information based on priorities of the resource conflict indication information — S1502

FIG. 15

1607 —
1601 —

Processor
CPU 0
CPU 1

Processor
CPU 0
CPU 1

1604 —

Communication
line 1602

Memory

1606 —
1605 —
1603 —

Input device
Output device
Transceiver

FIG. 16

Communication
apparatus 1700

1701

Processing module

1702

Transceiver module

FIG. 17

## INTERNATIONAL SEARCH REPORT

International application No.

**PCT/CN2021/072327**

### A. CLASSIFICATION OF SUBJECT MATTER

H04W 72/04(2009.01)i

According to International Patent Classification (IPC) or to both national classification and IPC

### B. FIELDS SEARCHED

Minimum documentation searched (classification system followed by classification symbols)

H04W; H04L

Documentation searched other than minimum documentation to the extent that such documents are included in the fields searched

Electronic data base consulted during the international search (name of data base and, where practicable, search terms used)

CNPAT, CNKI, EPODOC, WPI, 3GPP: 发送, 传输, 接收, 资源, 时域, 冲突, 碰撞, 重叠, 交叠, 优先, 资源冲突指示, 混合自动重传, 混合自动重发, 混合自动重复, send, sent, transmi+, receiv+, resource, time domain, conflict, collide, collision, overlap, priority, resource contention indication, RCI, HARQ

### C. DOCUMENTS CONSIDERED TO BE RELEVANT

| Category* | Citation of document, with indication, where appropriate, of the relevant passages | Relevant to claim No. |
|---|---|---|
| X | CN 111835476 A (HUAWEI TECHNOLOGIES CO., LTD.) 27 October 2020 (2020-10-27) description paragraphs 0135-0287, 0420-0431, figures 6, 9, 17 | 1-26 |
| X | CN 111083732 A (ZTE CORPORATION) 28 April 2020 (2020-04-28) description, paragraphs 0034-0172, and figure 2 | 1-26 |
| X | CN 110535583 A (ZTE CORPORATION) 03 December 2019 (2019-12-03) description, paragraphs 0071-0275, and figures 1-2 | 1-26 |
| X | CN 107889230 A (ZTE CORPORATION) 06 April 2018 (2018-04-06) description paragraphs 0070-0087, 0091-0107, figures 4, 6 | 1-26 |
| X | US 2018027559 A1 (QUALCOMM INC.) 25 January 2018 (2018-01-25) claims 1-10, description paragraphs 0099-0109, figure 10 | 1-26 |
| X | CN 101420292 A (DATANG MOBILE COMMUNICATIONS EQUIPMENT CO., LTD.) 29 April 2009 (2009-04-29) description page 5 paragraph 2 from the bottom - page 13 paragraph 1 | 1-26 |
| A | CN 109951262 A (HUAWEI TECHNOLOGIES CO., LTD.) 28 June 2019 (2019-06-28) entire document | 1-26 |

☑ Further documents are listed in the continuation of Box C. ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **25 September 2021** | **13 October 2021** |

| Name and mailing address of the ISA/CN | Authorized officer |
|---|---|
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**

| | International application No. |
|---|---|
| | **PCT/CN2021/072327** |

**C.     DOCUMENTS CONSIDERED TO BE RELEVANT**

| Category* | Citation of document, with indication, where appropriate, of the relevant passages | Relevant to claim No. |
|---|---|---|
| A | CATT. "Discussion on PUSCH resource collision and DL SPS enhancement" *3GPP TSG RAN WG1 Meeting #98bis R1-1910347*, 20 October 2019 (2019-10-20), entire document | 1-26 |

Form PCT/ISA/210 (second sheet) (January 2015)

INTERNATIONAL SEARCH REPORT
Information on patent family members

International application No.

**PCT/CN2021/072327**

| Patent document cited in search report | | | Publication date (day/month/year) | Patent family member(s) | | | Publication date (day/month/year) |
|---|---|---|---|---|---|---|---|
| CN | 111835476 | A | 27 October 2020 | WO | 2020215996 | A1 | 29 October 2020 |
| CN | 111083732 | A | 28 April 2020 | WO | 2021031796 | A1 | 25 February 2021 |
| CN | 110535583 | A | 03 December 2019 | WO | 2020030168 | A1 | 13 February 2020 |
| | | | | KR | 20210050528 | A | 07 May 2021 |
| CN | 107889230 | A | 06 April 2018 | WO | 2018059602 | A1 | 05 April 2018 |
| US | 2018027559 | A1 | 25 January 2018 | WO | 2018017603 | A1 | 25 January 2018 |
| | | | | US | 10231239 | B2 | 12 March 2019 |
| CN | 101420292 | A | 29 April 2009 | CN | 101420292 | B | 15 May 2013 |
| CN | 109951262 | A | 28 June 2019 | | None | | |

Form PCT/ISA/210 (patent family annex) (January 2015)